# EUROPEAN PATENT SPECIFICATION

(11) **EP 3 947 095 B1**
(45) Date of publication and mention of the grant of the patent: **31.12.2025**
(21) Application number: 20785355.7
(22) Date of filing: 27.03.2020
(51) Int. Cl.: B60W 60/00, B60W 40/02, B60W 40/08, G05D 1/00, B60W 50/00, B60W 50/14, B60W 30/182, G08G 1/16, G08G 1/01

(54) **AUTONOMOUS VEHICLE SYSTEM**
AUTONOMES FAHRZEUGSYSTEM
SYSTÈME DE VÉHICULE AUTONOME

(30) Priority: 29.03.2019 US 201962826955 P
(43) Date of publication of application: 09.02.2022
(60) Divisional application: 25215656.7
(73) Proprietor: INTEL Corporation, Santa Clara, CA 95054 (US)
(72) Inventor: MOUSTAFA, Hassnaa, Portland, Oregon 97229 (US); KAVULYA, Soila P., Hillsboro, Oregon 97123 (US); WOUHAYBI, Rita H., Portland, Oregon 97229 (US); ALVAREZ, Ignacio J., Portland, Oregon 97229 (US); ADENWALA, Fatema S., Hillsboro, California 97124 (US); ZAGE, David J., Livermore, California 94551 (US); SANKARAN KUTTY, Jithin Sankar, Fremont, California 94539 (US); LOPEZ-ARAIZA, Christopher E., San Jose, California 95134 (US); CHEN, Li, Hillsboro, Oregon 97124 (US)
(74) Representative: 2SPL Patentanwälte PartG mbB
(86) International application number: PCT/US2020/025474
(87) International publication number: WO 2020/205629

(56) References cited:
- WO-A1-2018/141415
- DE-A1- 102016 225 606
- KR-A- 20150 133 291
- US-A1- 2017 349 186
- US-A1- 2017 349 186
- US-A1- 2018 095 457
- US-A1- 2018 196 427
- US-A1- 2018 196 427
- US-A1- 2018 231 982
- US-B1- 10 241 509
- US-B1- 9 823 657

## Description

### TECHNICAL FIELD

The present technology relates to a method and an apparatus comprising means for performing the method as set out in the appended set of claims.

### BACKGROUND

Some vehicles are configured to operate in an autonomous mode in which the vehicle navigates through an environment with little or no input from a driver. Such a vehicle typically includes one or more sensors that are configured to sense information about the environment. The vehicle may use the sensed information to navigate through the environment. For example, if the sensors sense that the vehicle is approaching an obstacle, the vehicle may navigate around the obstacle.

Patent literature US 2018/231982 A1 describes a moving object movement system which includes a moving object that moves in accordance with any one method of autonomous movement or remote controlled movement, a control server that is connected to the moving object via wireless communication, and a traveling path deciding unit that calculates an unable-to-move risk indicating a possibility that movement is unable to be performed in accordance with any one method of the autonomous movement or the remote controlled movement on the basis of map information including movement paths of the moving object, autonomous movement difficulty level information indicating a difficulty level of the autonomous movement by the moving object, and communication quality information indicating a communication quality necessary for the moving object to perform the remote controlled movement, and decides a movement path in which the calculated unable-to-move risk is smallest among the movement paths.

Patent literature US 2018/095457 A1 describes a control method for an autonomous vehicle and a server implementing the control method, the method including: acquiring, by a server, information related to the vehicle; determining, by the server, based on the acquired information, whether the vehicle needs to be remotely controlled; and based on the determination that the vehicle needs to be remotely controlled, remotely controlling the autonomous vehicle by the server or a nearby object.

Patent literature DE 10 2016 225606 A1 describes a method for operating a driver assistance device of a vehicle, wherein initially the vehicle is operated in a piloted or fully autonomous driving mode by the driver assistance device.

Patent literature WO2018141415A1 discloses a method for enabling remote control of vehicle with autonomous propulsion capability by vehicle data provider which involves detecting need for manual assistance, followed by obtaining stream of vehicle data, and modifying vehicle data.

### Summary of the invention

The present invention is defined in the appended independent claims.

Advantageous features are set out in the appended dependent claims.

### BRIEF DESCRIPTION OF THE DRAWINGS

FIG. 1 is a simplified illustration showing an example autonomous driving environment in accordance with certain embodiments.
FIG. 2 is a simplified block diagram illustrating an example implementation of a vehicle (and corresponding in-vehicle computing system) equipped with autonomous driving functionality in accordance with certain embodiments.
FIG. 3 illustrates an example portion of a neural network in accordance with certain embodiments in accordance with certain embodiments.
FIG. 4 is a simplified block diagram illustrating example levels of autonomous driving, which may be supported in various vehicles (e.g., by their corresponding in-vehicle computing systems in accordance with certain embodiments.
FIG. 5 is a simplified block diagram illustrating an example autonomous driving flow which may be implemented in some autonomous driving systems in accordance with certain embodiments.
FIG. 6 is a simplified block diagram illustrating an autonomous vehicle and a variety of sensors in accordance with certain embodiments.
FIG. 7 is a simplified block diagram illustrating communication between systems during the delivery of an example remote valet service in accordance with certain embodiments.
FIG. 8 is a simplified block diagram illustrating cooperative reporting of information relating to pull-over event risk and road condition warnings which may be leveraged to launch remote valet services in accordance with certain embodiments.
FIG. 9 is a simplified block diagram illustrating example autonomous vehicle features including vehicle sensors, an artificial intelligence/machine learning-based autonomous driving stack, and logic to support triggering and generating handoff requests to systems capable of providing a remote valet service in accordance with certain embodiments.
FIG. 10 illustrates example safety model driving phases in accordance with certain embodiments.
FIG. 11 is a diagram of a system for modifying driver inputs to ensure safety model-compliant accelerations in accordance with certain embodiments
FIG. 12 depicts a training phase for control-to-acceleration converter in accordance with certain embodiments.
FIG. 13 depicts an inference phase of a control-to-acceleration converter in accordance with certain embodiments.
FIG. 14 depicts a flow for providing acceptable control signals to a vehicle actuation system in accordance with certain embodiments.
FIG. 15 depicts a training phase to build a context model in accordance with certain embodiments.
FIG. 16 depicts a training phase to build a signal quality metric model in accordance with certain embodiments.
FIG. 17 depicts a training phase to build a handoff readiness model in accordance with certain embodiments.
FIG. 18 depicts an inference phase to determine a handoff decision based on sensor data in accordance with certain embodiments.
FIG. 19 depicts a flow for determining whether to handoff control of a vehicle in accordance with certain embodiments.
FIG. 20 depicts a training phase for a driver state model in accordance with certain embodiments.
FIG. 21 depicts a training phase for a handoff decision model in accordance with certain embodiments.
FIG. 22 depicts an inference phase for determining a handoff decision in accordance with certain embodiments.
FIG. 23 depicts a flow for generating a handoff decision in accordance with certain embodiments.
FIG. 24 illustrates a high-level block diagram of a framework for control of an autonomous vehicle in accordance with certain embodiments.
FIG. 25 is a diagram of an example process of controlling takeovers of an autonomous vehicle in accordance with certain embodiments.
FIG. 26 a diagram of an additional example process of controlling takeovers of an autonomous vehicle in accordance with certain embodiments.
FIG. 27 is a diagram of an example perception, plan, and act autonomous driving pipeline 2800 for an autonomous vehicle in accordance with certain embodiments.
FIG. 28 is a diagram of an example process of controlling takeover requests by human drivers of an autonomous vehicle in accordance with certain embodiments.
FIG. 29 depicts various levels of automation and associated amounts of participation required from a human driver in accordance with certain embodiments.
FIG. 30 illustrates a comprehensive cognitive supervisory system in accordance with certain embodiments.
FIG. 31 illustrates example autonomous level transitions in accordance with certain embodiments.
FIG. 32 illustrates an example of an architectural flow of data of an autonomous vehicle operating at an L4 autonomy level in accordance with certain embodiments.
FIG. 33 illustrates an example of a video signal to the driver in accordance with certain embodiments.
FIG. 34 illustrates of a flow of an example autonomous vehicle handoff situation in accordance with certain embodiments.
FIG. 35 illustrates an example of a flow for handing off control of an autonomous vehicle to a human driver in accordance with certain embodiments.
FIG. 36 illustrates an example system 3600 for the handoff of an autonomous vehicle to a human driver in accordance with certain embodiments.
FIG. 37 illustrates an example route that a vehicle may take to get from point A to point B in accordance with certain embodiments.
FIG. 38 illustrates a flow that may be performed at least in part by a handoff handling module in accordance with certain embodiments.
FIGS. 39-40 are block diagrams of exemplary computer architectures that may be used in accordance with embodiments disclosed herein.

### DESCRIPTION OF EXAMPLE EMBODIMENTS

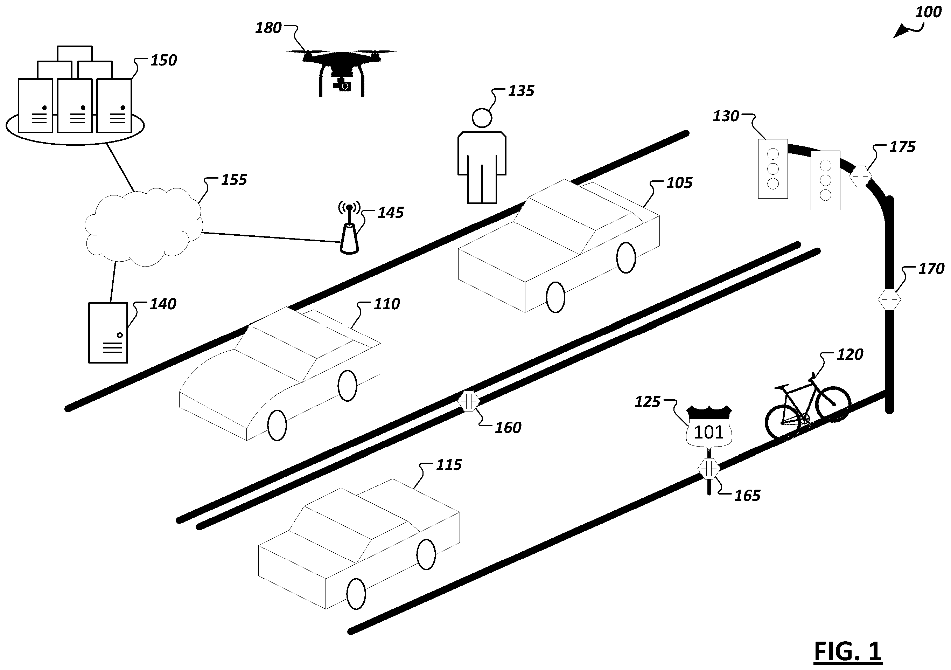

FIG. 1 is a simplified illustration 100 showing an example autonomous driving environment. Vehicles (e.g., 105, 110, 115, etc.) may be provided with varying levels of autonomous driving capabilities facilitated through in-vehicle computing systems with logic implemented in hardware, firmware, and/or software to enable respective autonomous driving stacks. Such autonomous driving stacks may allow vehicles to self-control or provide driver assistance to detect roadways, navigate from one point to another, detect other vehicles and road actors (e.g., pedestrians (e.g., 135), bicyclists, etc.), detect obstacles and hazards (e.g., 120), and road conditions (e.g., traffic, road conditions, weather conditions, etc.), and adjust control and guidance of the vehicle accordingly. Within the present disclosure, a "vehicle" may be a manned vehicle designed to carry one or more human passengers (e.g., cars, trucks, vans, buses, motorcycles, trains, aerial transport vehicles, ambulance, etc.), an unmanned vehicle to drive with or without human passengers (e.g., freight vehicles (e.g., trucks, rail-based vehicles, etc.)), vehicles for transporting non-human passengers (e.g., livestock transports, etc.), and/or drones (e.g., land-based or aerial drones or robots, which are to move within a driving environment (e.g., to collect information concerning the driving environment, provide assistance with the automation of other vehicles, perform road maintenance tasks, provide industrial tasks, provide public safety and emergency response tasks, etc.)). In some implementations, a vehicle may be a system configured to operate alternatively in multiple different modes (e.g., passenger vehicle, unmanned vehicle, or drone vehicle), among other examples. A vehicle may "drive" within an environment to move the vehicle along the ground (e.g., paved or unpaved road, path, or landscape), through water, or through the air. In this sense, a "road" or "roadway", depending on the implementation, may embody an outdoor or indoor ground-based path, a water channel, or a defined aerial boundary. Accordingly, it should be appreciated that the following disclosure and related embodiments may apply equally to various contexts and vehicle implementation examples.

In some implementations, vehicles (e.g., 105, 110, 115) within the environment may be "connected" in that the in-vehicle computing systems include communication modules to support wireless communication using one or more technologies (e.g., IEEE 802.11 communications (e.g., WiFi), cellular data networks (e.g., 3rd Generation Partnership Project (3GPP) networks, Global System for Mobile Communication (GSM), general packet radio service, code division multiple access (CDMA), etc.), 4G, 5G, 6G, Bluetooth, millimeter wave (mmWave), ZigBee, Z-Wave, etc.), allowing the in-vehicle computing systems to connect to and communicate with other computing systems, such as the in-vehicle computing systems of other vehicles, roadside units, cloud-based computing systems, or other supporting infrastructure. For instance, in some implementations, vehicles (e.g., 105, 110, 115) may communicate with computing systems providing sensors, data, and services in support of the vehicles' own autonomous driving capabilities. For instance, as shown in the illustrative example of FIG. 1, supporting drones 180 (e.g., ground-based and/or aerial), roadside computing devices (e.g., 140), various external (to the vehicle, or "extraneous") sensor devices (e.g., 160, 165, 170, 175, etc.), and other devices may be provided as autonomous driving infrastructure separate from the computing systems, sensors, and logic implemented on the vehicles (e.g., 105, 110, 115) to support and improve autonomous driving results provided through the vehicles, among other examples. Vehicles may also communicate with other connected vehicles over wireless communication channels to share data and coordinate movement within an autonomous driving environment, among other example communications.

As illustrated in the example of FIG. 1, autonomous driving infrastructure may incorporate a variety of different systems. Such systems may vary depending on the location, with more developed roadways (e.g., roadways controlled by specific municipalities or toll authorities, roadways in urban areas, sections of roadways known to be problematic for autonomous vehicles, etc.) having a greater number or more advanced supporting infrastructure devices than other sections of roadway, etc. For instance, supplemental sensor devices (e.g., 160, 165, 170, 175) may be provided, which include sensors for observing portions of roadways and vehicles moving within the environment and generating corresponding data describing or embodying the observations of the sensors. As examples, sensor devices may be embedded within the roadway itself (e.g., sensor 160), on roadside or overhead signage (e.g., sensor 165 on sign 125), sensors (e.g., 170, 175) attached to electronic roadside equipment or fixtures (e.g., traffic lights (e.g., 130), electronic road signs, electronic billboards, etc.), dedicated road side units (e.g., 140), among other examples. Sensor devices may also include communication capabilities to communicate their collected sensor data directly to nearby connected vehicles or to fog or cloud-based computing systems (e.g., 140, 150). Vehicles may obtain sensor data collected by external sensor devices (e.g., 160, 165, 170, 175, 180), or data embodying observations or recommendations generated by other systems (e.g., 140, 150) based on sensor data from these sensor devices (e.g., 160, 165, 170, 175, 180), and use this data in sensor fusion, inference, path planning, and other tasks performed by the in-vehicle autonomous driving system. In some cases, such extraneous sensors and sensor data may, in actuality, be within the vehicle, such as in the form of an after-market sensor attached to the vehicle, a personal computing device (e.g., smartphone, wearable, etc.) carried or worn by passengers of the vehicle, etc. Other road actors, including pedestrians, bicycles, drones, unmanned aerial vehicles, robots, electronic scooters, etc., may also be provided with or carry sensors to generate sensor data describing an autonomous driving environment, which may be used and consumed by autonomous vehicles, cloud- or fog-based support systems (e.g., 140, 150), other sensor devices (e.g., 160, 165, 170, 175, 180), among other examples.

As autonomous vehicle systems may possess varying levels of functionality and sophistication, support infrastructure may be called upon to supplement not only the sensing capabilities of some vehicles, but also the computer and machine learning functionality enabling autonomous driving functionality of some vehicles. For instance, compute resources and autonomous driving logic used to facilitate machine learning model training and use of such machine learning models may be provided on the in-vehicle computing systems entirely or partially on both the in-vehicle systems and some external systems (e.g., 140, 150). For instance, a connected vehicle may communicate with road-side units, edge systems, or cloud-based devices (e.g., 140) local to a particular segment of roadway, with such devices (e.g., 140) capable of providing data (e.g., sensor data aggregated from local sensors (e.g., 160, 165, 170, 175, 180) or data reported from sensors of other vehicles), performing computations (as a service) on data provided by a vehicle to supplement the capabilities native to the vehicle, and/or push information to passing or approaching vehicles (e.g., based on sensor data collected at the device 140 or from nearby sensor devices, etc.). A connected vehicle (e.g., 105, 110, 115) may also or instead communicate with cloud-based computing systems (e.g., 150), which may provide similar memory, sensing, and computational resources to enhance those available at the vehicle. For instance, a cloud-based system (e.g., 150) may collect sensor data from a variety of devices in one or more locations and utilize this data to build and/or train machine-learning models which may be used at the cloud based system (to provide results to various vehicles (e.g., 105, 110, 115) in communication with the cloud-based system 150, or to push to vehicles for use by their in-vehicle systems, among other example implementations. Access points (e.g., 145), such as cell-phone towers, road-side units, network access points mounted to various roadway infrastructure, access points provided by neighboring vehicles or buildings, and other access points, may be provided within an environment and used to facilitate communication over one or more local or wide area networks (e.g., 155) between cloud-based systems (e.g., 150) and various vehicles (e.g., 105, 110, 115). Through such infrastructure and computing systems, it should be appreciated that the examples, features, and solutions discussed herein may be performed entirely by one or more of such in-vehicle computing systems, fog-based or edge computing devices, or cloud-based computing systems, or by combinations of the foregoing through communication and cooperation between the systems.

In general, "servers," "clients," "computing devices," "network elements," "hosts," "platforms", "sensor devices," "edge device," "autonomous driving systems", "autonomous vehicles", "fog-based system", "cloud-based system", and "systems" generally, etc. discussed herein can include electronic computing devices operable to receive, transmit, process, store, or manage data and information associated with an autonomous driving environment. As used in this document, the term "computer," "processor," "processor device," or "processing device" is intended to encompass any suitable processing apparatus, including central processing units (CPUs), graphical processing units (GPUs), application specific integrated circuits (ASICs), field programmable gate arrays (FPGAs), digital signal processors (DSPs), tensor processors and other matrix arithmetic processors, among other examples. For example, elements shown as single devices within the environment may be implemented using a plurality of computing devices and processors, such as server pools including multiple server computers. Further, any, all, or some of the computing devices may be adapted to execute any operating system, including Linux, UNIX, Microsoft Windows, Apple OS, Apple iOS, Google Android, Windows Server, etc., as well as virtual machines adapted to virtualize execution of a particular operating system, including customized and proprietary operating systems.

Any of the flows, methods, processes (or portions thereof) or functionality of any of the various components described below or illustrated in the figures may be performed by any suitable computing logic, such as one or more modules, engines, blocks, units, models, systems, or other suitable computing logic. Reference herein to a "module", "engine", "block", "unit", "model", "system" or "logic" may refer to hardware, firmware, software and/or combinations of each to perform one or more functions. As an example, a module, engine, block, unit, model, system, or logic may include one or more hardware components, such as a micro-controller or processor, associated with a non-transitory medium to store code adapted to be executed by the micro-controller or processor. Therefore, reference to a module, engine, block, unit, model, system, or logic, in one embodiment, may refers to hardware, which is specifically configured to recognize and/or execute the code to be held on a non-transitory medium. Furthermore, in another embodiment, use of module, engine, block, unit, model, system, or logic refers to the non-transitory medium including the code, which is specifically adapted to be executed by the microcontroller or processor to perform predetermined operations. And as can be inferred, in yet another embodiment, a module, engine, block, unit, model, system, or logic may refer to the combination of the hardware and the non-transitory medium. In various embodiments, a module, engine, block, unit, model, system, or logic may include a microprocessor or other processing element operable to execute software instructions, discrete logic such as an application specific integrated circuit (ASIC), a programmed logic device such as a field programmable gate array (FPGA), a memory device containing instructions, combinations of logic devices (e.g., as would be found on a printed circuit board), or other suitable hardware and/or software. A module, engine, block, unit, model, system, or logic may include one or more gates or other circuit components, which may be implemented by, e.g., transistors. In some embodiments, a module, engine, block, unit, model, system, or logic may be fully embodied as software. Software may be embodied as a software package, code, instructions, instruction sets and/or data recorded on non-transitory computer readable storage medium. Firmware may be embodied as code, instructions or instruction sets and/or data that are hard-coded (e.g., nonvolatile) in memory devices. Furthermore, logic boundaries that are illustrated as separate commonly vary and potentially overlap. For example, a first and second module (or multiple engines, blocks, units, models, systems, or logics) may share hardware, software, firmware, or a combination thereof, while potentially retaining some independent hardware, software, or firmware.

The flows, methods, and processes described below and in the accompanying figures are merely representative of functions that may be performed in particular embodiments. In other embodiments, additional functions may be performed in the flows, methods, and processes. Various embodiments of the present disclosure contemplate any suitable signaling mechanisms for accomplishing the functions described herein. Some of the functions illustrated herein may be repeated, combined, modified, or deleted within the flows, methods, and processes where appropriate. Additionally, functions may be performed in any suitable order within the flows, methods, and processes without departing from the scope of particular embodiments.

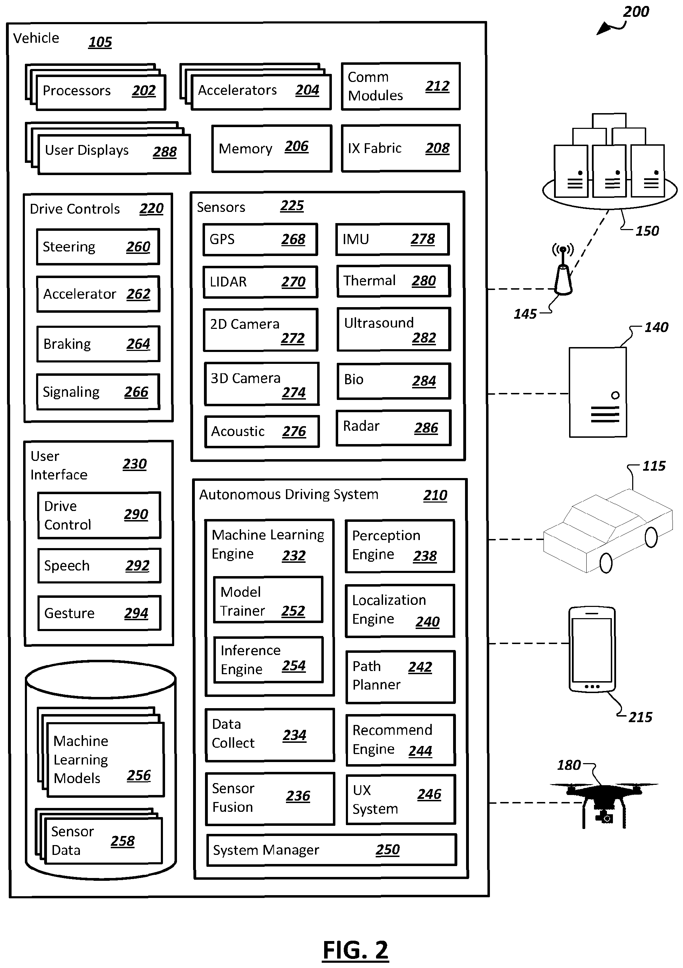

With reference now to FIG. 2, a simplified block diagram 200 is shown illustrating an example implementation of a vehicle (and corresponding in-vehicle computing system) 105 equipped with autonomous driving functionality. In one example, a vehicle 105 may be equipped with one or more processors 202, such as central processing units (CPUs), graphical processing units (GPUs), application specific integrated circuits (ASICs), field programmable gate arrays (FPGAs), digital signal processors (DSPs), tensor processors and other matrix arithmetic processors, among other examples. Such processors 202 may be coupled to or have integrated hardware accelerator devices (e.g., 204), which may be provided with hardware to accelerate certain processing and memory access functions, such as functions relating to machine learning inference or training (including any of the machine learning inference or training described below), processing of particular sensor data (e.g., camera image data, LIDAR point clouds, etc.), performing certain arithmetic functions pertaining to autonomous driving (e.g., matrix arithmetic, convolutional arithmetic, etc.), among other examples. One or more memory elements (e.g., 206) may be provided to store machine-executable instructions implementing all or a portion of any one of the modules or sub-modules of an autonomous driving stack implemented on the vehicle, as well as storing machine learning models (e.g., 256), sensor data (e.g., 258), and other data received, generated, or used in connection with autonomous driving functionality to be performed by the vehicle (or used in connection with the examples and solutions discussed herein). Various communication modules (e.g., 212) may also be provided, implemented in hardware circuitry and/or software to implement communication capabilities used by the vehicle's system to communicate with other extraneous computing systems over one or more network channels employing one or more network communication technologies. These various processors 202, accelerators 204, memory devices 206, and network communication modules 212, may be interconnected on the vehicle system through one or more interconnect fabrics or links (e.g., 208), such as fabrics utilizing technologies such as a Peripheral Component Interconnect Express (PCIe), Ethernet, OpenCAPl^{™}, Gen-Z^{™}, UPI, Universal Serial Bus, (USB), Cache Coherent Interconnect for Accelerators (CClX^{™}), Advanced Micro Device^{™}'s (AMD^{™}) Infinity^{™}, Common Communication Interface (CCI), or Qualcomm^{™}'s Centriq^{™} interconnect, among others.

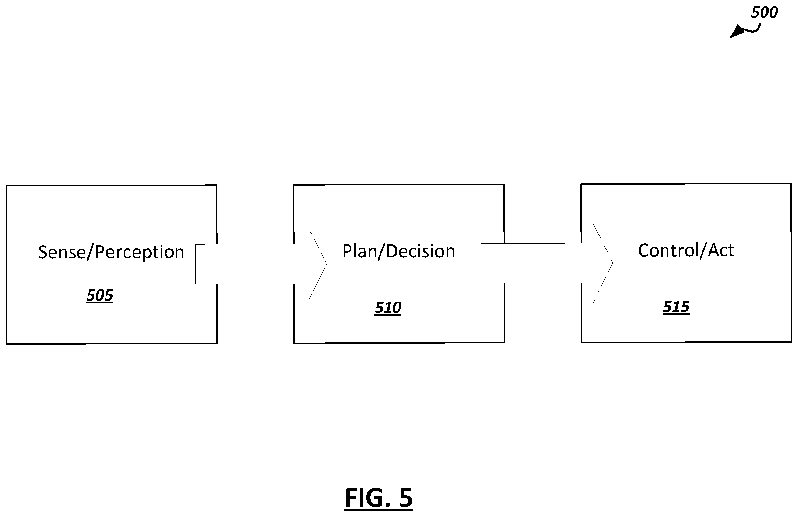

Continuing with the example of FIG. 2, an example vehicle (and corresponding in-vehicle computing system) 105 may include an in-vehicle processing system 210, driving controls (e.g., 220), sensors (e.g., 225), and user/passenger interface(s) (e.g., 230), among other example modules implemented functionality of the autonomous vehicle in hardware and/or software. For instance, an in-vehicle processing system 210, in some implementations, may implement all or a portion of an autonomous driving stack and process flow (e.g., as shown and discussed in the example of FIG. 5). The autonomous driving stack may be implemented in hardware, firmware, or software. A machine learning engine 232 may be provided to utilize various machine learning models (e.g., 256) provided at the vehicle 105 in connection with one or more autonomous functions and features provided and implemented at or for the vehicle, such as discussed in the examples herein. Such machine learning models 256 may include artificial neural network models, convolutional neural networks, decision tree-based models, support vector machines (SVMs), Bayesian models, deep learning models, and other example models. In some implementations, an example machine learning engine 232 may include one or more model trainer engines 252 to participate in training (e.g., initial training, continuous training, etc.) of one or more of the machine learning models 256. One or more inference engines 254 may also be provided to utilize the trained machine learning models 256 to derive various inferences, predictions, classifications, and other results. In some embodiments, the machine learning model training or inference described herein may be performed off-vehicle, such as by computing system 140 or 150.

The machine learning engine(s) 232 provided at the vehicle may be utilized to support and provide results for use by other logical components and modules of the in-vehicle processing system 210 implementing an autonomous driving stack and other autonomous-driving-related features. For instance, a data collection module 234 may be provided with logic to determine sources from which data is to be collected (e.g., for inputs in the training or use of various machine learning models 256 used by the vehicle). For instance, the particular source (e.g., internal sensors (e.g., 225) or extraneous sources (e.g., 115, 140, 150, 180, 215, etc.)) may be selected, as well as the frequency and fidelity at which the data may be sampled is selected. In some cases, such selections and configurations may be made at least partially autonomously by the data collection module 234 using one or more corresponding machine learning models (e.g., to collect data as appropriate given a particular detected scenario).

A sensor fusion module 236 may also be used to govern the use and processing of the various sensor inputs utilized by the machine learning engine 232 and other modules (e.g., 238, 240, 242, 244, 246, etc.) of the in-vehicle processing system. One or more sensor fusion modules (e.g., 236) may be provided, which may derive an output from multiple sensor data sources (e.g., on the vehicle or extraneous to the vehicle). The sources may be homogenous or heterogeneous types of sources (e.g., multiple inputs from multiple instances of a common type of sensor, or from instances of multiple different types of sensors). An example sensor fusion module 236 may apply direct fusion, indirect fusion, among other example sensor fusion techniques. The output of the sensor fusion may, in some cases by fed as an input (along with potentially additional inputs) to another module of the in-vehicle processing system and/or one or more machine learning models in connection with providing autonomous driving functionality or other functionality, such as described in the example solutions discussed herein.

A perception engine 238 may be provided in some examples, which may take as inputs various sensor data (e.g., 258) including data, in some instances, from extraneous sources and/or sensor fusion module 236 to perform object recognition and/or tracking of detected objects, among other example functions corresponding to autonomous perception of the environment encountered (or to be encountered) by the vehicle 105. Perception engine 238 may perform object recognition from sensor data inputs using deep learning, such as through one or more convolutional neural networks and other machine learning models 256. Object tracking may also be performed to autonomously estimate, from sensor data inputs, whether an object is moving and, if so, along what trajectory. For instance, after a given object is recognized, a perception engine 238 may detect how the given object moves in relation to the vehicle. Such functionality may be used, for instance, to detect objects such as other vehicles, pedestrians, wildlife, cyclists, etc. moving within an environment, which may affect the path of the vehicle on a roadway, among other example uses.

A localization engine 240 may also be included within an in-vehicle processing system 210 in some implementation. In some cases, localization engine 240 may be implemented as a sub-component of a perception engine 238. The localization engine 240 may also make use of one or more machine learning models 256 and sensor fusion (e.g., of LIDAR and GPS data, etc.) to determine a high confidence location of the vehicle and the space it occupies within a given physical space (or "environment").

A vehicle 105 may further include a path planner 242, which may make use of the results of various other modules, such as data collection 234, sensor fusion 236, perception engine 238, and localization engine (e.g., 240) among others (e.g., recommendation engine 244) to determine a path plan and/or action plan for the vehicle, which may be used by drive controls (e.g., 220) to control the driving of the vehicle 105 within an environment. For instance, a path planner 242 may utilize these inputs and one or more machine learning models to determine probabilities of various events within a driving environment to determine effective real-time plans to act within the environment.

In some implementations, the vehicle 105 may include one or more recommendation engines 244 to generate various recommendations from sensor data generated by the vehicle's 105 own sensors (e.g., 225) as well as sensor data from extraneous sensors (e.g., on sensor devices 115, 180, 215, etc.). Some recommendations may be determined by the recommendation engine 244, which may be provided as inputs to other components of the vehicle's autonomous driving stack to influence determinations that are made by these components. For instance, a recommendation may be determined, which, when considered by a path planner 242, causes the path planner 242 to deviate from decisions or plans it would ordinarily otherwise determine, but for the recommendation. Recommendations may also be generated by recommendation engines (e.g., 244) based on considerations of passenger comfort and experience. In some cases, interior features within the vehicle may be manipulated predictively and autonomously based on these recommendations (which are determined from sensor data (e.g., 258) captured by the vehicle's sensors and/or extraneous sensors, etc.

As introduced above, some vehicle implementations may include user/passenger experience engines (e.g., 246), which may utilize sensor data and outputs of other modules within the vehicle's autonomous driving stack to control a control unit of the vehicle in order to change driving maneuvers and effect changes to the vehicle's cabin environment to enhance the experience of passengers within the vehicle based on the observations captured by the sensor data (e.g., 258). In some instances, aspects of user interfaces (e.g., 230) provided on the vehicle to enable users to interact with the vehicle and its autonomous driving system may be enhanced. In some cases, informational presentations may be generated and provided through user displays (e.g., audio, visual, and/or tactile presentations) to help affect and improve passenger experiences within a vehicle (e.g., 105) among other example uses.

In some cases, a system manager 250 may also be provided, which monitors information collected by various sensors on the vehicle to detect issues relating to the performance of a vehicle's autonomous driving system. For instance, computational errors, sensor outages and issues, availability and quality of communication channels (e.g., provided through communication modules 212), vehicle system checks (e.g., issues relating to the motor, transmission, battery, cooling system, electrical system, tires, etc.), or other operational events may be detected by the system manager 250. Such issues may be identified in system report data generated by the system manager 250, which may be utilized, in some cases as inputs to machine learning models 256 and related autonomous driving modules (e.g., 232, 234, 236, 238, 240, 242, 244, 246, etc.) to enable vehicle system health and issues to also be considered along with other information collected in sensor data 258 in the autonomous driving functionality of the vehicle 105.

In some implementations, an autonomous driving stack of a vehicle 105 may be coupled with drive controls 220 to affect how the vehicle is driven, including steering controls (e.g., 260), accelerator/throttle controls (e.g., 262), braking controls (e.g., 264), signaling controls (e.g., 266), among other examples. In some cases, a vehicle may also be controlled wholly or partially based on user inputs. For instance, user interfaces (e.g., 230), may include driving controls (e.g., a physical or virtual steering wheel, accelerator, brakes, clutch, etc.) to allow a human driver to take control from the autonomous driving system (e.g., in a handover or following a driver assist action). Other sensors may be utilized to accept user/passenger inputs, such as speech detection 292, gesture detection cameras 294, and other examples. User interfaces (e.g., 230) may capture the desires and intentions of the passenger-users and the autonomous driving stack of the vehicle 105 may consider these as additional inputs in controlling the driving of the vehicle (e.g., drive controls 220). In some implementations, drive controls may be governed by external computing systems, such as in cases where a passenger utilizes an external device (e.g., a smartphone or tablet) to provide driving direction or control, or in cases of a remote valet service, where an external driver or system takes over control of the vehicle (e.g., based on an emergency event), among other example implementations.

As discussed above, the autonomous driving stack of a vehicle may utilize a variety of sensor data (e.g., 258) generated by various sensors provided on and external to the vehicle. As an example, a vehicle 105 may possess an array of sensors 225 to collect various information relating to the exterior of the vehicle and the surrounding environment, vehicle system status, conditions within the vehicle, and other information usable by the modules of the vehicle's processing system 210. For instance, such sensors 225 may include global positioning (GPS) sensors 268, light detection and ranging (LIDAR) sensors 270, two-dimensional (2D) cameras 272, three-dimensional (3D) or stereo cameras 274, acoustic sensors 276, inertial measurement unit (IMU) sensors 278, thermal sensors 280, ultrasound sensors 282, bio sensors 284 (e.g., facial recognition, voice recognition, heart rate sensors, body temperature sensors, emotion detection sensors, etc.), radar sensors 286, weather sensors (not shown), among other example sensors. Such sensors may be utilized in combination to determine various attributes and conditions of the environment in which the vehicle operates (e.g., weather, obstacles, traffic, road conditions, etc.), the passengers within the vehicle (e.g., passenger or driver awareness or alertness, passenger comfort or mood, passenger health or physiological conditions, etc.), other contents of the vehicle (e.g., packages, livestock, freight, luggage, etc.), subsystems of the vehicle, among other examples. Sensor data 258 may also (or instead) be generated by sensors that are not integrally coupled to the vehicle, including sensors on other vehicles (e.g., 115) (which may be communicated to the vehicle 105 through vehicle-to-vehicle communications or other techniques), sensors on ground-based or aerial drones 180, sensors of user devices 215 (e.g., a smartphone or wearable) carried by human users inside or outside the vehicle 105, and sensors mounted or provided with other roadside elements, such as a roadside unit (e.g., 140), road sign, traffic light, streetlight, etc. Sensor data from such extraneous sensor devices may be provided directly from the sensor devices to the vehicle or may be provided through data aggregation devices or as results generated based on these sensors by other computing systems (e.g., 140, 150), among other example implementations.

In some implementations, an autonomous vehicle system 105 may interface with and leverage information and services provided by other computing systems to enhance, enable, or otherwise support the autonomous driving functionality of the device 105. In some instances, some autonomous driving features (including some of the example solutions discussed herein) may be enabled through services, computing logic, machine learning models, data, or other resources of computing systems external to a vehicle. When such external systems are unavailable to a vehicle, it may be that these features are at least temporarily disabled. For instance, external computing systems may be provided and leveraged, which are hosted in road-side units or fog-based edge devices (e.g., 140), other (e.g., higher level) vehicles (e.g., 115), and cloud based systems 150 (e.g., accessible through various network access points (e.g., 145)). A roadside unit 140 or cloud-based system 150 (or other cooperating system, with which a vehicle (e.g., 105) interacts may include all or a portion of the logic illustrated as belonging to an example in-vehicle processing system (e.g., 210), along with potentially additional functionality and logic. For instance, a cloud based computing system, road side unit 140, or other computing system may include a machine learning engine supporting either or both model training and inference engine logic. For instance, such external systems may possess higher-end computing resources and more developed or up-to-date machine learning models, allowing these services to provide superior results to what would be generated natively on a vehicle's processing system 210. For instance, an in-vehicle processing system 210 may rely on the machine learning training, machine learning inference, and/or machine learning models provided through a cloud-based service for certain tasks and handling certain scenarios. Indeed, it should be appreciated that one or more of the modules discussed and illustrated as belonging to vehicle 105 may, in some implementations, be alternatively or redundantly provided within a cloud-based, fog-based, or other computing system supporting an autonomous driving environment.

Various embodiments herein may utilize one or more machine learning models to perform functions of the autonomous vehicle stack (or other functions described herein). A machine learning model may be executed by a computing system to progressively improve performance of a specific task. In some embodiments, parameters of a machine learning model may be adjusted during a training phase based on training data. A trained machine learning model may then be used during an inference phase to make predictions or decisions based on input data.

The machine learning models described herein may take any suitable form or utilize any suitable techniques. For example, any of the machine learning models may utilize supervised learning, semi-supervised learning, unsupervised learning, or reinforcement learning techniques.

In supervised learning, the model may be built using a training set of data that contains both the inputs and corresponding desired outputs. Each training instance may include one or more inputs and a desired output. Training may include iterating through training instances and using an objective function to teach the model to predict the output for new inputs. In semi supervised learning, a portion of the inputs in the training set may be missing the desired outputs.

In unsupervised learning, the model may be built from a set of data which contains only inputs and no desired outputs. The unsupervised model may be used to find structure in the data (e.g., grouping or clustering of data points) by discovering patterns in the data. Techniques that may be implemented in an unsupervised learning model include, e.g., self organizing maps, nearest-neighbor mapping, k-means clustering, and singular value decomposition.

Reinforcement learning models may be given positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various embodiments described herein may utilize one or more classification models. In a classification model, the outputs may be restricted to a limited set of values. The classification model may output a class for an input set of one or more input values. References herein to classification models may contemplate a model that implements, e.g., any one or more of the following techniques: linear classifiers (e.g., logistic regression or naïve Bayes classifier), support vector machines, decision trees, boosted trees, random forest, neural networks, or nearest neighbor.

Various embodiments described herein may utilize one or more regression models. A regression model may output a numerical value from a continuous range based on an input set of one or more values. References herein to regression models may contemplate a model that implements, e.g., any one or more of the following techniques (or other suitable techniques): linear regression, decision trees, random forest, or neural networks.

In various embodiments, any of the machine learning models discussed herein may utilize one or more neural networks. A neural network may include a group of neural units loosely modeled after the structure of a biological brain which includes large clusters of neurons connected by synapses. In a neural network, neural units are connected to other neural units via links which may be excitatory or inhibitory in their effect on the activation state of connected neural units. A neural unit may perform a function utilizing the values of its inputs to update a membrane potential of the neural unit. A neural unit may propagate a spike signal to connected neural units when a threshold associated with the neural unit is surpassed. A neural network may be trained or otherwise adapted to perform various data processing tasks (including tasks performed by the autonomous vehicle stack), such as computer vision tasks, speech recognition tasks, or other suitable computing tasks.

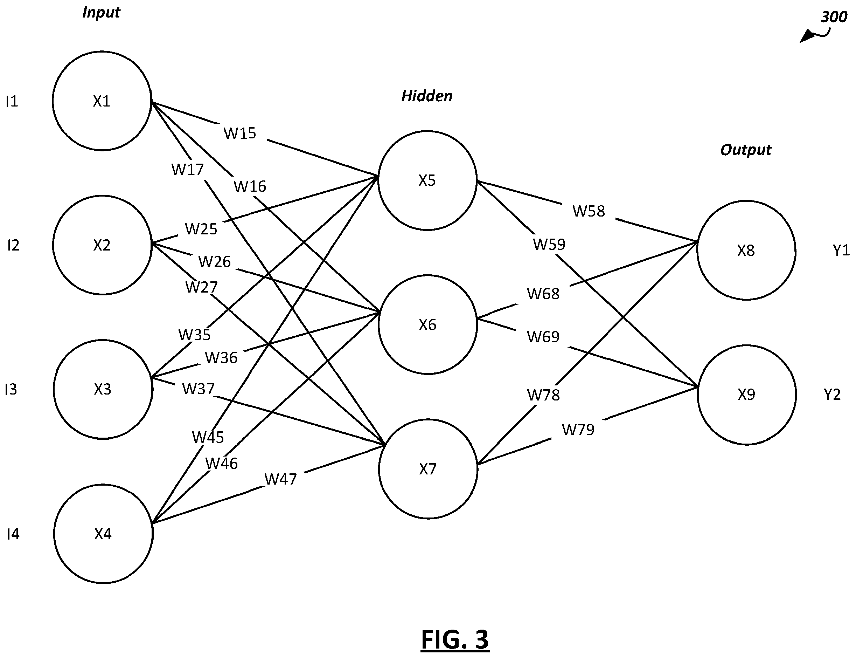

FIG. 3 illustrates an example portion of a neural network 300 in accordance with certain embodiments. The neural network 300 includes neural units X1-X9. Neural units X1-X4 are input neural units that respectively receive primary inputs l1 l4 (which may be held constant while the neural network 300 processes an output). Any suitable primary inputs may be used. As one example, when neural network 300 performs image processing, a primary input value may be the value of a pixel from an image (and the value of the primary input may stay constant while the image is processed). As another example, when neural network 300 performs speech processing the primary input value applied to a particular input neural unit may change over time based on changes to the input speech.

While a specific topology and connectivity scheme is shown in FIG. 3, the teachings of the present disclosure may be used in neural networks having any suitable topology and/or connectivity. For example, a neural network may be a feedforward neural network, a recurrent network, or other neural network with any suitable connectivity between neural units. As another example, although the neural network is depicted as having an input layer, a hidden layer, and an output layer, a neural network may have any suitable layers arranged in any suitable fashion In the embodiment depicted, each link between two neural units has a synapse weight indicating the strength of the relationship between the two neural units. The synapse weights are depicted as WXY, where X indicates the pre-synaptic neural unit and Y indicates the post-synaptic neural unit. Links between the neural units may be excitatory or inhibitory in their effect on the activation state of connected neural units. For example, a spike that propagates from X1 to X5 may increase or decrease the membrane potential of X5 depending on the value of W15. In various embodiments, the connections may be directed or undirected.

In various embodiments, during each time-step of a neural network, a neural unit may receive any suitable inputs, such as a bias value or one or more input spikes from one or more of the neural units that are connected via respective synapses to the neural unit (this set of neural units are referred to as fan-in neural units of the neural unit). The bias value applied to a neural unit may be a function of a primary input applied to an input neural unit and/or some other value applied to a neural unit (e.g., a constant value that may be adjusted during training or other operation of the neural network). In various embodiments, each neural unit may be associated with its own bias value or a bias value could be applied to multiple neural units.

The neural unit may perform a function utilizing the values of its inputs and its current membrane potential. For example, the inputs may be added to the current membrane potential of the neural unit to generate an updated membrane potential. As another example, a non-linear function, such as a sigmoid transfer function, may be applied to the inputs and the current membrane potential. Any other suitable function may be used. The neural unit then updates its membrane potential based on the output of the function.

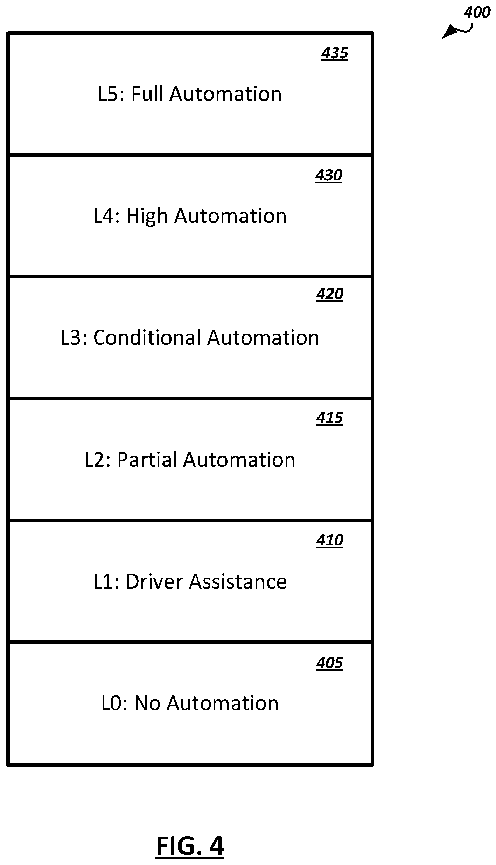

Turning to FIG. 4, a simplified block diagram 400 is shown illustrating example levels of autonomous driving, which may be supported in various vehicles (e.g., by their corresponding in-vehicle computing systems. For instance, a range of levels may be defined (e.g., L0-L5 (405-435)), with level 5 (L5) corresponding to vehicles with the highest level of autonomous driving functionality (e.g., full automation), and level 0 (L0) corresponding the lowest level of autonomous driving functionality (e.g., no automation). For instance, an L5 vehicle (e.g., 435) may possess a fully-autonomous computing system capable of providing autonomous driving performance in every driving scenario equal to or better than would be provided by a human driver, including in extreme road conditions and weather. An L4 vehicle (e.g., 430) may also be considered fully-autonomous and capable of autonomously performing safety-critical driving functions and effectively monitoring roadway conditions throughout an entire trip from a starting location to a destination. L4 vehicles may differ from L5 vehicles, in that an L4's autonomous capabilities are defined within the limits of the vehicle's "operational design domain," which may not include all driving scenarios. L3 vehicles (e.g., 420) provide autonomous driving functionality to completely shift safety-critical functions to the vehicle in a set of specific traffic and environment conditions, but which still expect the engagement and availability of human drivers to handle driving in all other scenarios. Accordingly, L3 vehicles may provide handover protocols to orchestrate the transfer of control from a human driver to the autonomous driving stack and back. L2 vehicles (e.g., 415) provide driver assistance functionality, which allow the driver to occasionally disengage from physically operating the vehicle, such that both the hands and feet of the driver may disengage periodically from the physical controls of the vehicle. L1 vehicles (e.g., 410) provide driver assistance of one or more specific functions (e.g., steering, braking, etc.), but still require constant driver control of most functions of the vehicle. L0 vehicles may be considered not autonomous-the human driver controls all of the driving functionality of the vehicle (although such vehicles may nonetheless participate passively within autonomous driving environments, such as by providing sensor data to higher level vehicles, using sensor data to enhance GPS and infotainment services within the vehicle, etc.). In some implementations, a single vehicle may support operation at multiple autonomous driving levels. For instance, a driver may control and select which supported level of autonomy is used during a given trip (e.g., L4 or a lower level). In other cases, a vehicle may autonomously toggle between levels, for instance, based on conditions affecting the roadway or the vehicle's autonomous driving system. For example, in response to detecting that one or more sensors have been compromised, an L5 or L4 vehicle may shift to a lower mode (e.g., L2 or lower) to involve a human passenger in light of the sensor issue, among other examples.

FIG. 5 is a simplified block diagram 500 illustrating an example autonomous driving flow which may be implemented in some autonomous driving systems. For instance, an autonomous driving flow implemented in an autonomous (or semi-autonomous) vehicle may include a sensing and perception stage 505, a planning and decision stage 510, and a control and action phase 515. During a sensing and perception stage 505 data is generated by various sensors and collected for use by the autonomous driving system. Data collection, in some instances, may include data filtering and receiving sensor from external sources. This stage may also include sensor fusion operations and object recognition and other perception tasks, such as localization, performed using one or more machine learning models. A planning and decision stage 510 may utilize the sensor data and results of various perception operations to make probabilistic predictions of the roadway(s) ahead and determine a real time path plan based on these predictions. A planning and decision stage 510 may additionally include making decisions relating to the path plan in reaction to the detection of obstacles and other events to decide on whether and what action to take to safely navigate the determined path in light of these events. Based on the path plan and decisions of the planning and decision stage 510, a control and action stage 515 may convert these determinations into actions, through actuators to manipulate driving controls including steering, acceleration, and braking, as well as secondary controls, such as turn signals, sensor cleaners, windshield wipers, headlights, etc.

While all of the functionality necessary for a vehicle to function autonomously may be provided natively through in-vehicle computing systems (and updated, when necessary, through periodic communications over wired or wireless home- or garage-based network connections), as wireless communication technologies and speeds advance, some autonomous vehicle implementations may rely more heavily on communications from extraneous data and compute resources (e.g., outside of or not natively integrated with the vehicle). For instance, with the coming of 5G carrier networks and expansion of 4G LTE coverage, implementations of connected autonomous vehicles and vehicle-to-everything (V2X) systems become more immediately achievable. For instance, given the premium on safety, the safety provided natively through autonomous driving systems on vehicles may be supplemented, augmented, and enhanced using systems external to the car to both provide enhanced and crowd-sourced intelligence, as well as to provide redundancy, such as through real-time high reliability applications.

An autonomous vehicle may communicate with and be directed by external computing systems. Such control may include low level of control such as the pushing of over-the-air (OTA) updates, where the vehicle can receive from a remote control/maintenance center (e.g., belonging to vehicle's or autonomous driving system's original equipment manufacturer (OEM) or provider) software and/or firmware updates (e.g., as opposed to taking the vehicle to the maintenance center to do that manually through a technician). In other, higher-control applications, complete control of an autonomous vehicle may be handed over to an external computing system or remote user/virtual driver on a remote computing terminal. For instance, such remote control may be offered as an on-demand "remote valet" service, for instance, when a handover of control from an autonomous vehicle to an in-vehicle passenger is not feasible or undesirable; to assist a vehicle whose autonomous driving system is struggling to accurately, efficiently, or safely navigate a particular portion of a route; or to assist with a pullover event or otherwise immobilized autonomous vehicle.

In some implementations, when an autonomous vehicle encounters a situation or an event, which the autonomous vehicle does not know how to reliably and safety handle, the vehicle may be programmed to initiate a pullover event, where the autonomous driving system directs the vehicle off the roadway (e.g., onto the shoulder of a road, in a parking space, etc.). In the future, when autonomous vehicles are found in greater numbers on roadways, an event that causes one autonomous vehicle to initiate a pullover may similarly affect other neighboring autonomous vehicles, leading to the possibility of multiple pullovers causing additional congestion and roadway gridlock, potentially paralyzing the roadway and autonomous driving on these roadways. While some instances may permit a handover event from the autonomous driving system to a human passenger to navigate the situation causing the pullover, in other implementations, a remote valet service may be triggered (e.g., when the vehicle is passenger-less (e.g., a drone vehicle, a vehicle underway to its passengers using a remote summoning feature, etc.)), among other example situations and implementations.

In accordance with the above, some implementations of an autonomous vehicle may support a remote valet mode, allowing the driving of the vehicle to be handed off to (from the vehicle's autonomous driving system) and controlled by a remote computing system over a network. For instance, remote control of the autonomous vehicle may be triggered on-demand by the autonomous vehicle when it faces a situation that it cannot handle (e.g., sensors not functioning, new road situation unknown for the vehicle, on-board system is incapable of making a decision, etc.). Such remote control may also be provided to the vehicle in emergency situations in which the vehicle requests remote control. A remote valet service may involve a human sitting remotely in a control and maintenance center provided with user endpoint systems operated to remotely control the vehicle. Such a system may be used to mitigate edge-cases where the autonomous vehicle may pull-over or remain immobile due to inability to make a maneuver given lack of actionable information of itself or its environment. Remote valet systems may also be equipped with functionality to also receive information from the autonomous system (e.g., to be provided with a view of the roadway being navigated by the vehicle, provide information concerning system status of the vehicle, passenger status of the vehicle, etc.), but may nonetheless function independent of the autonomous driving system of the vehicle. Such independence may allow the remote valet service itself to function even in the condition of full or substantial sensor failure at the autonomous vehicle, among other example use cases, benefits, and implementations.

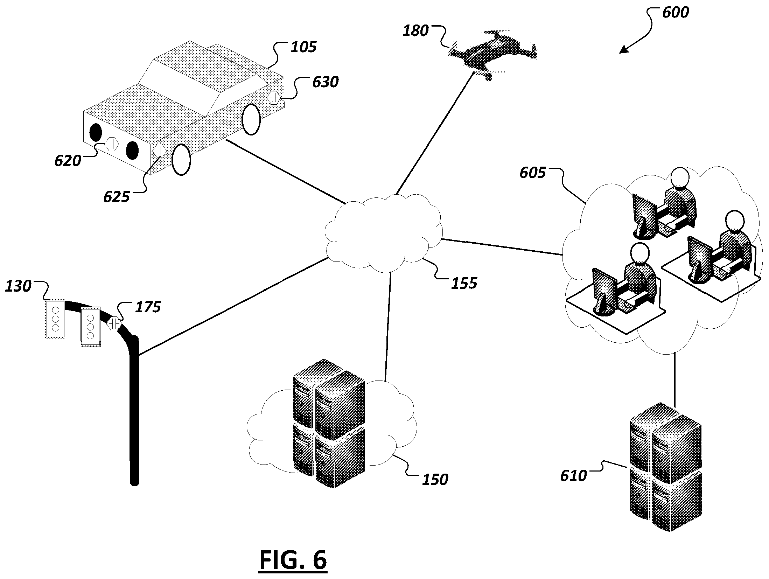

For instance, as shown in the simplified block diagram 600 of FIG. 6, an autonomous vehicle 105 may include a variety of sensors (e.g., 620, 625, 630, etc.) and autonomous driving logic to enable the autonomous vehicle to self-drive within various environments. As introduced above, in some instances, it may be determined, by the autonomous vehicle (or at the request of a passenger within the autonomous vehicle) that the autonomous driving system of the vehicle 105 is unable to reliably, desirably, or safely navigate a portion of a route in a path plan. The autonomous vehicle 105 may include communications capabilities to interface with one or more networks (e.g., 155) and enable data to be exchanged between the vehicle 105 and one or more computing systems implementing a remote valet service 605. The remote valet service 605 may provide multiple user terminal devices, which may allow virtual driver users to observe conditions around the vehicle 105, based on sensor data (e.g., camera views or other sensor information) provided from sensors (e.g., 620, 625, 630, etc.) on the vehicle or sensors (e.g., 175) on other devices (e.g., road side systems (e.g., 130), aerial or ground-based drones (e.g., 180) and even sensors from other neighboring vehicles). The virtual driver may then provide inputs at the remote valet terminal to cause corresponding low latency, high priority data to be communicated (over network 155) to the vehicle 105 to control the steering, acceleration, and braking of the vehicle 105.

In some instances, the vehicle 105 may automatically request intervention and handover of control to a remote valet service 605. In some cases, this request may be reactionary (e.g., in response to a pullover event, sensor outage, or emergency), while in other cases the request may be sent to preemptively cause the remote valet service 605 to take over control of the vehicle (based on a prediction that a pullover event or other difficulty is likely given conditions ahead on a route. The vehicle 105 may leverage sensor data from its own sensors (e.g., 620, 625, 630, etc.), as well as data from other sensors and devices (e.g., 130, 180, etc.), as well as backend autonomous driving support services (e.g., cloud-based services 150), to determine, using one or more machine learning models, that conditions are such that control should be handed over to a remote valet service 605.

In some cases, multiple remote valet services may exist, which may be leveraged by any one of multiple different autonomous vehicles. Indeed, multiple autonomous vehicles may connect to and be controlled by a single remote valet service simultaneously (e.g., with distinct remote drivers guiding each respective vehicle). In some cases, one remote valet service may advertise more availability than another. In some cases, remote valet service quality ratings may be maintained. In still other cases, connection quality and speed information may be maintained to identify real time connectivity conditions of each of multiple different remote valet services. Accordingly, in addition to detecting that a remote handover is needed or likely, an autonomous vehicle (e.g., 105) may also consider such inputs to determine which of potentially many available alternative remote valet services may be used and requested. In some implementations, the selection will be straightforward, such as in instances where the vehicle is associated with a particular one of the remote valet services (e.g., by way of an active subscription for remote valet services from a particular provider, the remote valet service being associated with the manufacturer of the car or its autonomous driving system, among other considerations).

Additionally, remote valet services may also tailor services to individual autonomous vehicles (e.g., 105) and their owners and passengers based on various attributes detected by the remote valet service (e.g., from information included in the request for handover, information gleaned from sensor data received in connection with the handover or remote control, etc.). For instance, tailored driving assistance user interfaces and controlled may be provided and presented to a virtual driver of the remote valet service based on the make and model of the vehicle being controlled, the version and implementation of the vehicle's autonomous driving system, which sensors on the vehicle remain operational and reliable, the specific conditions which precipitated the handoff (e.g., with specialist remote drivers being requested to assist in troubleshooting and navigating the vehicle out of difficult corner cases), among other example considerations.

In some implementations, remote valet services may be provided through a governmental agency as a public service. In other implementations, remote valet services may be provided as private sector commercial ventures. Accordingly, in connection with remote valet services provided in connection with a given vehicle's (e.g., 105) trip, metrics may be automatically collected and corresponding data generated (e.g., by sensors or monitors on either or both the vehicle (e.g., 105) and the remote valet system 605) to describe the provided remote valet service. Such metrics and data may describe such characteristics of the remote valet service as the severity of the conditions which triggered the remote valet services (e.g., with more difficult problems commanding higher remote valet service fees), the mileage driven under remote valet service control, time under remote valet service control, the particular virtual drivers and tools used to facilitate the remote valet service, the source and amount of extraneous data used by the remote valet service (e.g., the amount of data requested and collected from sources (e.g., 175, 180) extraneous to the sensors (e.g., 620, 625, 630)), among other metrics, which may be considered and used to determine fees to be charged by the remote virtual service for its services. In some cases, fees may be paid by or split between the owner of the vehicle, the vehicle manufacturer, a vehicle warrantee provider, the provider of the vehicle's autonomous driving system, etc. In some cases, responsibility for the remote valet service charges may be determined automatically from data generated in connection with the handover request, so as to determine which party/parties are responsible for which amounts of the remote valet service fees, among other example implementations.

Data generated in connection with a handover request to a remote valet service, as well as data generated to record a remote valet service provided to a vehicle on a given trip may be collected and maintained on systems (e.g., 610) of the remote valet service (e.g., 605) or in cloud-based services (e.g., 150), which may aggregate and crowdsource results of remote valet services to improve both the provision of future remote valet services, as well as the autonomous driving models relied upon by vehicles to self-drive and request remote valet services, among other example uses.

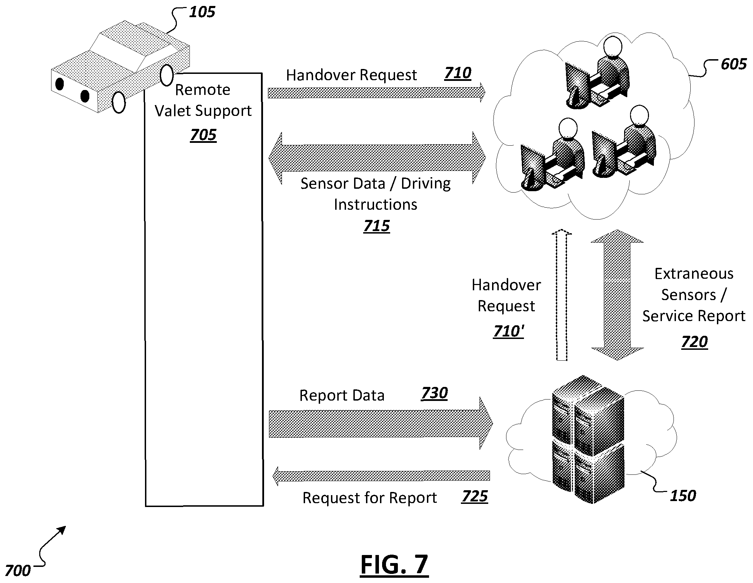

Turning to FIG. 7, a simplified block diagram 700 is shown illustrating communication between systems during the delivery of an example remote valet service. For instance, a handover request 710 may be sent from a vehicle (105) (e.g., a remote valet support block (e.g., 705) of its autonomous driving system) over a network to a computing system providing or brokering remote valet services (provided through one or more remote value service systems (e.g., 605)). In other instances, a trusted third-party system (e.g., extraneous to the autonomous vehicle 105) may determine (e.g., through an ensemble of sensor data from various devices monitoring traffic involving the vehicle) that the vehicle 105 is in need of assistance. In some cases, a passenger within the vehicle may cause the remote valet service to be triggered (e.g., through a smartphone app) using a third-party service (e.g., a cloud-based service 150), which may send the handover request (e.g., 710') on behalf of the vehicle 105, among other example implementations. A secure, high-priority communication channel 715 may be established between the vehicle 105 and the remote valet system 605 to enable the remote valet service to be provided. For instance, sensor data (e.g., camera data, LIDAR data, etc.) collected by sensors on the vehicle 105 may be sent to provide a near real-time view of the vehicle's position and status, as well as it surrounding environment. In some cases, the data may include data from internal sensors of the vehicle 105 (e.g., to enable a view of the passengers of the vehicles and/or to facilitate live communication between passengers and the remote valet's virtual driver, among other example uses. The remote valet's virtual driver may respond to the information they receive describing live conditions of the vehicle 105 and use controls at their terminal to generate driving instruction data to be sent over the channel 715 to the vehicle to remotely control the driving operations of the vehicle 105. The remote valet service may also obtain supplemental data (e.g., in addition to that received from the vehicle 105) from extraneous sources, such as road side units, other vehicles, drones, and other sensor devices. Such information may be provided over high priority channels (e.g., 720) facilitated through one or more backend systems (e.g., 150). In some implementations, the remote valet system 605 may determine, from the location of the vehicle 105, sets of sensors (which may change dynamically as the vehicle moves along a path under control of the remove valet driver), with which the remote valet system may establish another secure channel (e.g., 720) and obtain live data describing the scene around the vehicle being controlled by the remove valet system. Accordingly, in some implementations, the remote valet service may use either or both sensor data from sensors on or extraneous to the vehicle 105 being controlled.

As noted above, in some implementations, an autonomous vehicle may detect instances when it should invoke a remote valet service for assistance. In some cases, this determination may be assisted by one or more backend services (e.g., 150). In some implementations, the vehicle may provide data to such services 150 (or to other cloud-based systems, repositories, and services) describing the conditions which precipitated the handover request (e.g., 710). The vehicle may further provide a report (after or during the service) describing the performance of the remote valet system (e.g., describing maneuvers or paths taken by the remote valet, describing passenger satisfaction with the service, etc.). Such report data (e.g., 730) may be later used to train machine learning models and otherwise enhance the services provided by the backend or cloud-based system (e.g., 150). Insights and improved models may be derived by the system 150 and then shared with the vehicle's autonomous driving system (as well as its remote valet support logic 705). In some cases, the autonomous vehicle may record information describing the remote valet's maneuvers and reactions and use this to further train and improve models used in its own autonomous driving machine learning models. Similarly, report data (e.g., through 720) may be provided from the remote valet system 605 to cloud-based services or to the vehicle for use in enhancing the vehicle's (and other vehicles') autonomous driving logic and handover requests, among other example uses, such as described herein.

As an illustrative example, an autonomous vehicle (e.g., 105) may autonomously determine (or determine based on passenger feedback or feedback received or reported by a public safety officer, etc.) that the vehicle's autonomous driving system is unable to handle a particular situation, while driving along a route. Accordingly, a remote valet service may be triggered. In some cases, the remote valet service may be contacted in advance of an upcoming section of road based on a prediction that the section of road will be problematic. In some implementations, a handoff request may be performed by a block of logic supplementing autonomous driving system logic implementing a path planning phase in an autonomous driving pipeline (such as discussed in the example of FIG. 5). In some instances, once a remote valet handoff request is issued to a remote valet system, a communication module on the autonomous vehicle, such as a telematic control unit (TCU), may be used to connect to the remote valet service. In some implementations, remote valet service communication may be established as communications with an emergency service (similar to emergency call) specified during the manufacturing phase of the TCU. In this handoff request, the vehicle location may be provided. In some implementations, the handoff request and remote valet service may be implemented in an OEM-provided call/control center where the human virtual driver handling the "remote valet" takes action. In some implementations, in response to establishing a connection between the vehicle and the remote valet service, the remote valet may send a request to the vehicle to stream video from all its cameras for views of the surroundings in real-time. Other sensors (e.g., road cameras and road side sensors) in the same location may also be identified to provide data (e.g., addition streaming video) to supplement the information received from the vehicle. Based on the view of the vehicle surroundings and road conditions that are displayed in near real-time to the remote valet through the streamed video from vehicles (and possibly also from supplemental sources (e.g., road cameras)), the remote valet controls the vehicle (similar to video immersive games where the player sees the car's view and drives and control them with a wheel, handheld controller, etc.) to drive the vehicle to a destination. In some cases, the destination may correspond to a next section of a route determined to be less problematic, at which point control may be handed back to the autonomous driving system to control driving of the vehicle in a standard autonomous driving mode. In other cases, based on the circumstances and detected characteristics of the original handoff request, the remote valet service may direct the vehicle to a particular destination identified as equipped to address issues detected at the vehicle, such as driving a vehicle with compromised sensors or autonomous driving system to the nearest service center, or driving a vehicle with sick or injured passengers to a hospital, among other examples and use cases.

As noted above, in some implementations, an autonomous driving system of a vehicle may access data collected by other remote sensors devices (e.g., other autonomous vehicles, drones, road side units, weather monitors, etc.) to determine, preemptively likely conditions on upcoming stretches of road. In some cases, a variety of sensors may provide data to cloud-based systems to aggregate and process this collection of data to provide information to multiple autonomous vehicles concerning sections of roadway and conditions affecting these routes. As noted above, in some cases, cloud-based systems and other systems may receive inputs associated with previous pullover and remote valet handover events and may detect characteristics common to these events. In some implementations, machine learning models may be built and trained from this information and such machine learning models may be deployed on and executed by roadside units, cloud-based support systems, remote valet computing systems, or the in-vehicle systems of the autonomous vehicles themselves to provide logic for predictively determining potential remote valet handoffs. For instance, through sensor data accessed by a given autonomous vehicle, the vehicle may determine in advance the areas along each road, where frequent pull-overs have occurred and/or remote valet handoffs are common. In some instances, the autonomous vehicle may determine (e.g., from a corresponding machine learning model) that conditions reported for an upcoming section of road suggest a likelihood of a pull-over and/or remote valet handover (even if no pull-over and handover had occurred at that particular section of road previously). Using such information, an autonomous vehicle may preemptively take steps to prepare for a handover to an in-vehicle driver or to a remote valet service. In some cases, the autonomous vehicle may decide to change the path plan to avoid the troublesome section of road ahead (e.g., based on also detecting the unavailability communication resources which can support remote valet, a lack of availability reported for a preferred valet service, a user preference requesting that remote valet be avoided where possible, etc.). In some implementations, displays of the autonomous vehicle may present warnings or instructions to in-vehicle passengers regarding an upcoming, predicted issue and the possibility of a pull-over and/or remote valet handover. In some cases, this information may be presented in an interactive display through which a passenger may register their preference for handling the upcoming trip segment either through a handover to the passenger, handover to a remote valet service, selection of alternative route, or a pull-over event. In still other implementations, cloud-based knowledge reflecting troublesome segments of road may be communicated to road signs or in-vehicle road maps to indicate the trouble segments to drivers and other autonomous vehicles, among other example implementations.

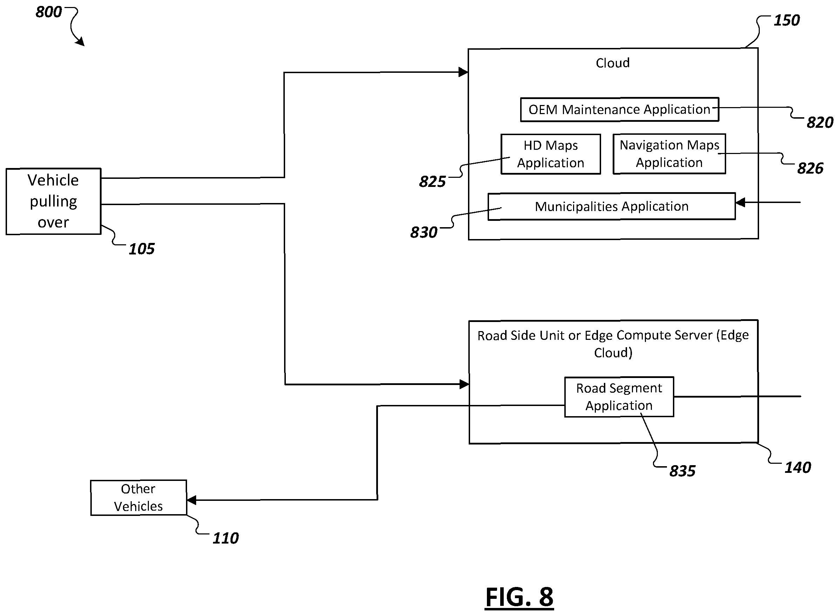

Turning to FIG. 8, a simplified block diagram 800 is shown illustrating cooperative reporting of information relating to pull-over event risk and road condition warnings, which may be further leveraged to launch remote valet services to assist autonomous vehicles through such hazardous and difficult scenarios. For instance, information may be collected for a pull-over request and/or remote valet event by the affected vehicles and/or surrounding sensor devices, and this information may be shared and leveraged to enhance autonomous driving systems. In the example of FIG. 8, when a pull-over or handoff occurs, the affected vehicle (e.g., 105) may assemble data generated and collected in association with this event and may share this information with cloud-based support systems (e.g., 150) and/or edge devices, such as a road side unit or edge computer (or edge cloud) server (e.g., 140).

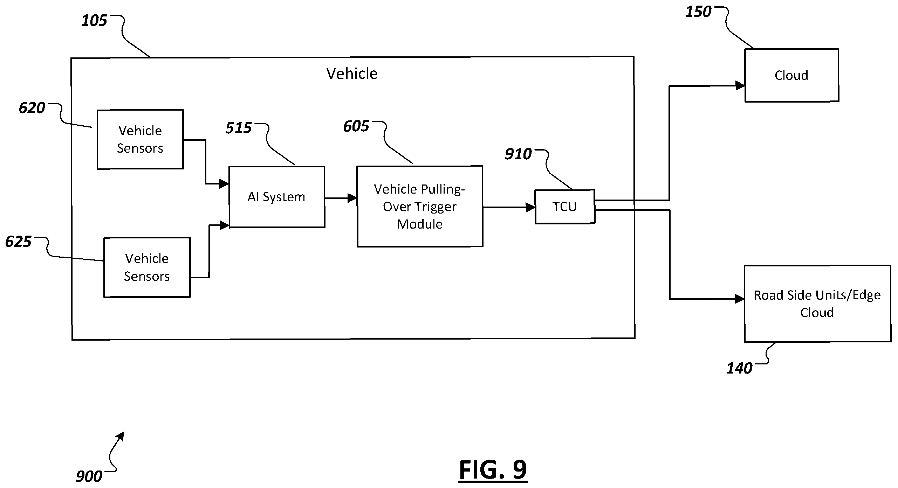

FIG. 9 shows a simplified block diagram 900 illustrating features of an example autonomous vehicle 105, which may include various vehicle sensors (e.g., 620, 625), an artificial intelligence/machine learning-based autonomous driving stack 515, and logic (e.g., 905) to support triggering and generating handoff requests to systems capable of providing a remote valet service. A telematics control unit (TCU) 910 may be provided through which the handoff request may be sent and communication established between the vehicle 105 and a virtual driver terminal providing the remote valet service.

When the autonomous driving engine (e.g., 515) determines a pull-over event or the remote valet support logic (e.g., 905) determines that a handoff request should be sent, a signal may be sent to the TCU 910) to send vehicle location and pull-over location to various cloud-based entities (or a single entity or gateway distributing this information to multiple entities or services. Indeed, many different services may make use of such information. For instance, a cloud-based application 815 (e.g., associated with the vehicle OEM), in one example, may be the primary target or recipient for this information and may distribute portions of this information to other recipients. In other instances, the vehicle 105 may provide and distribute data itself to multiple different cloud-based application (e.g., one application per recipient). For instance, an OEM maintenance application (e.g., 820) may utilize pull-over or hand-off information and make use of it for diagnostics and identifying corner cases in which the vehicle (and its models) cannot handle autonomous driving. In some examples, recipients of pull-over or handoff information may include maps application providers (e.g., 825, 826), including providers of traditional navigation maps, 3D maps, high definition (HD) maps, etc., who can receive this information through dedicated cloud apps either directly from the vehicle or through the OEM who receives the information directly from the vehicle. The map providers may leverage pull-over and handoff information for statistics that can help populate the maps with information on areas prone to pull-over events and difficult autonomous driving condition, such that this information may be continually updated. Further, HD maps may incorporate such information as a part of the high precision information per road segment that the HD maps provide, among other examples. Municipalities, governmental agencies, toll road providers, and other infrastructure companies and governing bodies (e.g., 830) may also be recipients of pull over and handoff information (e.g., directly from the vehicle 105, indirectly through another application or entity, or by capturing such information through associated roadside sensors and roadside support units, among other examples. Such agencies may utilize this information to trigger road maintenance, as evidence for new road and infrastructure projects, policing, tolls, to trigger deployment of signage or warnings, and other uses.

A pull-over or handoff event may also trigger information to be shared by a vehicle 105 with nearby roadside units, vehicles, and other sensor devices. An example roadside unit (e.g., 140) may leverage this information for instance to process this data with other data it receives and share this information or results of its analysis with other vehicles (e.g., 110) or systems in its proximity (e.g., through a road segment application 835). For instance, the roadside unit may alert other vehicles of a risk of a pull-over event, prepare infrastructure to support communication with remote valet services, among other example actions. Roadside units may also store or communicate this information so that associated municipalities, maintenance providers, and agencies may access use this information (e.g., to dynamically adapt traffic signal timing, update digital signage, open additional traffic lanes, etc.).

As discussed above, various cloud- and edge-based computing systems may utilize pull-over and handoff information collected from various vehicles over time to improve models, which may be shared and used to improve recommender systems (e.g., to recommend a pull-over or remote valet handoff), enable predictive or preemptive remote valet handoffs, improve autonomous driving models, improve remote valet services, among other example uses and benefits.

A mathematical model (that guarantees safety if all road agents are compliant to the model, or correctly assigns blame in the case of an accident may be used in various embodiments. For example, a safety model may rely on mathematically calculated longitudinal and lateral minimum safe distances between two road agents to avoid collision in a worst-case scenario modeled by bounding the agents' behavior to a set of stipulated constraints.

Whenever a situation arises where a distance between two agents drops below a safe distance as stipulated by a safety model (e.g., a "dangerous situation"), if both agents respond by enacting accelerations within the previously stipulated bounds (e.g., enact a "proper response"), the safety model may mathematically guarantee the prevention of collisions. If, on the other hand, one of the agents is noncompliant, then that agent is to be blamed if an accident occurs.

Use of a safety model simplifies the analysis of a situation involving two agents by focusing on its longitudinal and lateral dimensions separately. For example, the agents' velocities and accelerations, the minimum safe distances calculated using these velocities and accelerations, and the actual distances between the agents are all analyzed in terms of their longitudinal and lateral components over a coordinate system where the center of the lane is considered as lying on the y axis (therefore, the longitudinal component is expressed in terms of y, and the lateral component is expressed in terms of x).

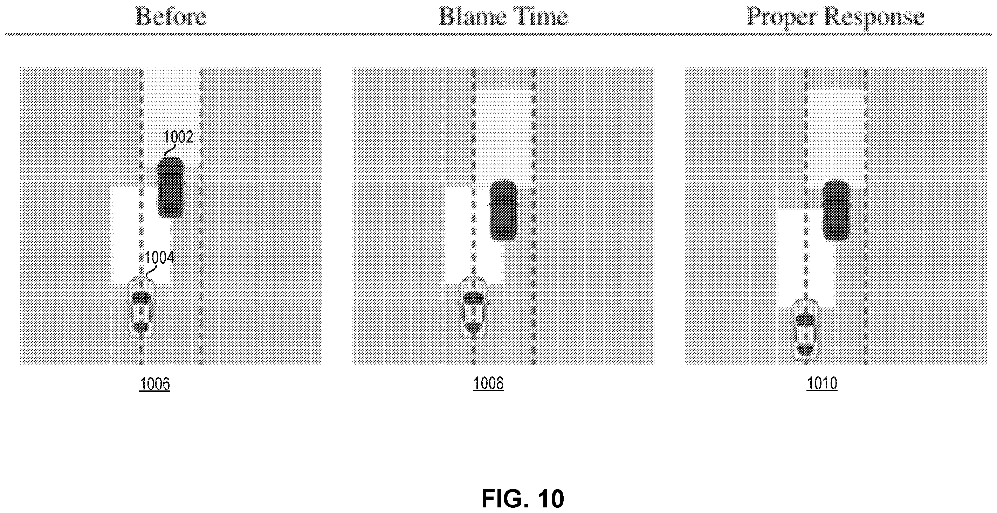

FIG. 10 depicts various driving phases in accordance with certain embodiments. In FIG. 10, agents 1002 and 1004 are depicted in three phases 1006, 1008, and 1010. To comply with the safety model, agents are required to enact a proper response when both the longitudinal and the lateral minimum safe distances are violated, and the proper response itself depends on which violation occurred most recently. In the first phase 1006, the agents 1002 and 1004 are separated by a non-safe lateral distance, but a safe longitudinal distance. The second phase 1008 depicts the last point in time in which the longitudinal distance is still safe (referred to as "blame time"). At the next point in time after the blame time, the longitudinal safe distance is also violated. In the third phase 1010, the agents have returned back to a safe situation and avoided a collision after having enacted a proper response in the longitudinal direction.

A safety model may be designed to be completely decoupled from the agent's policy. In order to be compliant with the safety model, an autonomous driving stack may include an additional component to check compliance of decisions made by the agent's policy and to enforce default safety model-compliant decisions when the agent's policy requests actions that are not compliant.

While a safety model may be designed with autonomous vehicles in mind, various embodiments of the present disclosure include vehicles with control systems that use any suitable accident avoidance mathematical model as a mechanism to avoid accidents by human driver decisions. Such embodiments may potentially result in higher overall safety for a human driver, and may also provide evidence or a guarantee that the driver will not be blamed for accidents where the law in force assigns blame in a manner comparable to the safety model's blame assignment mechanism (e.g., the blame is assigned to an agent that violated the conditions of the model). Following the safety model, various embodiments described herein present another potential, longer term advantage: for instance, as more and more agents (human or otherwise) are equipped with a safety model enforcer (or enforcer of a similar model), the overall amount of road accidents will decrease, evolving towards an ideal situation for all agents.

In a particular embodiment of the present disclosure, a vehicle includes a control system to replace driver inputs that would result in safety model-noncompliant accelerations with synthetically produced inputs guaranteed to generate an acceleration included within the range of safety model-compliant accelerations. Safety model-compliant driver inputs are passed through to the actuation system unchanged, thereby implementing a system that takes over only during potentially dangerous situations.

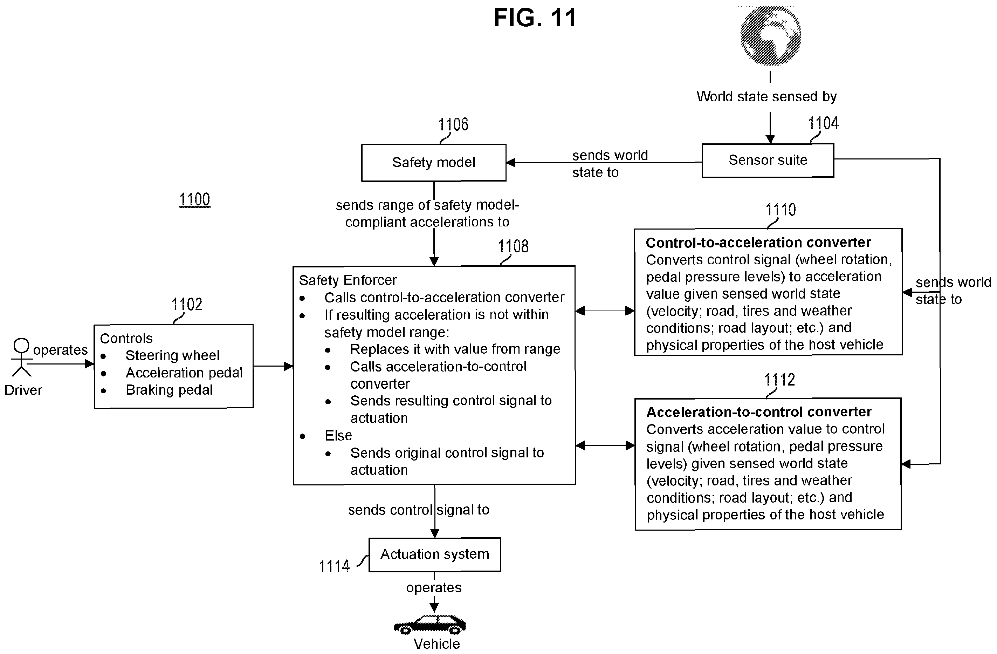

FIG. 11 depicts a diagram of a system 1100 for modifying driver inputs to ensure safety model-compliant accelerations in accordance with certain embodiments. In various embodiments, the system 1100 may be part of a vehicle, e.g., 105 and any of the modules shown may be implemented by any suitable logic of a computing system of a vehicle, e.g., 105. In other embodiments, any of the modules may be implemented outside of a vehicle (e.g., by 140 or 150) and results may be communicated to the vehicle. System 1100 includes controls 1102 (in various embodiments, controls 1102 may have any suitable characteristics of drive controls 220), sensor suite 1104 (in various embodiments, sensor suite 1104 may have any suitable characteristics of sensors 225), safety model 1106, safety model enforcer 1108, control-to-acceleration converter 1110, and acceleration-to-control converter 1112. In a particular embodiment, the components of system 1100 may all be integrated within a vehicle. In other embodiments, one or more components may be distinct from the vehicle and communicably coupled to the vehicle.

Controls 1102 may be provided to enable a human driver to provide inputs to an actuation system of the vehicle. For example, controls may include a steering wheel or other steering mechanism, an acceleration pedal or other throttle, and a brake pedal or other braking mechanism. In an embodiment, controls may include other components, such as a gear shifter, an emergency brake, joystick, touchscreen, gesture recognition system, or other suitable input control that may affect the speed or direction of the vehicle.

Sensor suite 1104 may include any suitable combination of one or more sensors utilized by the vehicle to collect information about a world state associated with the vehicle. For example, sensor suite 1104 may include one or more LIDARs, radars, cameras, global positioning systems (GPS), inertial measurement units (IMU), audio sensors, infrared sensors, or other sensors described herein. The world state information may include any suitable information, such as any of the contexts described herein, objects detected by the sensors, location information associated with objects, or other suitable information.

The world state may be provided to any suitable components of the system 1100, such as safety model 1106, control-to-acceleration converter 1110, or acceleration to-control converter 1112. For example, the world state information may be provided to safety model 1106. Safety model 1106 may utilize the world state information to determine a range of safety model-compliant accelerations for the vehicle. In doing so, safety model 1106 may track longitudinal and latitudinal distances between the vehicle and other vehicles or other objects. In addition, safety model 1106 may also track the longitudinal and latitudinal speed of the vehicle. safety model 1106 may periodically update the range of safety model-compliant accelerations and provide the acceleration range to safety model enforcer 1108. The safety model-compliant accelerations may specify a range of safety model-compliant accelerations in a longitudinal direction as well as a range of safety model-compliant accelerations in a latitudinal direction. The accelerations may be expressed in any suitable units, such as meters per second squared and may have positive or negative values (or may be zero valued).

Safety model enforcer 1108 receives control signals from driver inputs and calls control-to-acceleration converter 1110, which converts the driver inputs into an acceleration value indicating a predicted vehicle acceleration if the driver inputs are passed to the actuation system 1114 (which in some embodiments includes both a latitudinal and longitudinal acceleration component). Safety model enforcer 1108 may determine whether the acceleration value is within the most recent range of safety model-compliant accelerations received from safety model 1106. If the acceleration value is within the range of safety model-compliant accelerations, then the safety model enforcer allows the driver input from controls 1102 to be passed to the actuation system 1114. If the acceleration value is not within the range of safety model-compliant accelerations, the safety model enforcer blocks the driver input and chooses an safety model-compliant acceleration value within the received range. The safety model enforcer 1108 may then call acceleration-to-control converter 1112 with the selected acceleration value and may receive one or more control signals in return. In a particular embodiment, the control signals provided by acceleration-to-control converter 1112 may have the same format as the control signals provided to actuation system 1114 in response to driver input. For example, the control signals may specify an amount of braking, an amount of acceleration, and/or an amount and direction of steering, or other suitable control signals. safety model enforcer 1108 may provide these new control signals to the actuation system 1114 which may use the control signals to cause the vehicle to accelerate as specified.

In various embodiments, the safety model enforcer 1108 may choose any suitable acceleration value within the range of safety model-compliant accelerations. In a particular embodiment, the safety model enforcer 1108 may choose the acceleration value at random from the range. In another embodiment, the safety model enforcer 1108 may choose the most or least conservative value from the range. In another embodiment, the safety model enforcer 1108 may choose a value in the middle of the range. In yet another embodiment, the safety model enforcer 1108 may use policy information (e.g., based on preferences of the driver or based on safety considerations) to determine the acceleration value. For example, the safety model enforcer 1108 may favor longitudinal accelerations over latitudinal accelerations or vice versa. As another example, the safety model enforcer 1108 may favor accelerations that are more comfortable to the driver (e.g., slower braking or smaller steering adjustments may be preferred over hard braking or swerving). In various embodiments, the decision may be based on both safety and comfort, with related metrics calculated from the same set of motion parameters and vehicle characteristics.

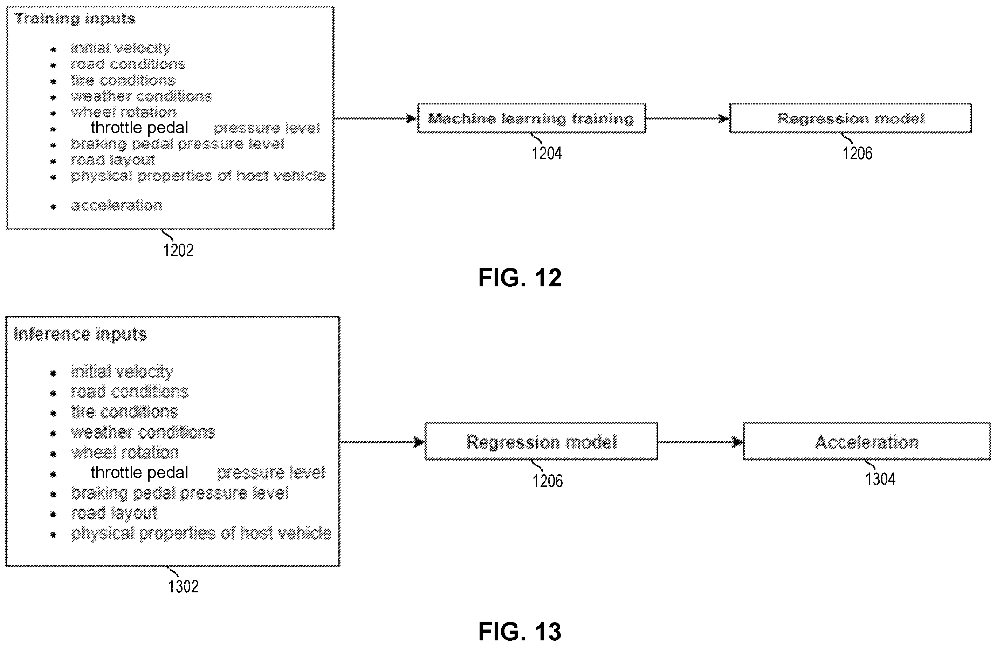

As alluded to above, the control-to-acceleration converter 1110 converts driver inputs (e.g., steering wheel rotation and throttle/braking pedal pressure) to accelerations. In various embodiments, the converter 1110 may take any suitable information into account during the conversion, such as the world state (e.g., the vehicle's velocity, weather, road conditions, road layout, etc.) and physical properties of the host vehicle (e.g., weight of vehicle, shape of vehicle, tire properties, brake properties, etc.). In one embodiment, the conversion may be based on a sophisticated mathematical model of the vehicle's dynamics (e.g., as supplied by a manufacturer of the vehicle). In some embodiments, converter 1110 may implement a machine learning model (e.g., implementing any suitable regression model) to perform the conversion. An example machine learning model for control-to-acceleration conversion will be described in more detail in connection with FIGS. 12 and 13.

An acceleration-to-control converter 1112 may include logic to convert an safety model-compliant acceleration enforced by safety model enforcer 1108 during a takeover to an input suitable for the actuation system 1114. The converter 1112 may utilize any suitable information to perform this conversion. For example, converter 1112 may utilize any one or more pieces of the information used by the control to acceleration converter 1110. Similarly, converter 1112 may use similar methods as converter 1110, such as a machine learning model adapted to output control signals given an input of an acceleration. In a particular embodiment, an acceleration-to-control converter may comprise a proportional integral derivative (PID) controller to determine the desired control signals based on an acceleration value. The PID controller could be implemented using classic controller algorithm with proportional, integral, and differential coefficients or could be machine learning based, wherein these coefficients are predicted using a ML algorithm (e.g., implemented by machine learning engine 232) that utilizes an optimization metric that takes into account safety and comfort.

1114 may represent any suitable actuation system to receive one or more control signals and cause a vehicle to respond to the one or more control signals. For example, actuation system may adjust an amount of gasoline or electric power (or other power source) supplied to an engine or motor of a vehicle, an amount of braking pressure applied to wheels of the vehicle, an amount of angle applied to one or more wheels of the vehicle, or make any other suitable adjustment that may affect acceleration of the vehicle.

FIG. 12 depicts a training phase for control-to-acceleration converter 1110 in accordance with certain embodiments. Training inputs 1202 for the model may include any suitable information that may affect an acceleration enacted in response to control signals. For example, training inputs may include any combination of an initial velocity of a vehicle, road conditions, tire conditions, weather conditions, wheel rotation, acceleration pedal pressure level, braking pedal pressure level, road layout, physical properties of the vehicle, or other suitable information along with a resulting acceleration under each set of such information. Such data may be used during a machine learning training phase 1204 to train a regression model 1206 that may be used by a vehicle to convert control signals and other information (e.g., world state information, physical properties of the vehicle) to acceleration values. In various embodiments, the regression model 1206 is trained on ground-truth data collected using one or more vehicles of the class of the vehicle under many different weather, road, and vehicle state conditions. In various embodiments, the training may be performed by any suitable computing system (whether in an in-vehicle computing system, in a cloud-based system, or other data processing environment).

FIG. 13 depicts an inference phase of control to-acceleration converter 1110 in accordance with certain embodiments. During the inference phase, various inputs 1302 associated with the vehicle are provided to the regression model 1206, which outputs a predicted acceleration based on the inputs. The inputs may mirror the input types used to train the model 1206, but may include real time values for such inputs. The regression model 1206 outputs an acceleration value 1304.

A similar regression model may be used for the acceleration-to-control converter 1112. Similar input data may be used to train the model, but during inference, the model may receive a desired acceleration as input (along with real time values of the world state and/or vehicle state) and may output control signals predicted to cause the desired acceleration.

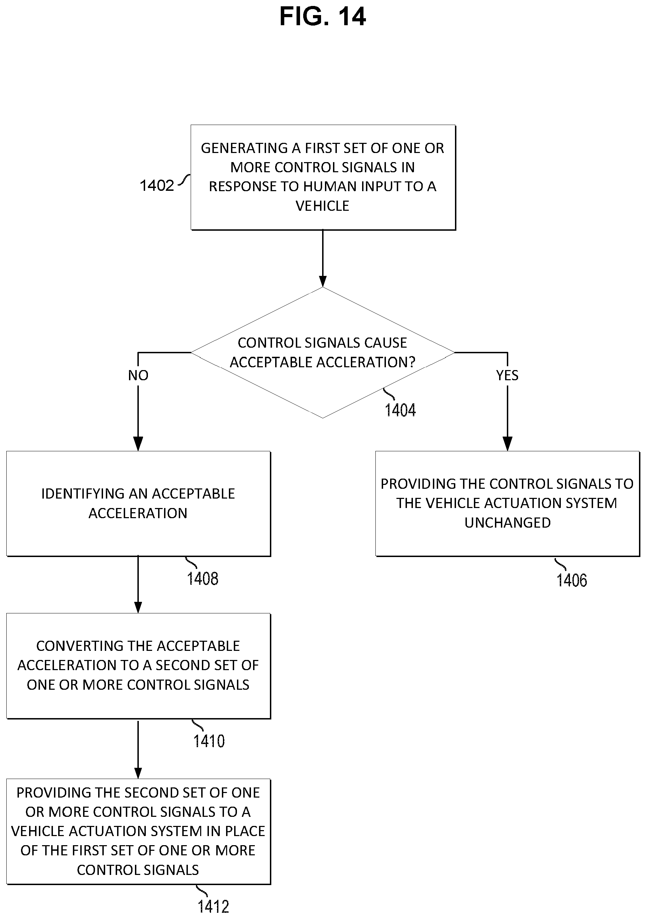

FIG. 14 depicts a flow for providing acceptable control signals to a vehicle actuation system in accordance with certain embodiments. At 1402, a first set of one or more control signals is generated in response to human input to a vehicle. At 1404, a determination is made as to whether the first set of control signals would cause an acceptable acceleration of the vehicle. If the control signals would cause an acceptable acceleration, the control signals are provided to the vehicle actuation system unchanged at 1406. If the control signals would cause an unacceptable acceleration, an acceptable acceleration is identified at 1408. At 1410, the acceptable acceleration is converted to a second set of one or more control signals. At 1412, the second set of one or more control signals is provided to the vehicle actuation system in place of the first set of one or more control signals.

Safe handover of driving responsibility to a human from an autonomous vehicle or vice versa is a very critical task. As described above, one approach to handover from a human to an autonomous vehicle may be based on a safety model or the like, where an autonomous vehicle may intercept unacceptable human inputs and replace them with safer inputs.

In various embodiments of the present disclosure, handoff readiness may be based on a measure of overall signal quality of a vehicle's sensors relative to the context in which such a measurement is taking place. The context may be any suitable context described herein, such as a traffic situation (e.g., a highway or busy street) or weather conditions (e.g., clear skies, rainy, puddles present, black ice present, etc.). The signal quality metric may be determined using a machine learning (ML) algorithm that receives sensor data and context information as input and outputs a signal quality metric. This signal quality metric in turn is used to determine handoff readiness using another ML algorithm trained using vehicle crash information. If the signal quality metric indicates a poor signal quality in light of the context, a handoff from a human driver to an autonomous vehicle may be disallowed as such a handoff may be unsafe.

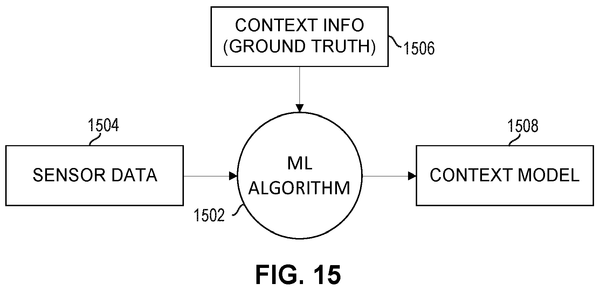

FIG. 15 depicts a training phase to build a context model 1508 in accordance with certain embodiments. In various embodiments, the context model 1508 may be a classification model built using sensor data 1504 and context information ground truth 1506. ML algorithm 1502 may represent any suitable algorithm for training the context model 1508 based on the sensor data 1504 and the context info ground truth 1506. Sensor data 1504 may include any suitable sensor data from one or more sensors of a vehicle, such as one or more LIDARs, radars, cameras, global positioning systems (GPS), inertial measurement units (IMU), audio sensors, infrared sensors, or other sensors. ML algorithm 1502 may train the context model 1508 using various instances of sensor data 1504 and context info ground truth 1506 where each instance may include a set of sensor data as well as an associated context. In various embodiments, the training data may include actual sensor data and associated contexts, simulated data and associated contexts, and/or synthetic data and associated contexts (e.g., from synthetic images generated using a method described herein). In a particular embodiment, a context may include one or more text keywords describing the context, such as "foggy" and "wet roads", but any suitable expression of contexts is contemplated by this disclosure.

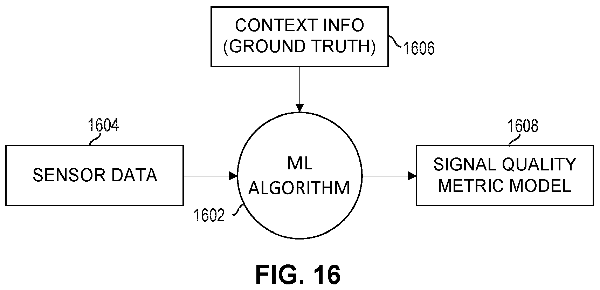

FIG. 16 depicts a training phase to build a signal quality metric model 1608 in accordance with certain embodiments. In various embodiments, the signal quality metric model 1608 may be a regression model built using sensor data and context information ground truth. In various embodiments, sensor data 1604 may be the same sensor data as sensor data 1504 or may be different, at least in part. In some embodiments, context info ground truth 1606 may be the same context info as context info ground truth 1506 or may be different, at least in part. ML algorithm 1602 may train the signal quality metric model 1608 using various instances of sensor data 1604 and context info ground truth 1606 where each instance may include a set of sensor data as well as an associated context. In various embodiments, the training data may include actual sensor data and associated contexts, simulated data and associated contexts, and/or synthetic data and associated contexts. By analyzing multiple different instance of sensor data associated with a particular context, ML algorithm 1602 may be able to train signal quality metric model 1608 to distinguish between the qualities of the various instances of sensor data 1604 for the particular context. Similar training may be done for any suitable number of different contexts.

After the signal quality metric model is trained, it may be able to receive an instance of sensor data (where an instance of sensor data comprises sensor data collected over a period of time) and an associated context and output one or more indications of sensor data quality. For example, the signal quality metric may include a composite score for the quality of an instance of sensor data. In another example, the signal quality metric may include a score for the quality of each of a plurality of types of sensor data. For example, the signal quality metric may include a score for camera data and a score for LIDAR data. In some embodiments, a score may be any of multiple types of quality metrics, such as a measurement of a signal to noise ratio, a measurement of a resolution, or other suitable type of quality metric. In some embodiments, the signal quality metric may include scores for multiple types of quality metrics or may include a single score based on multiple types of quality metrics. In some embodiments, a score of a signal quality metric may be a normalized value (e.g., from 0 to 1).

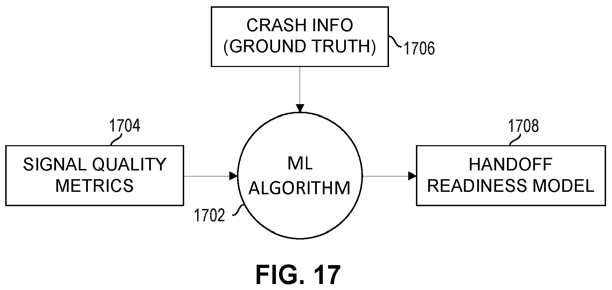

FIG. 17 depicts a training phase to build a handoff readiness model 1708 in accordance with certain embodiments. In various embodiments, the handoff readiness model 1708 may be a classification model built using signal quality metrics information 1704 and crash information ground truth 1706.

ML algorithm 1702 may represent any suitable algorithm for training the handoff readiness model 1708 based on the signal quality metrics 1704 and the crash info ground truth 1706. ML algorithm 1702 may train the context model 1508 using various instances of signal quality metrics 1704 and crash info ground truth 1706. An instance used for training may include a signal quality metric as well as a set of crash information. A set of crash information may include any suitable safety outcome associated with a particular instance of a signal quality metric. For example, an instance of crash information may indicate whether an accident occurred when an autonomous vehicle was operated under the signal quality metric. As another example, an instance of crash information may indicate whether an accident nearly occurred when an autonomous vehicle was operated under the signal quality metric. As another example, an instance of crash information may indicate whether an accident occurred or nearly occurred (e.g., near accidents may be treated the same as actual accidents) when an autonomous vehicle was operated under the signal quality metric. In various embodiments, the training data may include actual data signal quality metrics and crash info, simulated data signal quality metrics and crash info, synthetic data signal quality metrics and crash info, or a combination thereof.

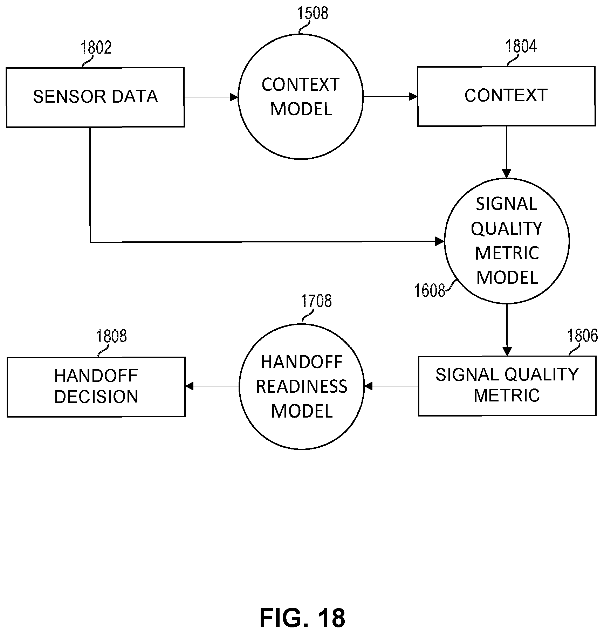

FIG. 18 depicts an inference phase to determine a handoff decision 1808 based on sensor data 1802 in accordance with certain embodiments. In the inference phase, which may be implemented, for instance, by an in vehicle computing system at drive time, sensor data 1802 is collected and provided to the trained context model 1508. The context model analyzes the sensor data 1504 and determines a context 1804 from the sensor data 1802. The determined context 1804 is provided, along with the sensor data 1802 to signal quality metric model 1608. The signal quality metric model 1608 analyzes the sensor data 1802 and the context 1804 and determines a signal quality metric 1806 based on the quality of the sensor data 1802 in light of the context 1804. The signal quality metric 1806 is provided to handoff readiness model 1708, which determines a handoff decision 1808 based thereon. In a particular embodiment, the handoff decision 1808 is a binary indication of whether the handoff is safe or not. In other embodiments, this may be a multiclass decision having three or more possible outcomes. For example, the handoff decision could include any number of outcomes that each represents a different range of safety of the handoff. In various embodiments, the vehicle may utilize the handoff decision 1808 outcome to determine whether to handoff or not, or to carry out a partial handoff, e.g., handing off some controls but not others (e.g., steering only but not brakes or vice versa).

In various embodiments, the inference phase may be performed periodically or in response to a trigger (or both). For example, while the autonomous vehicle is handling the driving control, the inference phase may be performed periodically to determine whether the autonomous vehicle is still able to reliably handle the driving control. As another example, the inference phase may be triggered when a request is received from a human driver to transfer control to the vehicle. As yet another example, the inference phase may be triggered by a change in context or a significant change in a quality of sensor data.

In particular embodiments, preemptive planning of handoff based on known levels of static data, such as the availability of high definition maps for roads the vehicle is to travel. This type of data might be unavailable for certain areas that the vehicle has to drive in, for example because the HD map data for a certain area has not been collected yet. In such cases, the system can preemptively plan for handoff (e.g., before the start of the trip) and prepare the driver beforehand for safe handoff using any of the handoff techniques described herein. In a particular example, the inference phase to determine a handoff decision is triggered upon entry (or right before entry) of the vehicle into a zone without the HD map data. In some embodiments, the availability of HD map data may be used as an input to signal quality metric model 1608 to affect the signal quality metric positively if the HD map data is available or negatively if it is not. In some embodiments, the HD maps are basically treated as an additional sensor input.

In various embodiments, the ML algorithms or models described in reference to FIGS. 15-18 may be trained or performed by any suitable computing system, such as an in-vehicle computing systems, a support system implementing using cloud and/or fog-based computing resources, or in another data processing environment.

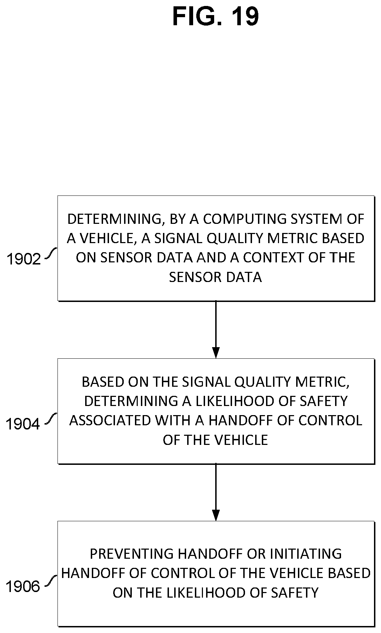

FIG. 19 depicts a flow for determining whether to handoff control of a vehicle in accordance with certain embodiments. At 1902, a computing system of a vehicle determines a signal quality metric based on sensor data and a context of the sensor data. At 1904, a likelihood of safety associated with a handoff of control of the vehicle is determined based on the signal quality metric. At 1906, a handoff is prevented or initiated based on the likelihood of safety.

Autonomous vehicles are expected to provide possible advantages over human drivers in terms of having better and more consistent responses to driving events due to their immunity to factors that negatively affect humans, such as fatigue, varying levels of alertness, mood swings, or other factors. However, autonomous vehicles may be subject to equipment failure or may experience situations in which the autonomous vehicle is not prepared to operate adequately (e.g., the autonomous vehicle may enter a zone having new features for which the vehicle algorithms are not trained), necessitating handoff of the vehicle to a human driver or pullover of the vehicle.

In various embodiments of the present disclosure, prior to handing off a vehicle to a human driver, the state of the driver (e.g., fatigue level, level of alertness, emotional condition, or other state) is analyzed to improve safety of the handoff process. Handing off control suddenly to a person who is not ready could prove to be more dangerous than not handing off at all, as suggested by a number of accidents reported recently with recent test vehicles.

Typically, autonomous vehicles have sensors that are outward facing, as perception systems are focused on mapping the environment and localization systems are focused on finding the location of the ego vehicle based on data from these sensors and map data. Various embodiments of the present disclosure provide one or more in-vehicle cameras or other sensors to track the driver state.

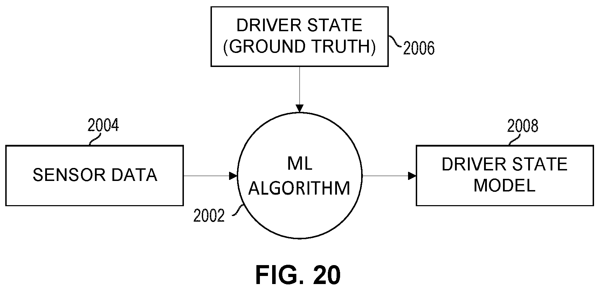

FIG. 20 depicts a training phase for a driver state model 2008 in accordance with certain embodiments. In the training phase, sensor data 2004 and driver state ground truth data 2006 is provided to ML algorithm 2002, which trains the driver state model 2008 based on this data. In various embodiments, the driver state model 2008 may be a classification model that outputs a class describing the state of a driver. In other embodiments, the driver state model 2008 may be a regression model that outputs a score for the state of the driver (with higher scores depicting a more desirable state).

In various embodiments, sensor data 2004 may represent any suitable sensor data and/or information derived from the sensor data. For example, sensor data 2004 may include or be based on image data collected from one or more cameras capturing images of the inside of the vehicle. In some embodiments, the one or more cameras or computing systems coupled to the cameras may implement Al algorithms to detect face, eyebrow, or eye movements and extract features to track a level of fatigue and alertness indicated by the detected features.

In various embodiments, sensor data 2004 may include or be based on one or more temperature maps collected from an infrared camera. In some embodiments, the infrared camera or a computing system coupled to the infrared camera may implement Al algorithms to track the emotional state or other physical state of the driver based on these temperature maps. As just one example, a rise in body temperature of a human driver (e.g., as indicated by an increased number of regions with red color in a temperature map) may be indicative of an agitated state. In various embodiments, sensor data 2004 may include or be based on pressure data collected from tactile or haptic sensors on the steering wheel, accelerator, or driver seat. In some embodiments, a computing system coupled to such tactile or haptic sensors may implement Al algorithms to analyze such pressure data to track the level of alertness or other physical state of the driver.

In various embodiments, sensor data 2004 may include or be based on electrocardiogram (EKG) or inertial measurement unit (IMU) data from wearables, such as a smart watch or health tracker band. A computing system coupled to such wearables or the wearables themselves may utilize Al algorithms to extract EKG features to track the health condition or other physical state of the driver or to analyze IMU data to extract features to track the level of alertness or other physical state of the driver.

In various embodiments, sensor data 2004 may include or be based on audio data from in-cabin microphones. Such data may be preprocessed with noise cancellation techniques to isolate the sounds produced by passengers in the vehicle. For example, if audio is being played by the in-vehicle infotainment system, the signal from the audio being played may be subtracted from the audio captured by the in-cabin microphones before any further processing. Raw audio features may be used directly to gauge user responsiveness levels or overall physical state (for example, slurred speech may be indicative of inebriation) but may also be used to classify audio events (e.g., laughing, crying, yawning, snoring, retching, or other event) that can be used as further features indicative of driver state. The analyzed audio data may also include detected speech (e.g., speech may be transformed into text by an Automatic Speech Recognition engine or the like) from dialogues the passengers are having with each other or with the vehicle's infotainment system. As one example, in addition to communicating with the driver about a handoff, the vehicle's dialogue system can attempt to get the driver's confirmation for an imminent handoff. Speech may be transformed into text and subsequently analyzed by sophisticated Natural Language Processing pipelines (or the like) to classify speaker intent (e.g., positive or negative confirmation), analyze sentiment of the interactions (e.g., negative sentiment for linguistic material such as swear words), or model the topics being discussed. Such outputs may subsequently be used as additional features to the driver state tracking algorithm.

Features about the state of the vehicle may also provide insights into the driver's current level of alertness. As examples, such features may include one or more of media currently being played in the vehicle (e.g., movies, video games, music), a level of light in the cabin, an amount of driver interactivity with dashboard controls, window aperture levels, the state of in-cabin temperature control systems (e.g., air conditioning or heating), state of devices connected to the vehicle (e.g., a cell phone connected via Bluetooth), or other vehicle state inputs. Such features may be included within sensor data 2004 as inputs to the ML algorithm 2002 to train the driver state model 2008.

In particular embodiments, activity labels may be derived from the sensor data by an activity classification model. For example, the model may detect whether the driver is sleeping (e.g., based on eyes being closed in image data, snoring heard in audio data, and decreased body temperature), fighting with another passenger in the cabin (e.g., voice volume rises, heartbeat races, insults are exchanged), feeling sick (e.g., retching sound is captured by microphones and driver shown in image data with head bent down), or any other suitable activities.

In various embodiments, the raw sensor data may be supplied to the training algorithm 2002. In addition, or as an alternative, classifications based on the raw sensor data may be supplied to the ML algorithm 2002 to train the driver state model 2008. In some embodiments, the activity labels described above may be supplied to the training algorithm 2002 (optionally with the lower level features and/or raw sensor data as well) for more robust driver state tracking results.

Driver state ground truth 2006 may include known driver states corresponding to instances of sensor data 2004. When driver state model 2008 implements a classification algorithm, the driver state ground truth 2006 may include various classes of driver state. When driver state model 2008 implements a regression algorithm, each instance of driver state ground truth 2006 may include a numerical score indicating a driver state.

In various embodiments, the driver state ground truth 2006 and sensor data 2004 may be specific to the driver or may include data aggregated for multiple different drivers.

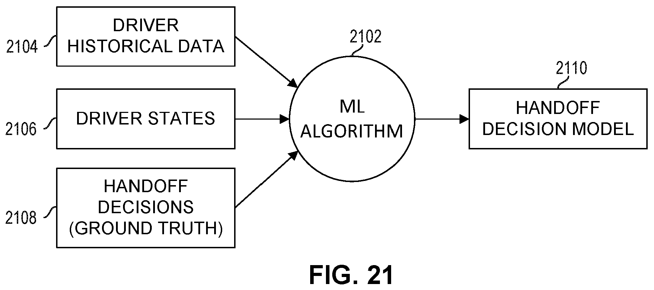

FIG. 21 depicts a training phase for a handoff decision model 2110. An ML training algorithm 2102 uses driver historical data 2104, driver states 2106, and handoff decisions ground truth 2108 to train handoff decision model 2110. In an alternate embodiment, ML algorithm 2102 may simply use driver states 2106 and handoff decisions ground truth 2108 to train the handoff decision model 2110. The handoff decisions ground truth 2108 may include actual previous handoff decisions and respective results (e.g., whether a crash or other dangerous event occurred). In particular embodiments, all or a subset of the handoff decisions ground truth 2108 may be simulated to enhance the data set.

Driver historical data 2104 may include any suitable background information that may inform the level of attentiveness of the driver. For example, historical data 2104 may include historical data for a driver including instances of driving under intoxication (DUI), past accidents, instances of potentially dangerous actions taken by a driver (e.g., veering into oncoming traffic, slamming on brakes to avoid rear ending another vehicle, running over rumble strips), health conditions of the driver, or other suitable background information. In some embodiments, the autonomous vehicle may have a driver ID slot where the driver inserts a special ID, and the autonomous vehicles connectivity system pulls out the relevant historical data for the driver. The driver's background information may be obtained in any other suitable manner.

In the embodiment depicted, during the training phase, the driver's historical data 2104 is supplied to the ML algorithm 2102 along with the driver state information 2106 to build a handoff decision model 2110 that outputs two or more classes. In one embodiment, the handoff decision model 2110 outputs three classes: handoff, no handoff, or short term handoff. In another embodiment, the handoff decision model 2110 outputs two classes: handoff or no handoff. In yet another embodiment, one of the classes may be partial handoff. As various examples, a class of "handoff" may indicate that the handoff may be performed with a high level of confidence, a class of "no handoff" may indicate a low level of confidence and may, in situations in which continued control by the vehicle is undesirable, result in the handoff being deferred to a remote monitoring system to take over control of the car until the driver is ready or the car is brought to a safe stop; a class of "short term handoff" may represent an intermediate level of confidence in the driver and may, in some embodiments, result in control being handed off to a driver with a time limit, within which the car is forced to come to a stop (e.g., the car may be brought to safe stop by a standby unit, such as a communication system that may control the car or provide a storage location for the car). In another embodiment, a "partial handoff" may represent an intermediate level of confidence in the driver and may result in passing only a portion of control over to the driver (e.g., just braking control or just steering control). In one embodiment, a "conditional handoff" may represent an intermediate level of confidence in the driver and may result in passing handoff over to the driver and monitoring driver actions and/or the state of the user to ensure that the vehicle is being safely operated. The above merely represent examples of possible handoff classes and the handoff decision model 2110 may output any combination of the above handoff classes or other suitable handoff classes.

In various embodiments, context detected via a vehicle's outward sensors may also be taken into consideration to evaluate a driver's capability of successfully handling a handoff. For example, weather conditions, visibility conditions, road conditions, traffic conditions, or other conditions may affect the level of alertness desired for a handoff. For example, if the conditions are inclement, a different level of awareness may be required before handing off to a driver. This may be implemented by feeding context information into the machine learning algorithm 2102 or in any other suitable manner.

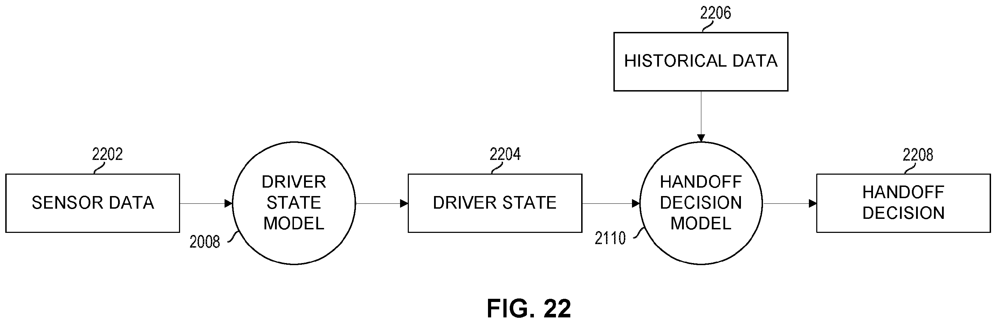

FIG. 22 depicts an inference phase for determining a handoff decision 2208 in accordance with certain embodiments. Sensor data 2202 as described above is provided to the driver state model 2008 which outputs a driver state 2204. The driver state 2204 and historical data 2206 is provided to handoff decision model 2110 which outputs a handoff decision 2208 as described above or another suitable handoff decision. In other embodiments, the handoff decision model may consider other factors (e.g., a context of the driving situation determined from one or more outward facing sensors) or omit the historical data 2206.

The inference phase may be performed in response to any suitable trigger. For example, the inference phase may be performed in response to a determination that the vehicle cannot independently operate itself with an acceptable level of safety. As another example, the inference phase may be performed periodically while a human driver is operating the vehicle and the outcome of the inference phase may be a determination of whether the driver is fit to operate the vehicle. If the driver is not fit, the vehicle may take over control of all or a part of the driving control, may provide a warning to the driver, or may take action to increase the alertness of the driver (e.g., turn on loud music, open the windows, vibrate the driver's seat or steering wheel, or other suitable action).

When the system determines to handoff to the human driver, the driver is notified of an imminent handoff. In order to do so, the system may engage with the driver in one or more of several possible manners. For example, the system may engage in a verbal manner with the driver. For example, text with correct semantics and syntax may be built by a natural language generation engine and then transformed into synthetic speech audio by a text-to-speech engine to produce a verbal message describing the handoff. As another example, the system may engage physically with the driver. For example, a motor installed on the driver's seat or steering wheel may cause the seat or steering wheel to vibrate vigorously taking into account the safety of the driver so as to not startle the driver and result in an accident. In other embodiments, the system may engage with the driver in any suitable manner to communicate the handoff.

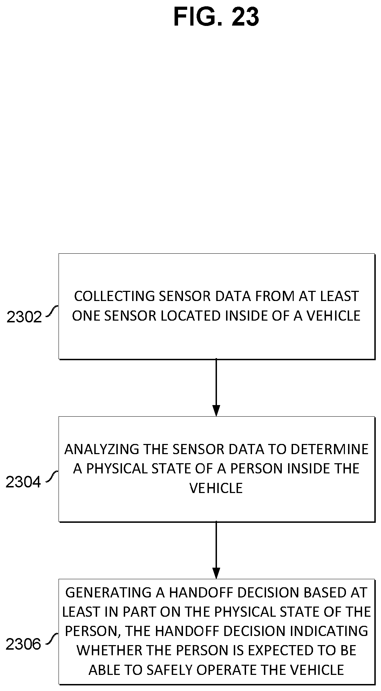

FIG. 23 depicts a flow for generating a handoff decision in accordance with certain embodiments. At 2302, sensor data is collected from at least one sensor located inside of a vehicle. At 2304, the sensor data is analyzed to determine a physical state of a person inside the vehicle. At 2306, a handoff decision is generated based at least in part on the physical state of the person, the handoff decision indicating whether the person is expected to be able to safely operate the vehicle.

As discussed herein, some autonomous driving systems may be equipped with functionality to support transfer of control from the autonomous vehicle to a human user in the vehicle or at a remote location (e.g., in a remote valet application). In some implementations, an autonomous driving system may adopt a logic based framework for smooth transfer of control from passengers (EGO) to autonomous (agent) cars and vice-versa under different conditions and situations, with the objective of enhancing both passenger and road safety. At least some aspects of this framework may be parallelized as implemented on hardware of autonomous driving system (e.g., through a FPGA, a Hadoop cluster, etc.).

For instance, an example framework may consider the different situations under which it is safer for either the autonomous vehicle or a human driver to take control of the vehicle and to suggest mechanisms to implement these control requests between the two parties. As an example, there may be conditions where the autonomous vehicle may want to regain control of the vehicle for safer driving. The autonomous vehicle may be equipped with cameras or other internal sensors (e.g., microphones) that may be used to sense the awareness state of the driver (e.g., determine whether the driver is distracted by a phone call, or feeling sleepy/drowsy) and determine whether to takeover control based on the driver's awareness. The autonomous vehicle may include a mechanism to analyze sensor data (e.g., analytics done on the camera and microphone data from inside the car), and request and take over control from the driver if the driver's awareness level is low, or the driver is otherwise deemed unsafe (e.g., drunken driving, hands free driving, sleeping behind the wheels, texting and driving, reckless driving, etc.), or if the autonomous vehicle senses any abnormal activity in the car (e.g., a fight, or scream, or other unsafe driving behavior by the human driver or passengers). In this manner, safety of the people both inside and outside the autonomous vehicle may be enhanced.

In some implementations, an authentication-based (e.g., using a biometric) command control may be utilized to prevent unauthorized use of the autonomous car. As an example, in some embodiments, when an autonomous vehicle is stolen or falls under wrong hands, the autonomous vehicle may be able to detect this scenario and lock itself from being controlled. For instance, an authentication mechanism may be included in the autonomous vehicle that uses biometrics (e.g., fingerprints, voice and facial recognition, driver's license etc.) to authenticate a user requesting control of the autonomous vehicle. These mechanisms may prevent unauthenticated use of the autonomous vehicle. In some cases, use of the autonomous vehicle or aspects thereof may be provided based on different permission levels. For example, one user may be able to fully control the car manually anywhere, while another user may only be able to control the car in a particular geo-fenced location. As another example, in some embodiments, a passenger may request control of the autonomous vehicle when certain situations are encountered, such as very crowded roads, bad weather, broken sensors (e.g., cameras, LIDAR, radar, etc.), etc. In response to the request, the autonomous vehicle may authenticate the user based on one or more of the user's biometric, and if authenticated, may pass control of the autonomous vehicle to the user. As another example, in some embodiments, when an entity/user (e.g., law enforcement, first responder, government official, etc.) wishes to control the autonomous vehicle remotely, the autonomous vehicle may validate the user prior to transferring control to the entity/user.

In some embodiments, control of an autonomous vehicle may be crowdsourced to multiple surrounding cars (including law enforcement vehicles) or infrastructure-based sensors/controllers, for example, in an instance where surrounding autonomous vehicles believe the autonomous vehicle is driving dangerously or not within the acceptable limits of the other cars' behavioral models. In such instances, the entity/entities requesting control may be authenticated, such as, through biometrics for people requesting control or by digital security information (e.g., digital certificates) for autonomous vehicles/infrastructure sensors.

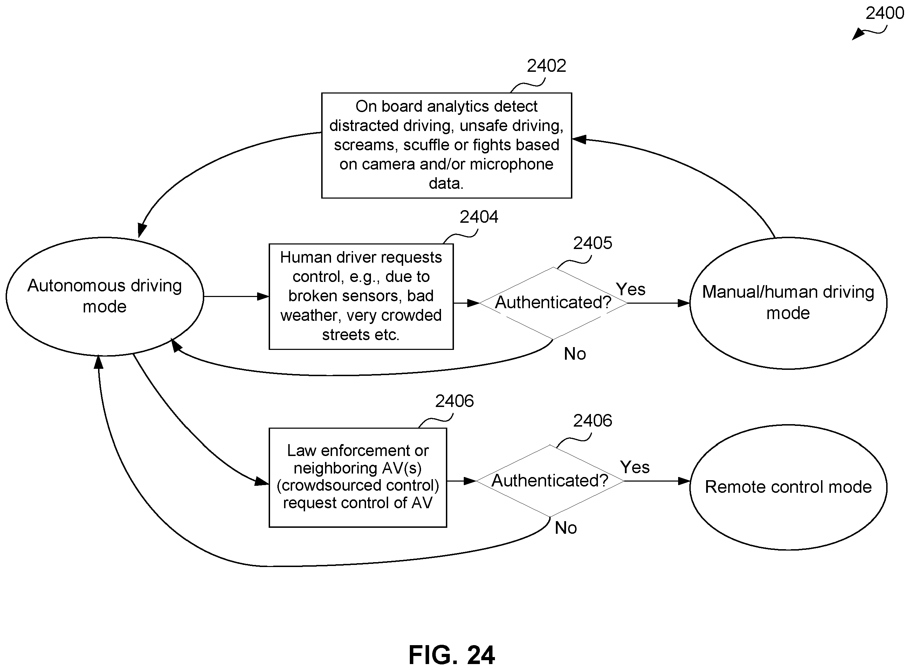

FIG. 24 illustrates a high-level block diagram of the above framework in accordance with at least one embodiment. For instance, in scenario 2402, the autonomous vehicle is operating in the human-driven/manual mode of operation when the autonomous vehicle detects (e.g., via camera or microphone data from inside the autonomous vehicle) unsafe driving conditions (e.g., those listed in FIG. 24 or other unsafe conditions) and accordingly reverts control back to the autonomous vehicle to proceed in the autonomous driving mode. In this scenario, the autonomous vehicle may present a request to the driver to regain control of the vehicle before regaining control.

In scenario 2404, a human driver requests control of the autonomous vehicle, such as in response to the driver identifying a situation (e.g., those listed in FIG. 24 or others) in which the driver does not feel comfortable proceeding in the autonomous mode of operation. The autonomous vehicle may initiate an authenticate request at 2405 to authenticate the human driver, e.g., using biometrics or other authentication methods, in response, and on valid authentication, may pass control from the autonomous vehicle to the human driver (otherwise, the autonomous vehicle will retain control).

In scenario, 2406, a law enforcement officer or neighboring autonomous vehicle(s) may request control of the autonomous vehicle, e.g., due to observed unsafe driving by the autonomous vehicle, due to the autonomous vehicle being reported stolen, due to needing to move the autonomous vehicle for crowd/road control purposes, etc. The autonomous vehicle may initiate an authenticate request at 2407 to authenticate the requesting person/entity in response, and on valid authentication, may pass control from the autonomous vehicle to the officer/neighboring autonomous vehicle(s) (otherwise, the autonomous vehicle will retain control).

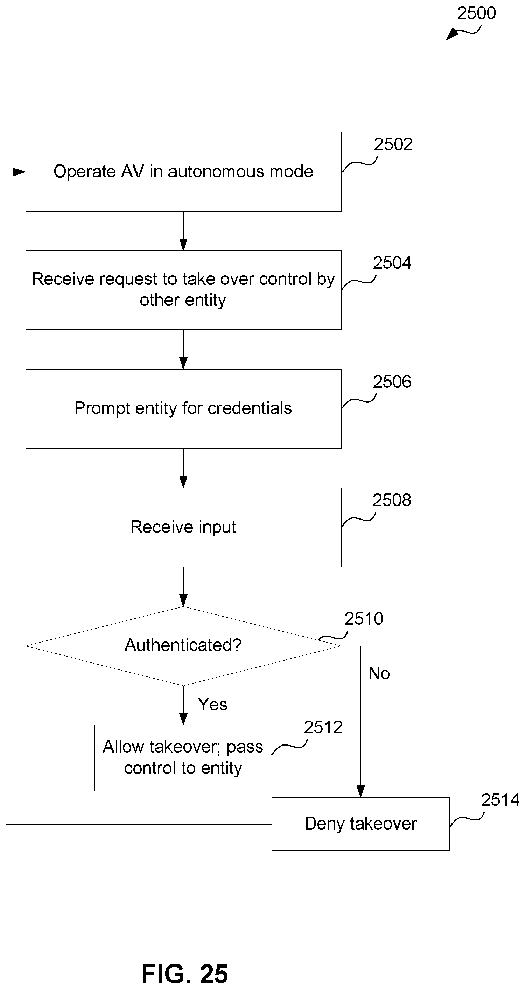

FIG. 25 is a diagram of an example process of controlling takeovers of an autonomous vehicle in accordance with at least one embodiment. Operations in the example process may be performed by aspects or components of an autonomous vehicle. The example process 2500 may include additional or different operations, and the operations may be performed in the order shown or in another order. In some cases, one or more of the operations shown in FIG. 25 are implemented as processes that include multiple operations, sub-processes, or other types of routines. In some cases, operations can be combined, performed in another order, performed in parallel, iterated, or otherwise repeated or performed another manner.

At 2502, an autonomous vehicle is operated in autonomous mode, whereby the autonomous vehicle controls many or all aspects of the operation of the autonomous vehicle.

At 2504, the autonomous vehicle receives a request from another entity to take over control of the autonomous vehicle. The entity may include a human passenger/driver of the autonomous vehicle, a person remote from the autonomous vehicle (e.g., law enforcement or government official), or another autonomous vehicle or multiple autonomous vehicles nearby the autonomous vehicle (e.g., crowdsourced control).

At 2506, the autonomous vehicle prompts the entity for credentials to authenticate the entity requesting control. The prompt may include a prompt for a biometric, such as a fingerprint, voice sample for voice recognition, face sample for facial recognition, or another type of biometric. The prompt may include a prompt for other types of credentials, such as a username, password, etc.

At 2508, the autonomous vehicle receives input from the requesting entity, and at 2510, determines whether the entity is authenticated based on the input received. If the entity is authenticated, then the autonomous vehicle allows the takeover and passes control to the requesting entity at 2512. If the entity is not authenticated based on the input, then the autonomous vehicle denies the takeover request at 2514 and continues to operate in the autonomous mode of operation.

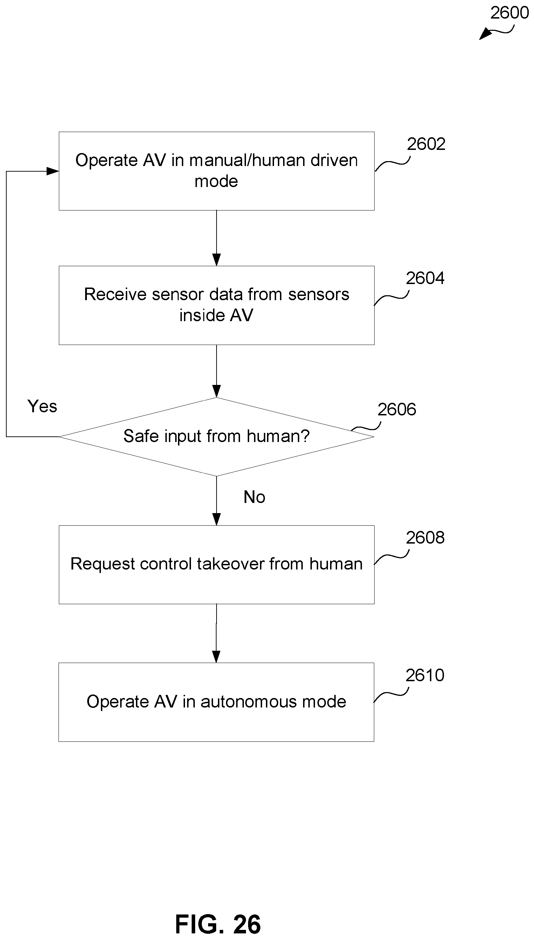

FIG. 26 is a diagram of another example process of controlling takeovers of an autonomous vehicle in accordance with at least one embodiment. Operations in the example process may be performed by aspects or components of an autonomous vehicle. The example process 2600 may include additional or different operations, and the operations may be performed in the order shown or in another order. In some cases, one or more of the operations shown in FIG. 26 are implemented as processes that include multiple operations, sub-processes, or other types of routines. In some cases, operations can be combined, performed in another order, performed in parallel, iterated, or otherwise repeated or performed another manner.

At 2602, an autonomous vehicle is operated in a manual/human driven mode of operation, whereby a human (either inside the autonomous vehicle or remote from the autonomous vehicle) controls one or more aspects of operation of the autonomous vehicle.

At 2604, the autonomous vehicle receives sensor data from one or more sensors located inside the autonomous vehicle, and at 2606 analyzes the sensor data to determine whether the input from the human operator is safe. If the input is determined to be safe, the autonomous vehicle continues to operate in the manual mode of operation. If the input is determined to be unsafe, then the autonomous vehicle requests a control takeover from the human operator at 2608 and operates the autonomous vehicle in the autonomous mode of operation at 2610.

Moving from Level 2 ("L2" or "L2+") autonomous vehicles to Level 5 ("L5") autonomous vehicles with full autonomy may take several years and the autonomous vehicle industry may observe progressive transition of responsibilities from the human-driver role until reaching the state of full autonomy (without driver) anywhere and everywhere. Implementing safe takeovers from machine control (autonomous mode) to human control (human-driven mode) is critical in this transition phase, but comes with several challenges. For example, one of the potential challenges is controlling the random intervention from the human driver that occurs without request from the autonomous system. Another challenge arises from event-driven interventions. Three types of takeovers that can occur in autonomous vehicles include:

Vehicle Requested Take over: When the vehicle requests the driver to takeover and pass from autonomous mode to human-driven mode. This may happen, in some cases, when the autonomous vehicle faces a new situation for its perception system, such as when there is some uncertainty of the best decision, or when the vehicle is coming out of a geo-fenced region. The general approach for requesting human takeover is through warning the driver through one or more ways (e.g., messages popping-up in the dash board, beeps, or vibrations in steering wheel). While the human driver is accommodating the takeover, some misses in the takeover may occur due to reaction time of human that takes longer than expected, lack of concentration by the human, or another reason.

Random Take-over by Human Driver: A possible takeover can happen by the human-driver randomly (e.g., without request from the vehicle) and for unpredicted reasons. For example, the human driver may be distracted or may be awakened from an unintended sleep react inappropriately (take control the wheel quickly without full awareness). As another example, the human driver may be in a rush (e.g., to catch-up to a flight or an important event) an unsatisfied with the vehicle speed in autonomous mode, and so he may take over control to speed up. These types of random takeovers may be undesirable as it would not be feasible to put driving rules/policies in place for such unpredicted takeovers, and the random takeover itself may lead to accidents/crashes.

Event-driven Take-Over by Human: Another possible takeover can happen by the human due to unpredicted events. For example, the human driver may feel a sudden need to get out of the car (e.g., due to claustrophobia, feeling sick, etc.). As another example, a passenger riding with the human-driver may get into a sudden high-risk scenario and the human-driver may take over to stop the car. As another example, a human driver may feel uncomfortable with the road being travelled (e.g., dark and unknown road), triggering the need to take control to feel more comfortable. These types of takeovers may be undesirable as they can disturb the autonomous driving mode in an unpredicted manner, and the takeovers themselves may lead to accidents/crashes. Similar to the previous case, this type of takeover is also undesirable as it would not be feasible to put driving rules/policies for such unpredicted takeovers and the takeover that is driven by unpredicted events is not likely to be safe.

Of these types, the Random and Event-Driven takeovers may be considered as unsafe, and accordingly, autonomous driving systems may be specifically configured to detect and control these types of takeovers, which may allow for safer driving and avoidance of unpredictable behavior during the autonomous driving mode. In certain embodiments, to mitigate these potentially unsafe takeover situations:
- The autonomous driving perception phase (e.g., as implemented in in the in-vehicle perception software stack) may be expanded to include a software module for unsafe takeover detection in real-time;
- The autonomous driving Acting phase (e.g., vehicle control software and hardware implemented in the in vehicle system) may be expanded to include a software module for mitigation of the detected unsafe takeover in real-time
- The autonomous driving Plan Phase (e.g., route planning subsystem(s)) may be expanded, as a mean of execution to the mitigation, to include consideration of potential reroutes or other adjustments to the autonomous driving mode to avoid passengers or drivers being uncomfortable.

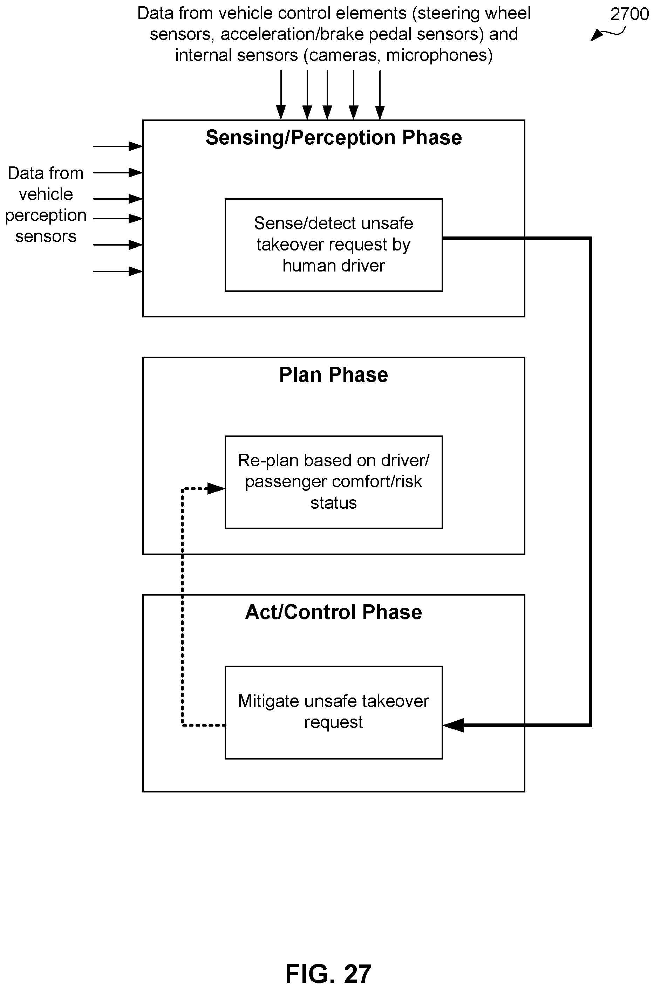

FIG. 27 is a diagram of an example perception, plan, and act autonomous driving pipeline 2800 for an autonomous vehicle in accordance with at least one embodiment. In particular, FIG. 27 gives an overview of certain considerations in autonomous vehicle perception and control to detect and mitigate, in real-time, potentially unsafe takeovers. Operations of the perception, plan, and act pipeline may be performed by an in-vehicle control system of the autonomous vehicle. As shown, the example perception, plan, and act pipeline includes a sensing/perception phase, a planning phase, and an act/control phase.

In the example shown, the control system receives sensor data from a plurality of sensors coupled to the autonomous vehicle, including vehicle perception sensors (e.g., camera(s), LIDAR, etc.) and vehicle control elements (e.g., steering wheel sensor, brake/acceleration pedal sensors, internal camera(s), internal microphones, etc.). The control system uses the sensor data in the sensing/perception phase to detect an unsafe takeover request by a human driver of the autonomous vehicle. Detection of unsafe takeovers may be based on at least a portion of the sensor data received. For example, unsafe takeovers may be detected based on sensors coupled to the accelerator pedal, brake pedal, and/or steering wheel to sense an act of takeover. In some cases, cameras and/or microphone(s) inside the car may be used (e.g., with artificial intelligence) to detect that a driver's action(s) are to take over control of the autonomous vehicle. In some embodiments, data from the pedal/steering wheel sensors and from in vehicle cameras may be correlated to detect a potential takeover request by the human, and to determine whether the actions are actually a requested takeover or not. For instance, a suddenly-awakened or distracted driver may actuate one or more of the brake, accelerator, or steering wheel while not intending to initiate a random takeover of control.

After detection that the requested takeover is unsafe, the control system mitigates the unsafe takeover request. This can include, for example, blocking the takeover request so that the human driver may not be allowed to control the autonomous vehicle. For instance, the steering wheel, brake actuator/pedal, and accelerator actuator/pedal may be locked during the autonomous driving mode and may be unlocked only upon the autonomous vehicle requesting a takeover by the human (which may be in response to detection that a random takeover request is safe, as described below). Further, the doors may remain locked in response to an unsafe takeover request, since, in some cases, door unlocks may only be enabled when the vehicle is in a stopped state (not moving).

In some cases, mitigation of the unsafe takeover request may include modifying the autonomous driving mode to match the driver/passenger desires. For instance, the control system may re-plan a route of the autonomous vehicle (e.g., direction, speed, etc.) to guarantee comfort of the driver/passenger and minimize risk for the passenger/driver introduced by the takeover request. In some cases, the control system may prompt the human driver and/or passengers for input in response to the takeover request (e.g., using a voice prompt (for voice recognition enabled autonomous vehicles) and/or text prompt), and may modify one or more aspects of the autonomous mode based on the input received from the driver/passenger.

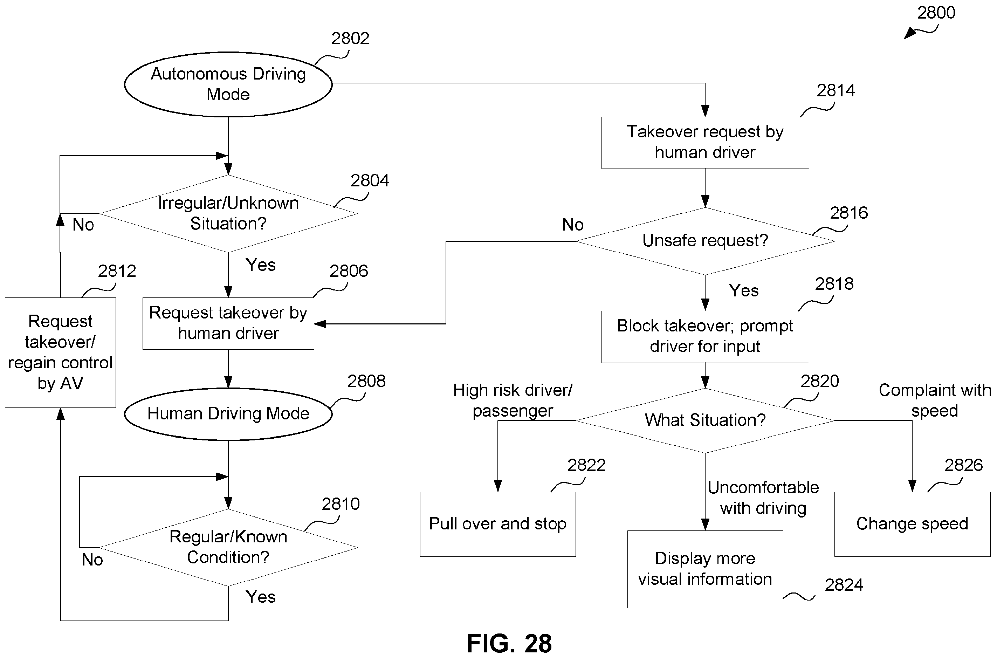

FIG. 28 is a diagram of an example process of controlling takeover requests by human drivers of an autonomous vehicle in accordance with at least one embodiment. In particular, FIG. 28 illustrates an unsafe takeover detection and mitigation scheme. Operations in the example process may be performed by components of an autonomous vehicle (e.g., a control system of an autonomous vehicle). The example process 2800 may include additional or different operations, and the operations may be performed in the order shown or in another order. In some cases, one or more of the operations shown in FIG. 28 are implemented as processes that include multiple operations, sub-processes, or other types of routines. In some cases, operations can be combined, performed in another order, performed in parallel, iterated, or otherwise repeated or performed another manner.

At 2802, an autonomous vehicle is operating in an autonomous driving mode. For example, a control system of the autonomous vehicle may be controlling one or more aspects of the operation of the autonomous vehicle, such as through a perception, plan, and act pipeline. At 2804, the autonomous vehicle determines (e.g., based on sensor data passed to the control system) whether an irregular or unknown situation is encountered. If so, at 2806, the autonomous vehicle requests that the human driver takeover control of the autonomous vehicle, and at 2808, the autonomous vehicle enters and operates in a human driving mode of operation (where a human driver controls the autonomous vehicle). The autonomous vehicle may then determine, during the human driving mode of operation, at 2810, whether a regular/known condition is encountered. If so, the autonomous vehicle may request a takeover of control or regain control of the autonomous vehicle at 2812 and may re-enter the autonomous mode of operation. If no irregular/unknown situation is encountered at 2804, the autonomous vehicle continues operation in the autonomous driving mode, whereby it may continuously determine whether it encounters an irregular/unknown situation.

At 2814, the autonomous vehicle detects a takeover request by a human driver. The takeover request may be based on sensor data from one or more sensors coupled to the autonomous vehicle, which may include sensors located inside the autonomous vehicle (e.g., sensors coupled to the steering wheel, brake actuator, accelerator actuator, or internal camera(s) or microphone(s)).

At 2816, the autonomous vehicle determines whether the takeover request is unsafe. If so, the autonomous vehicle may mitigate the unsafe takeover request in response. For example, at 2818, the autonomous vehicle may block the takeover request. In addition, the autonomous vehicle may prompt the driver for input (e.g., enable a conversation with the driver using a voice recognition software) at 2818 to understand more about the cause for takeover request or the irregular situation.

At 2820, based on input received from the driver, the autonomous vehicle determines what the situation is with the driver or the reason for the driver initiating the takeover request. If, for example, the situation is identified to be a risk for a driver or passenger (e.g., screaming, unsafe behavior, etc.), then re-planning may need to be considered for the route, and so the autonomous vehicle may modify the autonomous driving mode to pull over to stop at 2822. If, for example, the situation is identified to be discomfort with the autonomous driving mode for the driver and/or passenger (e.g., an unknown route/road, very dark environment, etc.), then the autonomous vehicle may modify the autonomous driving mode to provide more visual information to the driver/passenger (e.g., display (additional) route details; the autonomous vehicle may also adjust in-vehicle light to allow the driver to see the additional information) may be displayed at 2824 to help the driver and/or passenger attain more comfort with the autonomous driving mode. If, for example, situation is identified to be a complaint about speed (e.g., the driver would like the autonomous vehicle to slow down or speed up), then the planning phase may consider another speed and/or route and the autonomous vehicle may modify the autonomous driving mode to change the speed (or route). Other mitigation tactics may be employed in response to the driver input received.

One of the potential benefits of autonomous vehicles is the possibility of a much safer driving environment. However, despite best efforts to create an error-free system for automation, mechanical, physical, and/or electronic damage caused by wear and tear on vehicles is inevitable. Such damage may cause a malfunction of the autonomous vehicle.

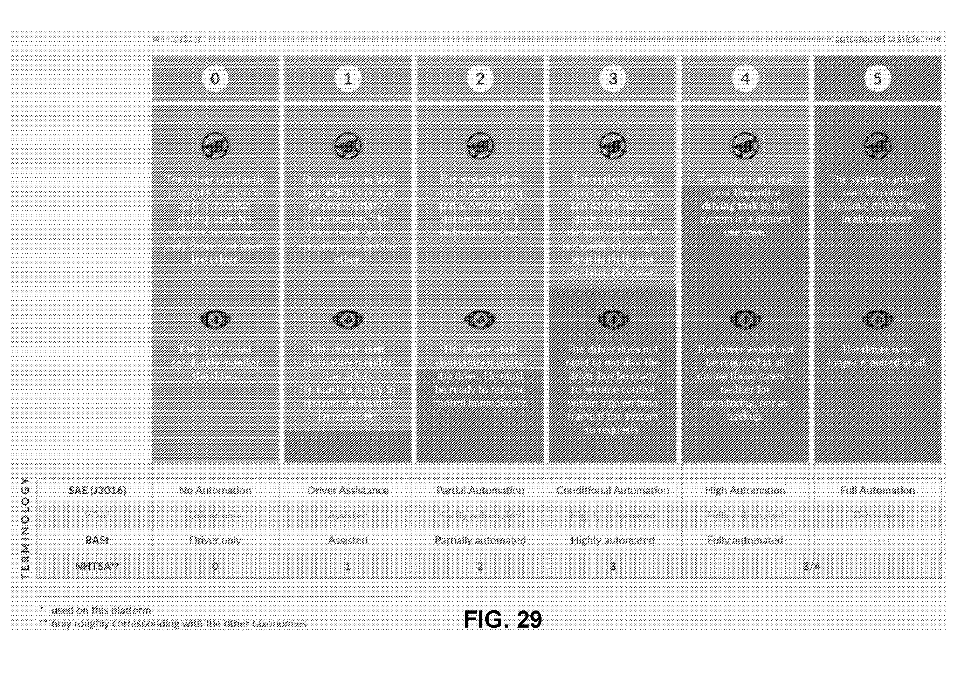

Inevitably, when damage occurs to an autonomous vehicle, particularly to its sensors, the function of the vehicle can be diminished. The level of automation of an autonomous vehicle is defined relative to the amount of participation that is required from the human driver, as shown in FIG. 29. When an autonomous vehicle encounters problems, a human passenger (or a remote monitoring entity) may be required to take over driving control or the vehicle may cease operation.

Furthermore, when there are problems with a vehicle, whether the problems are sensor issues, processor or memory malfunction or any other hardware/software issues, the chances of an accident occurring increase. This can also be true if a human driver is forced to takeover control of the vehicle, especially if that driver is not prepared to takeover. The ability to track what is happening on a vehicle could prove to be invaluable to many parties. For example, insurance companies, the driver, or manufacturer of the vehicle could benefit with respect to various liability issues. Furthermore, the designers of the vehicle could benefit from an understanding of what happens in critical situations.

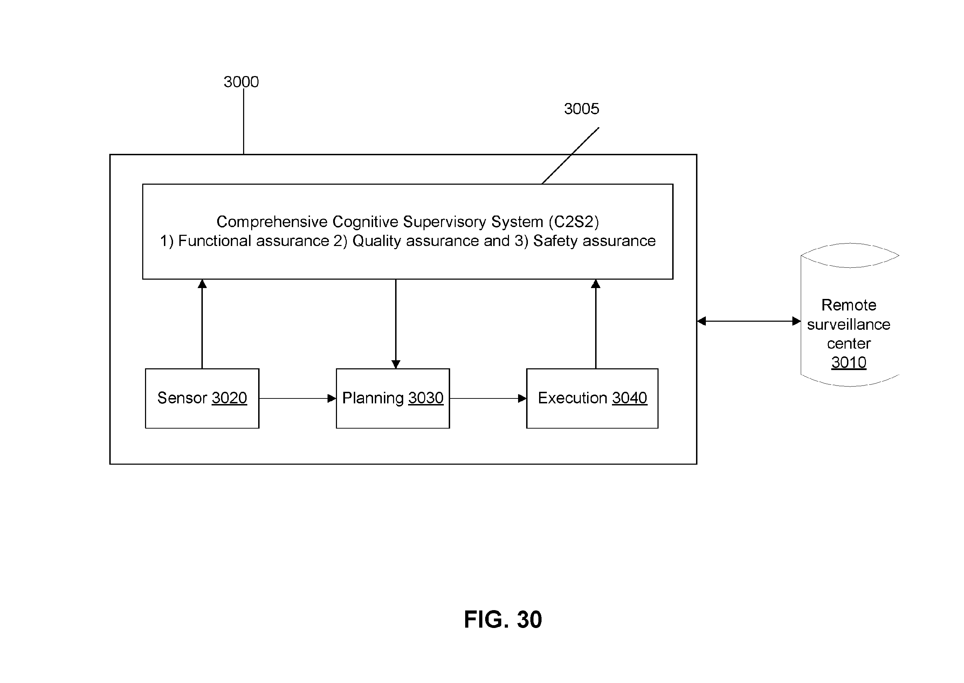

A comprehensive cognitive supervisory system 3000 is illustrated in FIG. 30. System 3000 is a computing system (such as a subsystem or implementation of the computing systems discussed herein) configured with logic to supervise and adjust the level of autonomy of a vehicle based on the continuous analysis of the driving conditions and the accuracy of the autonomous vehicle, particularly the sensing, planning, and acting layers of the autonomous vehicle. System 3000 can comprise a multi-level smart mechanism to handle problems that may arise with an autonomous vehicle by monitoring, alerting, and re-engaging a human driver and performing a safe handoff of driving control to the human driver. System 3000 can also be configured to allow remote supervision and/or control of the autonomous vehicle. System 3000 can also be considered a system to reduce the autonomy level of an autonomous vehicle, thereby relying more on a human driver in situations of sensor or component failure of the vehicle or other situations that the vehicle cannot handle.

System 3000 can monitor the level of autonomy in an autonomous vehicle. Furthermore, the system can determine whether the autonomy level is correct, and, if not, can change the autonomy level of the vehicle. In addition, if a change is required, system 3000 can alert the driver of the change. The system can also alert a remote surveillance system 3010 of the change.

The comprehensive cognitive supervisory system (C2S2) 3005 may sit on top of (e.g., may supervise) the regular automation systems of an autonomous vehicle. In one example system 3005 sits on top of the sensor (3020), planning (3030), and execution (3040) systems of the vehicle. It should be noted that, in some implementations, the C2S2 can sit on top of more or cofunction with in-vehicle computing systems of the autonomous vehicle. Particularly, the C2S2 can sit on top of any system that may affect the autonomy level of the vehicle. The system 3005 may also record the history of the autonomous driving level and the sensors health monitoring. The collected data may be very concise and accessible offline, so that it can be referred to in case of any malfunction or accident.

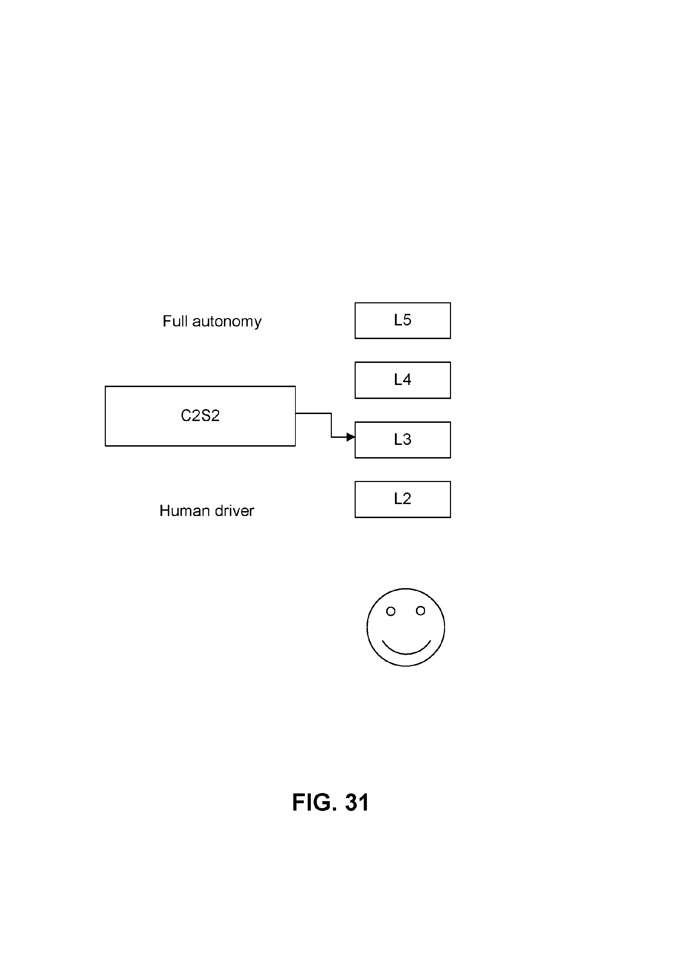

In some examples, C2S2 3005 includes logic executable to monitor the level of autonomy in the car and comprises three main modules: functional assurance, quality assurance, and safety assurance. Each of these main modules can have a set of predefined Key Performance Indicators (KPI) to accept or reject the current state of autonomy set for the vehicle. If the C2S2 determines that the level of autonomy is not acceptable due to any of the modules that are being monitored, the C2S2 can have the ability to change the autonomy level of the vehicle. Furthermore, the system will notify the human driver of the change. The ability to change the autonomy level can be very beneficial. For example, instead of completely turning off the autonomy of the vehicle if there is a sensor failure of some sort, the C2S2 can determine that the autonomy level can be lowered, as opposed to removing autonomy completely. This may mean that the vehicle goes from an L4 to an L3 level (e.g., as depicted in FIG. 31). Such a change may not require the human driver to engage the controls of the vehicle, but in some embodiments the change in autonomy may be communicated to the driver to allow the driver to pay closer attention in case he or she is needed.

Continuing with the example of FIG. 30, C2S2 3005 will evaluate the KPI of each of the three main blocks (functional assurance, quality assurance, and safety assurance) of the three systems (sensor 3020, planning 3030, and execution 3040). If the C2S2 3005 detects any problem with the systems, it can evaluate whether the autonomy level needs to be changed. Not every problem may require a change in autonomy level. For example, the vehicle may have a problem with one of the sensors. However, if this sensor produces repetitive data with respect to another sensor, the vehicle may not lose its ability to maintain its current level of autonomy.

In other examples, however, an issue with a sensor can cause a problem. Even though a manufacturer has introduced a particular vehicle capable of an L4 level of autonomy, such a designation is conditional in practice and the autonomous capability of the vehicle may vary over time. For example, when a sensor goes out of order or passenger safety gets jeopardized in scenarios like sensor/component failure, the autonomy level may have to change. C2S2 3005 can change the level of autonomy and inform both the driver and the remote surveillance system (3010).

In addition to the monitoring and changing of the autonomy level, C2S2 3005 can also report actions back to the remote surveillance system 3010. Not only can C2S2 3005 report an autonomy level change, but C2S2 3005 can report any important data to the remote system 3010. For example, in situations where there is a necessary autonomy level change, or even in situations in which there is an accident involving an autonomous vehicle, a complete record of the level change and data relating to the vehicles movements, planning, autonomy level, etc. can be sent to and stored by the surveillance system 3010. Such data can be useful in determining fault of accidents, data for improvements, etc. It is contemplated that any data that can be captured can be sent to the remote surveillance system 3010, if so desired.

The system described in FIG. 30 is merely representative of modules that may occur in particular embodiments. Other embodiments may comprise additional modules not specifically mentioned herein. In addition, not every module may be necessary, or modules may be combined in other embodiments.

Although it may be ideal to provide a completely human free driving experience with autonomous vehicles, depending on the level of autonomy in an autonomous vehicle, it may be necessary to have some human driver interaction while the vehicle is in operation. This is especially the case in an emergency, when it may be necessary for a human driver to take over the controls. In such situations, a typical handoff to a human driver, if successful, may take an average of about three seconds. However, humans are often inattentive, easily distracted, and often slow to respond to certain situations. As such, it can be challenging to keep a driver engaged while the vehicle is operating in autonomous node in order to achieve a quick and safe handoff.

Accordingly, at least in some situations, a person may be unreliable as a backup in the context of a handoff in an autonomous vehicle. If a person cannot react quickly enough, a potentially dangerous situation can be made even worse by an inattentive driver that can't react in time. Various implementations of the above systems may provide for a safer way to conduct a handoff between an autonomous driver and human driver.

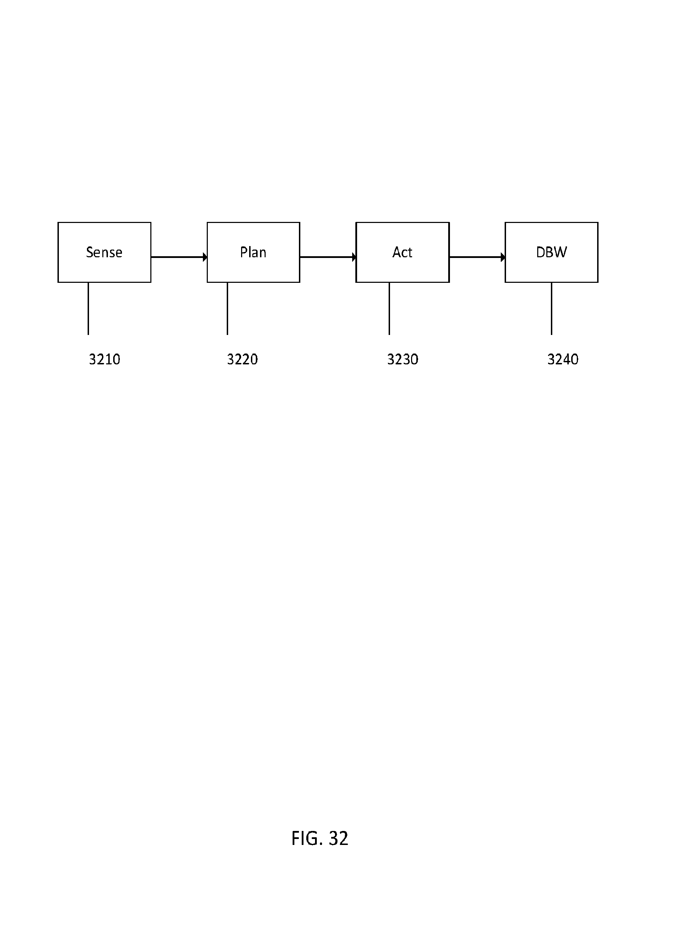

FIG. 32 illustrates an example of an architectural flow of data of an autonomous vehicle operating at an L4 autonomy level. The example flow of FIG. 32 includes a sense module 3210, a plan module 3220, an act module 3230, and a driver by wire ("DBW") module 3240. As an example, the sense module 3210 can be responsible for processing the data from various perception sensors (e.g., cameras, radar, LIDAR, GPS, etc.). The sense module 3210 may have any suitable characteristics of sensors 225. The data output by the sense module, which can represent the vehicle's motion parameters (e.g., speed, position, orientation, etc.), along with data representing objects around the vehicle, can be passed to the plan module 3220 (which may have any suitable characteristics of path planner modules (e.g., 242), such as discussed elsewhere herein). The plan module 3220 can make relevant decisions for actions to be taken on the road while driving based on the current situation. The decision made by the plan module can be communicated to the act module 3230, which can comprise a controller, to generate specific vehicle commands to be given to the DBW module 3240. Such commands can include, for example, a specific steering angle and/or commands for acceleration. These commands are then acted out by the DBW module. It should be noted that the above flow is merely exemplary and that other flows may exist. In addition, it is possible that different levels of intelligence exist for different vehicles. For example, an L2 rated vehicle would have a different level of intelligence than an L4 rated vehicle.

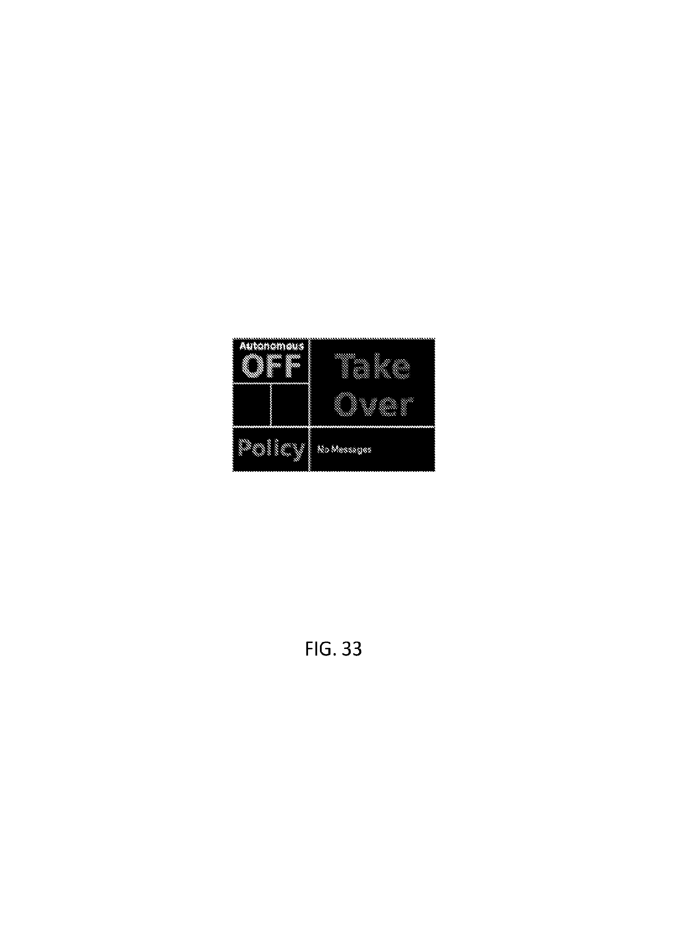

Currently in a situation in which there is a failure at one of the module levels of the example of FIG. 32, or if the planning algorithm of a vehicle is unable to take action in certain driving scenarios, the vehicle automatically will send a signal to the driver indicating that the driver is needed to take over. This signal can be visual, audio, or a combination thereof. FIG. 33 illustrates an example of a video signal to the driver.

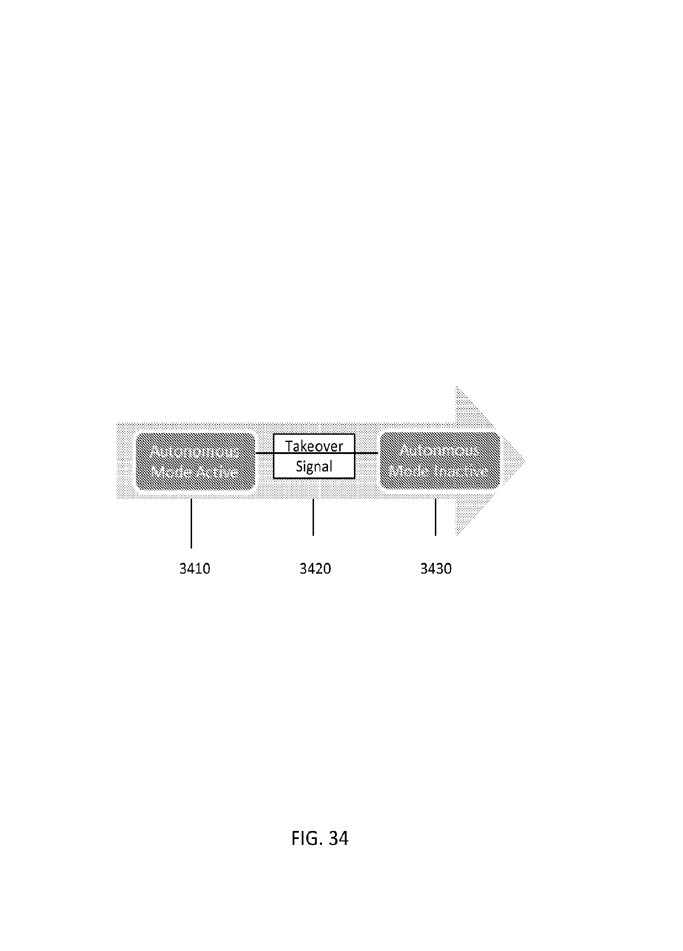

FIG. 34 illustrates of a flow of an example autonomous vehicle handoff situation. As can be seen, at the start of the flow, the vehicle may be in autonomous mode at 3410. Once a problem is noticed and the autonomy level needs to change, a takeover signal is sent at 3420. Finally, autonomous mode will be deactivated at 3430.

A handoff process that is not abrupt and sudden will help the driver engage the vehicle when necessary. In addition, it may not be necessary for the vehicle to become completely non-autonomous if there is a sensor breakdown. It may be safe to merely lower the autonomy level. For example, for an autonomous vehicle operating in L4 mode, it may not be necessary for the vehicle to handoff directly to a human driver and shutoff its autonomy. A planning algorithm (e.g., performed by planning module 3220) is dependent on multiple sensor inputs. The reliability of the autonomous system is defined by the precision with which a planning algorithm can make decisions based on these sensor inputs. Every system has its set of critical and non-critical sensor inputs which defines the confidence level of decisions being taken by planning module. An L4 level vehicle can no longer operate with the same confidence level if a subset of its sensors (primarily redundant sensors) stop operating. In an example situation, the vehicle may have simply downgraded from a L4 to L3 level of confidence, which demands a greater level of attention from the driver. However, it may not be necessary for the driver to take over completely and for the vehicle to shut off the autonomy systems.

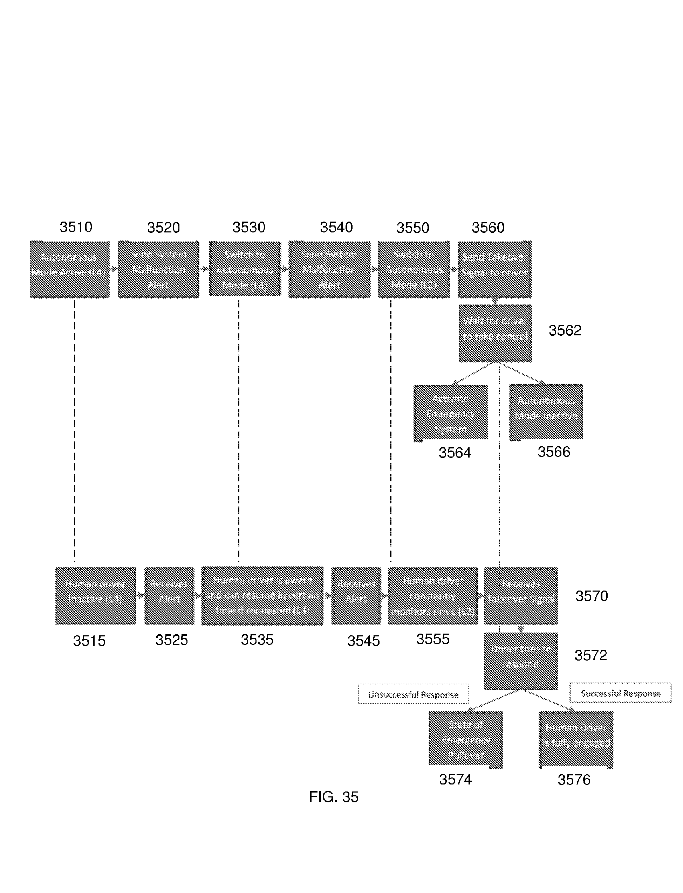

FIG. 35 illustrates an example of a flow for handing off control of an autonomous vehicle to a human driver. In addition, FIG. 35 illustrates the coordination between human reactions and the autonomous vehicle's actions. This coordination is illustrated by dotted lines. The example flow of FIG. 35 can take place in the plan module 3220 of an autonomous vehicle. It should be noted, however, that the flow of FIG. 35 may be performed by any module or combinations of a computing system, including those not mentioned herein.

The example of FIG. 35 shows initially (3510) that the autonomous vehicle is operating normally in its autonomous mode, at an L4 level for this example. As a result, the human driver is inactive (3515). This may be especially true for a high autonomy level of an autonomous vehicle.

When a problem occurs, the vehicle may send out a system malfunction alert (3520). Accordingly, the human driver will receive the alert (3525). This alert can be visual, audio, tactic, or any other type of alert.

If it is determined that the malfunction is not serious enough to need immediate driver interaction, the vehicle can switch to a lower autonomous mode (3530). In this example, the vehicle switched from L4 to L3. The human driver will accordingly be aware of this transition (e.g., based on the alert received at 3525) and may pay attention to driving conditions and can gain control of the vehicle in a certain amount of time if needed (3535). In some examples, the vehicle can confirm driver engagement though the use of certain sensors and monitoring. For example, the vehicle can use gaze monitoring, haptic feedback, audio feedback, etc.

If there is another error, the vehicle can once again send out a system malfunction alert (3540). Once again, the driver will receive that alert after it is sent (3545).

Next, if it is once again determined that the level of autonomy can be reduced again (from L3 to L2 in this example), the vehicle will lower its autonomy level again (3550). Now, in a corresponding move, the driver starts paying even closer attention (3555). In this example, the human driver will constantly pay attention because the car is in L2 mode.

If the car once again needs to lower its autonomy level, this time to L1, the driver will need to take over. Therefore, the vehicle may send out a takeover signal (3560). In a corresponding move, the driver may receive the takeover signal (3570).

Now, the vehicle may confirm whether the driver will be able to take control of the vehicle. Therefore, the vehicle will wait for the driver to take control (3562). As mentioned earlier, the vehicle can use monitoring and sensors to determine the driver's readiness state, in addition to monitoring whether the driver is actually taking control.

After a period of time, if the vehicle determines that the driver has not taken control (or is unable to safely take control), an emergency system is activated (3564). This can include performance of different actions depending on the situation. For example, it may be necessary for the vehicle to pull over. In some situations, it may not be safe to pull over and stop, so the vehicle may continue for a period of time. Therefore, the vehicle may slow down and/or pull over to one side of the road until is safe to stop. Once the emergency system is activated, correspondingly, the state of emergency action will be completed (3574).

If, however, the driver is able to take over and handoff is successful, autonomous mode can be deactivated (3566). In a corresponding action, the driver will be fully engaged and driving the vehicle (3576). As can be seen, the early alerts (multiple times before handoff is necessary) allow the driver to be ready for a handoff before system failure and it becomes imperative for the driver to take over.

Depending on the level of autonomy of an autonomous vehicle, it may be necessary to have some human driver interaction while the vehicle is in operation. Even when a vehicle is normally able to operate in a completely autonomous fashion, there may be some situations (e.g., emergencies) in which it may be necessary for a human driver to take over the controls. In other situations, it may be desirable for a driver to take over the controls of an autonomous vehicle, e.g., when the human driver has a desire to drive or when there is a beneficial reason for a person to control the vehicle. However, humans are often inattentive, easily distracted, and slow to respond to certain situations. Accordingly, at least in some situations, a person may be unreliable as a backup in the context of a handoff in an autonomous vehicle. Furthermore, response times and reactions of humans can vary depending on situational contexts. For example, some people have slower reaction times than others. As another example, some people react calmly in emergency situations, while others panic.

It may be beneficial for an autonomous vehicle's handoff system and procedure to implement a personalized approach to handing off controls of the vehicle to a human. Such systems and procedures can enhance the safety and effectiveness of the handoff. This can be especially true in a level 5 autonomous vehicle, where the human driver is generally not needed. In some situations, the human driver may be sleeping or distracted, thus increasing the danger associated with a handoff. A personalized and coordinated approach to a handoff can take the human driver's attention level and/or reaction characteristics in such situations into account when planning a handoff.

In various embodiments, a personalized and coordinated approach to handoffs can be applied in both planned and unplanned handoffs in an autonomous vehicle. Although full autonomy may be desirable, real-world scenarios (such as, for example, critical sensor failure, unexpected and sudden road condition changes (e.g., flash floods), etc.) may create situations that exceed the capabilities of an autonomous vehicle.

According to embodiments herein, solutions to the handoff problem can comprise a multi-pronged approach taking into account one or more of the driver's activity, personal capability, and the target route when planning the handoff. This approach allows the system (e.g., in-vehicle processing system 210) to make a better judgement as to if and when to hand off the control of the vehicle to a human driver. In addition, various embodiments can also provide driver personalization over time and can constantly maintain contextual information references to progressively improve the hand off process.

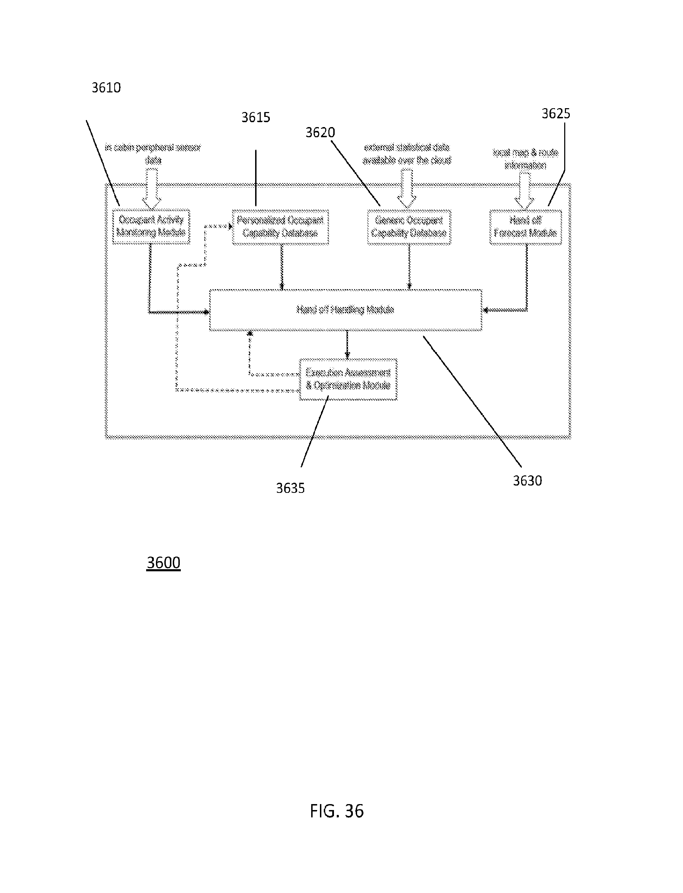

FIG. 36 illustrates an example system 3600 for the handoff of an autonomous vehicle to a human driver. The system can also be considered a system for safe, timely, and adaptive handoff of an autonomous vehicle to a human driver. In some embodiments, the various modules may be implemented by an in-vehicle processing system (e.g., 210). In other embodiments, one or more of the modules may be implemented by a cloud-based computing system (e.g., 140 or 150). System 3600 includes an occupant activity monitoring module 3610, a personalized occupant capability database 3615, a generic occupant capability database 3620, a handoff forecast module 3625, a handoff handling module 3630, and an execution assessment and optimization module 3635. System 3600 is merely exemplary and is not limited to the embodiments specifically presented herein.

The occupant activity monitoring ("OAM") module 3610 extracts information related to the human driver of an autonomous vehicle. In a particular embodiment, OAM module 3610 implements a combination of rule based, machine learning as well as deep learning methods. The OAM may determine status characteristics associated with a human driver, e.g., the direction the driver is facing (e.g., whether the person is seated facing the road or the rear of the vehicle), the positioning of the driver's seat, (e.g., the distance of the driver's seat to the steering wheel, the inclination angle of the backrest of the seat, or any other characteristics of a driver's seat relative to the steering wheel), whether the driver is awake or asleep, whether the driver is engaged in another activity (e.g., reading, watching a video, playing games, etc.), or other status characteristic. The determinations made by the OAM module 3610 listed here are merely exemplary and the OAM can be used to determine any characteristics of the driver that are deemed relevant to the driver's ability to take full or partial control of the vehicle.

The OAM module 3610 may use data from several different sensors as input. For example, in-vehicle sensors that may provide information to OAM module 3610 include, e.g., a camera, inertial measurement unit, seat and backrest sensors, ultrasonic sensors, or biometric sensors (e.g., heart rate monitor, body temperature monitor, etc.). The data from the sensors can be in a raw format or pre-processed. The sensors listed herein are merely exemplary and any type of sensor, whether listed herein or not, can be used as a data input to the OAM module 3610.

The generic occupant capability ("GOC") database 3620 can include data related to statistical information of the characteristic of a generic driver similar to the actual driver of the autonomous vehicle. For example, the GOC database 3620 can contain information for characteristic responses for a driver that has similar characteristics (e.g., gender, age, physical fitness level) to the actual driver. Furthermore, the information stored in the database 3620 can either be global or specific to one or more particular geographic areas. In some embodiments, the GOC database 3620 can be external to the vehicle and made available to the autonomous vehicle over the cloud. The GOC database 3620 can be updated at any suitable time or interval so that handoff operation of the autonomous vehicle can be improved over time. It should be noted that DOC database 3620 can comprise more than one database.

Examples of the types of data in the GOC database can include the amount of time it takes for a characteristic driver (e.g., a person having similar characteristics, e.g., age, gender, etc. as the driver) to: respond to a prompt, rotate a seat by 180 degrees, move the seat longitudinally a certain distance, place his or her hands on a the steering wheel from resting on his or her lap, get engaged to the road when away (this can depend on the activity of the driver before being alerted to the engagement), or other suitable activity associated with a handoff. In addition, characteristics of the driver (e.g., health conditions of the driver) can be used to produce statistical data that corresponds to context of the driver's situation. For example, the database may capture information indicating that an average driver with the same lower back problem as the driver of the autonomous vehicle may take a certain amount of time on average to bring the seat to an upright position or to move the seat forward towards the steering wheel.

Besides utilizing available statistical data, machine learning models implemented by, e.g., in-vehicle processing system 210 can also be used to process raw data onboard the autonomous vehicle. In other embodiments, such machine learning models may be run on the cloud (rather than locally onboard the autonomous vehicle) and inference output may be utilized onboard the vehicle.

The personalized occupant capability ("POC") database 3615 may contain data that is similar in nature to the GOC database 3620. The POC database, however, includes driver and vehicle-specific information rather than information aggregated from multiple drivers as with the GOC database. The data in the POC database 3615 can help improve the function of system 3600 because each person will vary from the baseline established by GOC database 3620. The data in the POC database 3615 can be observed and measured over time. The POC module 3615 of system 3600 can be considered the central location that keeps track of the differences between the driver and the hypothetical driver.

In addition to driver specific information, the POC database 3615 can also contain vehicle specific information. For example, the time that a driver will turn around a seat 180 degrees may be reliant on the vehicle's technical capabilities, and the driver cannot speed up or slow down this process.

As examples, the following types of data may be stored in the POC database: the driver takes X1 seconds longer to respond to an audio prompt than the average driver; the driver takes X2 seconds less than average to rotate his seat (e.g., this may be because the vehicle has a quick turnaround operation and/or the driver responds relatively quickly), the driver is X3 seconds slower than an average driver to move his seat longitudinally, the driver is X4 seconds faster than average to place his hands on the steering wheel, and the driver is X5 seconds faster than an average driver to engage the road when awake. While these examples discuss measurements relative to the average driver, in some embodiments information stored by the POC database may include absolute measurements (e.g., the driver takes Y1 seconds on average to respond to an audio prompt, the driver takes Y2 seconds on average to rotate his seat, etc.). In addition, similar to the GOC database, the POC database can contain other characteristics of the driver that can be used to produce statistical data that may provide more context to the driver's situation. As examples, the POC databased may include information indicating how quickly the driver will move to bring his seat to an upright position or to move his seat forward due to a back injury.

The handoff forecast (HOF) module 3625 determines when a handoff may be needed. The HOF module can consider road conditions, such as, for example, accidents, overcrowded roads, public events, pedestrians, construction, etc. to determine where and when a handoff from an autonomous driver to a human driver may be needed. The HOF module can receive, e.g., local map and route information with real-time traffic, accident, hazard, and road maintenance updates. Portions or all of this information may be locally stored within the autonomous vehicle or in the cloud (and the vehicle may receive updates on such information through the cloud).

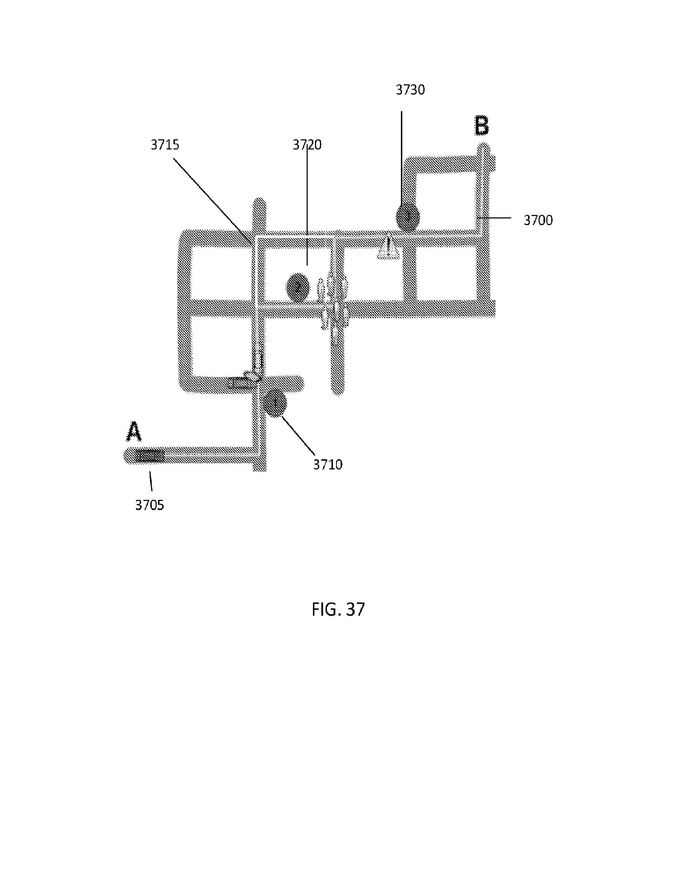

FIG. 37 illustrates an example route 3700 that vehicle 3705 is taking to get from point A to point B. Route 3700 has been selected by the navigation system of car 3705 (e.g., path planner module 242). HOF module 3625 may consider road conditions such as accidents, overcrowded road segments, and road construction sites to determine where a handoff to the human driver may be needed. In the example of FIG. 37, three areas (3710, 3720, and 3730) where such a handoff may be required have been determined. After identifying the likely handoff locations, HOF module 3625 may rank the locations based on different criteria. Examples of such criteria can include:
1 - Is there an alternative route that may be less preferable but does not require handoff to the human driver at the identified location? As an example, location 3720 may be associated with an alternative route 3715.
2 - Can the autonomous vehicle handle an identified handoff location by reducing speed and/or by intermittently stopping if needed? As an example, location 3730 has ongoing road construction that is likely to slow the traffic in a controlled and safe way.
3 - Is there any segment along the route that the autonomous vehicle will not be able to handle without human intervention? As an example, location 3710 may be such a location, since an accident may have caused serious disruption to traffic. The autonomous vehicle needs to make sure that the human driver is prepared in advance when approaching this particular location.

In various embodiments, the HOF module 3625 may determine the handoff locations along the route as well as rate their relative importance (e.g., which handoff locations are more likely to require a handoff).

Returning to FIG. 36, the handoff handling ("HOH") module 3630 may consider the handoff related information to make handoff decisions. The HOH module 3630 accepts the outputs of the OAM module 3610, the POC database 3615, the GOC database 3620, and the HOF module 3625 and makes handoff decisions based on one or more of these.

Finally, the execution assessment and optimization ("EAO") module 3635 compares the expected outcome of the handoff with the driver's actions. The results of the comparison are fed back to the POC Database 3615 and the HOH module 3630 for improving the handoff in the future. To collect the information, the EAO Module 3635 can use the following example criteria at each handoff event along the route: how long it took the driver to respond to a hand off request; whether the driver was within the expected steering range after the hand off; whether the driver's acceleration/deceleration was within the expected acceleration/deceleration range after the hand off; and how long it took the driver to engage with the road shortly after the hand off. The criteria listed here are merely exemplary, and in various embodiments not all the criteria are used or criteria not listed may be used.

Updates within the POC database 3615 allow the handoff process to consider the more personalized information according to the driver and the technical capabilities of the autonomous vehicle. As such, over time, as the number of rides in an autonomous vehicle increases, the POC database 3615 starts to differentiate itself more from the GOC database 3620.

The HOH module 3630 uses the feedback information coming from the EAO module 3635 to calculate when and where the driver has shown anomalies from typical behavior. This may be different from what the POC database 3615 stores for the driver as it is related to deviations from the expected behavior of the driver and may be considered in future handoffs. If the HOH module 3630 takes such anomalies into account for future hand offs, the road safety can be improved as the autonomous vehicle will be making the hand off decisions and the hand off execution assessments based on data that is more representative of the driver and autonomous vehicle because it is based on real world observations.

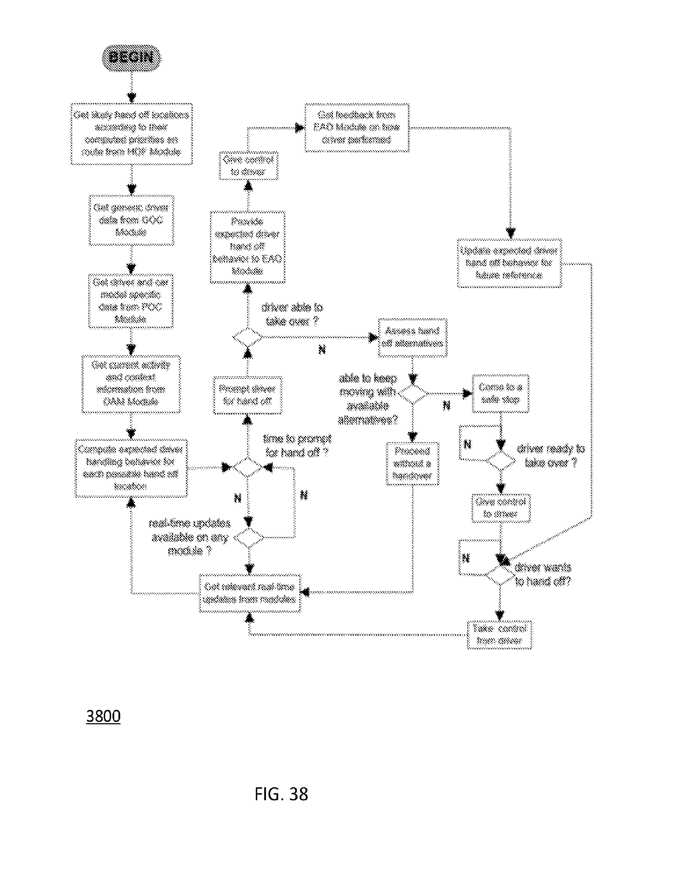

Figure 38 illustrates an example of the HOH module 3630's high level operational flow 3800. This operational flow can also be considered a method for handing off an autonomous vehicle to a human driver. Initially the method begins with obtaining the determined handoff locations from the HOF module 3625. These can be determined from the computed priorities of the route.

Next, method 3800 continues with getting the generic driving data from the GOC database 3620. It should be noted that it may not be necessary to obtain any generic driving data. For example, when there is an adequate amount of data stored in the POC database 3615 the data from the GOC database 3620 may be omitted from certain determinations. It should also be noted that it may be possible to transfer the personalized data from one location to another, such as, for example, when a driver purchases a new vehicle the information may be transferred from the old vehicle or the cloud to the new vehicle.

After obtaining the generic data (if utilized), the HOH module continues with obtaining the personalized data from the POC database 3615. It should be noted that there may be situations in which there is no personalized data, such as, for example, when the vehicle is brand new and no data has been obtained yet.

Next, method 3800 continues with obtaining data from the OAM module 3610. This data can comprise information about the driver as it relates to the driver's level of attention, activities, etc.

The HOH module then can determine the expected driver handling behavior for each of the possible handoff locations as determined by the HOF Module 3625. If the HOH module 3630 determines that it is time for a handoff, then the driver is prompted. If not, the HOH module 3630 can determine whether there are any real-time updates from any of the other modules. If there are, the update or updates can be used to redetermine the expected driver handling behavior.

Continuing with the example of FIG. 38, after the driver has been prompted, the HOH module 3630 will determine whether the driver is capable of taking over. If so, the HOH module can provide the expected driver behavior to the EAO module 3635 and then can pass control of the vehicle to the driver. Furthermore, data can be obtained from the EAO module 3635 on how well the driver performed during the handoff and the expected driver behavior can be updated in response. The driver can continue to drive, e.g., until the driver is ready to relinquish control or a determination is made that the AV may safely resume control.

If the driver is not ready to take over when prompted, the HOH module 3630 can assess whether there are alternatives to a handoff. This can include, for example, taking an alternate route, slowing down, etc. If there are alternatives, then an alternative can be chosen. If there are no alternatives that will allow the vehicle to continue moving, then the HOH module can bring the vehicle to a stop. It should be noted that this could involve a change in the desired route to ensure that the vehicle can stop in a safe location and manner. If the vehicle comes to a stop, then the vehicle can remain at a stand-still until the driver is ready to take over. Then the driver can drive until he or she is ready for the autonomous vehicle to take over once again and it is safe to do so. In other embodiments it may also be possible for the vehicle to remain at a stop until there is an alternative that allows the vehicle to move again. This can include, for example, a change in the road conditions that caused the vehicle to stop, or even a new route that has opened.

The example below illustrates the operation of the HOH module 3630 by utilizing the example operational flow of FIG. 38 in combination with the example of the route of FIG. 37.

Before the journey:
1. The optimal route (3700) between A and B has been calculated and provided to the HOF Module.
2. HOF module 3625 uses the real time updates to identify the three hand off areas (3710, 3720, and 3730.)
3. The HOF module decides that location 3710 is where driver support is most likely to be needed (because there is little information on the accident in that spot.)
4. Location 3730 is chosen as the next most probable location where another hand off may be needed due to the ongoing road construction.
5. Location 3720 is identified as another potential hand off area where an increased pedestrian traffic on the road is observed. The autonomous vehicle can easily handle this section of the ride by taking an alternate route 3715 without requiring assistance from the driver.
6. The GOC database 3620 provides the generic information on drivers to HOH module 3630.
7. The POC database is empty (as the driver has just bought his car, which has limited personalized information based on him).
8. The OAM module 3610 confirms that the driver is sitting behind the wheel and his son is seated in the back.
9. The model of the vehicle that the driver is driving has fully rotatable driver seat to allow him to interact with the passengers in the back freely during the drive. As such, the driver turns his back to the road and starts to talk to his son.
10. The in-cabin cameras have full coverage of what is happening in the car so the OAM module 3610 is notified of this conversation activity as well as the driver's seating position in real-time. The OAM module 3610 also notices that the driver has slightly moved his seat closer to his son while talking and is leaning forward.

During the journey:
11. The autonomous vehicle starts to move forward towards the first hand off location 3710. Since this first hand off location is the most critical one and where the vehicle will require the driver's intervention, the HOH module 3630 starts to notify the driver early for an upcoming hand off.
12. The HOH module 3630 knows how long it is likely to take the driver to turn around and to place hands on the steering wheel.
13. The HOH module 3630 also knows from the GOC database 3620 that it generally takes longer for a senior driver to become fully aware than a younger driver. Therefore, as an example, if the driver is a 50 year-old male, it can take 15 to 20 seconds for the driver to become fully aware of the driving context as soon as he puts his hands on the wheel. Therefore, this additional time is also considered by the HOH module 3630 as the hand off in location 3710 nears.
14. The HOH module 3630 also provides the expected response times by the driver to the EAO module 3635 for it to assess how the hand off will be executed. The driver responds to the hand off request by the vehicle and he successfully guides the car through the accident on the road.
15. The driver hands off to the autonomous vehicle after leaving the accident location behind when he receives an incoming call on his smart phone.
16. The EAO module 3635 starts making the assessment of the hand off in location 3710. It appears that the driver has responded 10 seconds later than what was expected by the HOH module 3630. The timestamp on the OAM module 3610 indicates that when the driver was supposed to receive the control of the car, he was busy handing over a toy to his son at the time which caused this unexpected delay.
17. This anomaly is reported back to HOH module 3630 for future reference in order to leave additional time for planned hand offs.
18. The driver's performance during the handoff has also been reported back to the POC module 3615 for internal updates.
19. As the vehicle is approaching handoff 3720, the OAM module 3610 confirms that the driver is still on the phone and seems to be giving signals of elevated distress.
20. The HOH module 3630 knows that handoff location 3720 can be avoided by following the alternate route 3715. This route will add an extra 2 minutes to the journey but will allow the driver to continue his phone conversation without interruptions.
21. The HOH module 3630 decides not to request a handoff at location 3720 and the vehicle continues autonomously.
22. The HOH module 3630 is aware of the road construction in handoff location 3730 and while the handoff in this location is not as critical as location 3710, with a human intervention, the journey time may be a bit shorter.
23. The OAM module 3610 indicates that the driver is no longer talking on the phone and he is facing forward casually watching the traffic in front of the car.
24. The HOH module 3630 decides that the driver may be able to take over quite easily and notifies him of an optional hand over to save journey time.
25. Upon deciding that saving a few more minutes by taking over is a good idea, the driver agrees to take over and the handoff in location 3730 is executed successfully.
26. The POC module 3615 is updated by the EAO module 3635 after the handoff and, since no anomalies were detected, the HOH module 3630 receives no notifications this time.
27. For the rest of the journey, the driver decides not to handoff and drives to his destination in manual mode.

The example above is merely exemplary and more or less, and even different, actions may be taken. Similarly, the example method of FIG. 38 is also exemplary and more or less steps in that method may be taken.

It should also be noted that there may be situations where the autonomous vehicle has no option but to handoff to the human driver (in order to fulfill the journey's original objectives in terms of routes, ETA etc.) while the human driver is in no position to take over. In such scenarios, the autonomous vehicle may choose the following safer options: pull over and come to a safe stop until a time when the human driver is able to take over; pull towards the slow lane and reduce cruising speed according to the traffic and the road conditions at the cost of increased travel time; calculate alternative routes that will allow the vehicle to proceed without handing over (such routes may be longer and/or slower); or calculate alternative routes that will not allow the vehicle to proceed without a hand off all the way to the final destination, but will allow the vehicle to come to a safe stop until a time when the human driver is prepared to take over. These solutions are merely exemplary and there may be other solutions to a mandatory handoff of the vehicle.

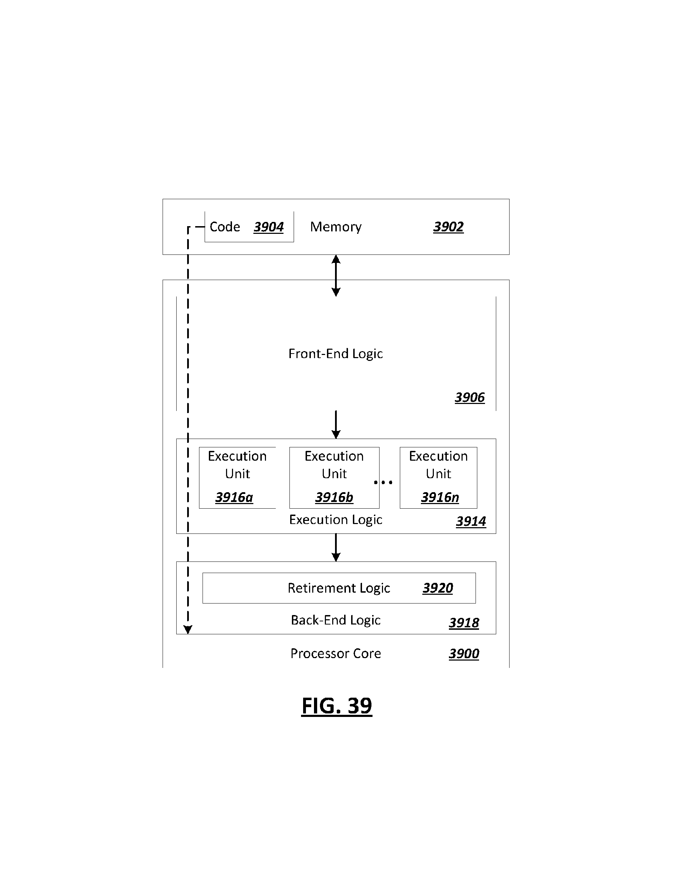

FIGS. 39-40 are block diagrams of exemplary computer architectures that may be used in accordance with embodiments disclosed herein. Other computer architecture designs known in the art for processors and computing systems may also be used. Generally, suitable computer architectures for embodiments disclosed herein can include, but are not limited to, configurations illustrated in FIGS. 39-40.

FIG. 39 is an example illustration of a processor according to an embodiment. Processor 3900 is an example of a type of hardware device that can be used in connection with the implementations above. Processor 3900 may be any type of processor, such as a microprocessor, an embedded processor, a digital signal processor (DSP), a network processor, a multi-core processor, a single core processor, or other device to execute code. Although only one processor 3900 is illustrated in FIG. 39, a processing element may alternatively include more than one of processor 3900 illustrated in FIG. 39. Processor 3900 may be a single-threaded core or, for at least one embodiment, the processor 3900 may be multi-threaded in that it may include more than one hardware thread context (or "logical processor") per core.

FIG. 39 also illustrates a memory 3902 coupled to processor 3900 in accordance with an embodiment. Memory 3902 may be any of a wide variety of memories (including various layers of memory hierarchy) as are known or otherwise available to those of skill in the art. Such memory elements can include, but are not limited to, random access memory (RAM), read only memory (ROM), logic blocks of a field programmable gate array (FPGA), erasable programmable read only memory (EPROM), and electrically erasable programmable ROM (EEPROM).

Processor 3900 can execute any type of instructions associated with algorithms, processes, or operations detailed herein. Generally, processor 3900 can transform an element or an article (e.g., data) from one state or thing to another state or thing.

Code 3904, which may be one or more instructions to be executed by processor 3900, may be stored in memory 3902, or may be stored in software, hardware, firmware, or any suitable combination thereof, or in any other internal or external component, device, element, or object where appropriate and based on particular needs. In one example, processor 3900 can follow a program sequence of instructions indicated by code 3904. Each instruction enters a front-end logic 3906 and is processed by one or more decoders 3908. The decoder may generate, as its output, a micro operation such as a fixed width micro operation in a predefined format, or may generate other instructions, microinstructions, or control signals that reflect the original code instruction. Front-end logic 3906 also includes register renaming logic 3910 and scheduling logic 3912, which generally allocate resources and queue the operation corresponding to the instruction for execution.

Processor 3900 can also include execution logic 3914 having a set of execution units 3916a, 3916b, 3916n, etc. Some embodiments may include a number of execution units dedicated to specific functions or sets of functions. Other embodiments may include only one execution unit or one execution unit that can perform a particular function. Execution logic 3914 performs the operations specified by code instructions.

After completion of execution of the operations specified by the code instructions, back-end logic 3918 can retire the instructions of code 3904. In one embodiment, processor 3900 allows out of order execution but requires in order retirement of instructions. Retirement logic 3920 may take a variety of known forms (e.g., re-order buffers or the like). In this manner, processor 3900 is transformed during execution of code 3904, at least in terms of the output generated by the decoder, hardware registers and tables utilized by register renaming logic 3910, and any registers (not shown) modified by execution logic 3914.

Although not shown in FIG. 39, a processing element may include other elements on a chip with processor 3900. For example, a processing element may include memory control logic along with processor 3900. The processing element may include I/O control logic and/or may include I/O control logic integrated with memory control logic. The processing element may also include one or more caches. In some embodiments, non-volatile memory (such as flash memory or fuses) may also be included on the chip with processor 3900.

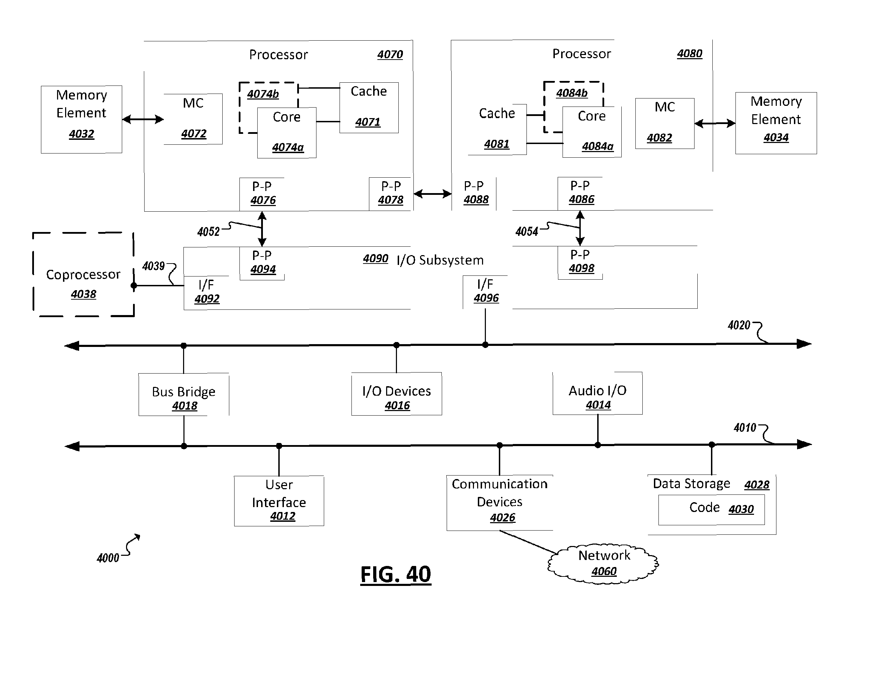

FIG. 40 illustrates a computing system 4000 that is arranged in a point-to-point (PtP) configuration according to an embodiment. In particular, FIG. 40 shows a system where processors, memory, and input/output devices are interconnected by a number of point-to-point interfaces. Generally, one or more of the computing systems described herein may be configured in the same or similar manner as computing system 3900.

Processors 4070 and 4080 may also each include integrated memory controller logic (MC) 4072 and 4082 to communicate with memory elements 4032 and 4034. In alternative embodiments, memory controller logic 4072 and 4082 may be discrete logic separate from processors 4070 and 4080. Memory elements 4032 and/or 4034 may store various data to be used by processors 4070 and 4080 in achieving operations and functionality outlined herein.

Processors 4070 and 4080 may be any type of processor, such as those discussed in connection with other figures herein. Processors 4070 and 4080 may exchange data via a point-to-point (PtP) interface 4050 using point-to-point interface circuits 4078 and 4088, respectively. Processors 4070 and 4080 may each exchange data with a chipset 4090 via individual point-to-point interfaces 4052 and 4054 using point-to-point interface circuits 4076, 4086, 4094, and 4098. Chipset 4090 may also exchange data with a co-processor 4038, such as a high-performance graphics circuit, machine learning accelerator, or other co-processor 4038, via an interface 4039, which could be a PtP interface circuit. In alternative embodiments, any or all of the PtP links illustrated in FIG. 40 could be implemented as a multi-drop bus rather than a PtP link.

Chipset 4090 may be in communication with a bus 4020 via an interface circuit 4096. Bus 4020 may have one or more devices that communicate over it, such as a bus bridge 4018 and I/O devices 4016. Via a bus 4010, bus bridge 4018 may be in communication with other devices such as a user interface 4012 (such as a keyboard, mouse, touchscreen, or other input devices), communication devices 4026 (such as modems, network interface devices, or other types of communication devices that may communicate through a computer network 4060), audio I/O devices 4014, and/or a data storage device 4028. Data storage device 4028 may store code 4030, which may be executed by processors 4070 and/or 4080. In alternative embodiments, any portions of the bus architectures could be implemented with one or more PtP links.

The computer system depicted in FIG. 40 is a schematic illustration of an embodiment of a computing system that may be utilized to implement various embodiments discussed herein. It will be appreciated that various components of the system depicted in FIG. 40 may be combined in a system-on-a-chip (SoC) architecture or in any other suitable configuration capable of achieving the functionality and features of examples and implementations provided herein.

While some of the systems and solutions described and illustrated herein have been described as containing or being associated with a plurality of elements, not all elements explicitly illustrated or described may be utilized in each alternative implementation of the present disclosure. Additionally, one or more of the elements described herein may be located external to a system, while in other instances, certain elements may be included within or as a portion of one or more of the other described elements, as well as other elements not described in the illustrated implementation. Further, certain elements may be combined with other components, as well as used for alternative or additional purposes in addition to those purposes described herein.

Further, it should be appreciated that the examples presented above are nonlimiting examples provided merely for purposes of illustrating certain principles and features and not necessarily limiting or constraining the potential embodiments of the concepts described herein. For instance, a variety of different embodiments can be realized utilizing various combinations of the features and components described herein, including combinations realized through the various implementations of components described herein. Other implementations, features, and details should be appreciated from the contents of this Specification.

Although this disclosure has been described in terms of certain implementations and generally associated methods, alterations and permutations of these implementations and methods will be apparent to those skilled in the art. For example, the actions described herein can be performed in a different order than as described and still achieve the desirable results. As one example, the processes depicted in the accompanying figures do not necessarily require the particular order shown, or sequential order, to achieve the desired results. In certain implementations, multitasking and parallel processing may be advantageous. Additionally, other user interface layouts and functionality can be supported. Other variations are within the scope of the following claims.

While this specification contains many specific implementation details, these should not be construed as limitations on the scope of the invention which is defined by the appended claims, but rather as descriptions of features specific to particular embodiments of particular inventions.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

One or more computing systems may be provided, including in-vehicle computing systems (e.g., used to implement at least a portion of an automated driving stack and enable automated driving functional of the vehicle), roadside computing systems (e.g., separate from vehicles; implemented in dedicated roadside cabinets, on traffic signs, on traffic signal or light posts, etc.), one or more computing systems implementing a cloud or fog based system supporting autonomous driving environments, or computing systems remote from an autonomous driving environments. These computing systems may include logic implemented using one or a combination of one or more data processing apparatus (e.g., central processing units, graphics processing units, tensor processing units, ASICs, FPGAs, etc.), accelerator hardware, other hardware circuitry, firmware, and/or software to perform or implement one or a combination of the following examples (or portions thereof). For example, in various embodiments, the operations of the example methods below may be performed using any suitable logic, such as a computing system of a vehicle (e.g., 105) or component thereof (e.g., processors 202, accelerators 204, communication modules 212, user displays 288, memory 206, IX fabric 208, drive controls 220, sensors 225, user interface 230, in-vehicle processing system 210, machine learning models 256, other component, or subcomponents of any of these), a roadside computing device 140, a fog- or cloud-based computing system 150, a drone 180, and access point 145, a sensor (e.g., 165), memory 3602, processor core 3600, system 3700, other suitable computing system or device, subcomponents of any of these, or other suitable logic. In various embodiments, one or more particular operations of an example method below may be performed by a particular component or system while one or more other operations of the example method may be performed by another component or system. In other embodiments, the operations of an example method may each be performed by the same component or system.

## Claims

1. A computer-implemented method comprising:
autonomously controlling driving of a vehicle according to a path plan based on sensor data generated from a set of sensors of a vehicle;
determining that autonomous control of the vehicle should cease;
sending a handoff request to a remote computing system for the remote computing system to control driving of the vehicle remotely;
receiving driving instruction data from the remote computing system; and
controlling driving of the vehicle based on instructions included in the driving instruction data;
wherein determining that autonomous control of the vehicle should cease comprises:
accessing a support system which received data associated with previous pull-over events, said data having been collected from affected vehicles and surrounding sensor devices and shared with the support system;
determining that conditions on an upcoming section of the path plan suggest a likelihood of a pull-over event based on the accessed data of the previous pull-over events,
wherein the vehicle is to pull-over and cease driving in association with the pull-over event,
wherein the handoff request is sent in response to the determined likelihood of the pull-over event.

2. The method of Claim 1, wherein the driving instruction data is generated from inputs of a human user at the remote computing system.

3. The method of any one of Claims 1-2, wherein determining that autonomous control of the vehicle should cease comprises predicting, using a particular machine learning model, that conditions on an upcoming section of the path plan presents difficulties to autonomous driving for the upcoming section.

4. The method of any one of Claims 1-3, further comprising determining that autonomous control of the vehicle should cease based on detection of one or more compromised sensors on the vehicle.

5. The method of any one of Claims 1-4, further comprising determining that no qualified passengers are present within the vehicle, wherein the handoff request is sent based at least in part on determining that no qualified passengers are present.

6. The method of any one of Claims 1-5, further comprising sending the sensor data to the remote computing system to present a dynamic representation of surroundings of the vehicle to a human user of the remote computing system.

7. The method of any one of Claims 1-6, further comprising presenting an alert to passengers of the vehicle to identify that control of the vehicle is handed over to the remote valet service.

8. The method of any one of Claims 1-7, further comprising:
detecting a change in conditions along the path plan; and
restoring control of the driving of the vehicle from the remote computing system to autonomous driving logic of the vehicle.

9. An apparatus comprising means for performing the method of any of claims 1-8.

## Patentansprüche

1. Computerimplementiertes Verfahren, umfassend:
autonomes Steuern eines Fahrens eines Fahrzeugs gemäß einem Pfadplan basierend auf Sensordaten, die von einem Satz von Sensoren eines Fahrzeugs erzeugt werden;
Bestimmen, dass die autonome Steuerung des Fahrzeugs beendet werden soll;
Senden einer Übergabeanforderung an ein entferntes Rechensystem, damit das entfernte Rechensystem ein Fahren des Fahrzeugs aus der Ferne steuert;
Empfangen von Fahranweisungsdaten von dem entfernten Rechensystem; und
Steuern eines Fahrens des Fahrzeugs basierend auf Anweisungen, die in den Fahranweisungsdaten enthalten sind;
wobei das Bestimmen, dass die autonome Steuerung des Fahrzeugs beendet werden soll, Folgendes umfasst:
Zugreifen auf ein Unterstützungssystem, das mit vorhergehenden Anhalteereignissen zusammenhängende Daten empfangen hat, wobei die Daten von betroffenen Fahrzeugen und Umgebungssensorvorrichtungen erfasst und mit dem Unterstützungssystem geteilt wurden;
Bestimmen, dass Bedingungen auf einem bevorstehenden Abschnitt des Pfadplans auf eine Wahrscheinlichkeit eines Anhalteereignisses basierend auf den Daten der vorhergehenden Anhalteereignisse, auf die zugegriffen wurde, hindeuten,
wobei das Fahrzeug in Zusammenhang mit dem Anhalteereignis anhalten und das Fahren beenden soll,
wobei die Übergabeanforderung als Reaktion auf die bestimmte Wahrscheinlichkeit des Anhalteereignisses gesendet wird.

2. Verfahren nach Anspruch 1, wobei die Fahranweisungsdaten aus Eingaben eines menschlichen Benutzers an dem entfernten Rechensystem erzeugt werden.

3. Verfahren nach einem der Ansprüche 1-2, wobei das Bestimmen, dass die autonome Steuerung des Fahrzeugs beendet werden soll, Vorhersagen, unter Verwendung eines speziellen maschinellen Lernmodells, dass Bedingungen auf einem bevorstehenden Abschnitt des Pfadplans Schwierigkeiten eines autonomen Fahrens für den bevorstehenden Abschnitt darstellen, umfasst.

4. Verfahren nach einem der Ansprüche 1-3, ferner umfassend Bestimmen, dass die autonome Steuerung des Fahrzeugs beendet werden soll, basierend auf einer Detektion eines oder mehrerer beeinträchtigter Sensoren an dem Fahrzeug.

5. Verfahren nach einem der Ansprüche 1-4, ferner umfassend Bestimmen, dass keine qualifizierten Passagiere innerhalb des Fahrzeugs anwesend sind, wobei die Übergabeanforderung zumindest teilweise basierend auf dem Bestimmen, dass keine qualifizierten Passagiere anwesend sind, gesendet wird.

6. Verfahren nach einem der Ansprüche 1-5, ferner umfassend Senden der Sensordaten an das entfernte Rechensystem, um eine dynamische Darstellung einer Umgebung des Fahrzeugs für einen menschlichen Benutzer des entfernten Rechensystems darzustellen.

7. Verfahren nach einem der Ansprüche 1-6, ferner umfassend Darstellen einer Warnung an Passagiere des Fahrzeugs, um erkennen zu geben, dass die Steuerung des Fahrzeugs an den entfernten Valet-Dienst übergeben wird.

8. Verfahren nach einem der Ansprüche 1-7, ferner umfassend:
Detektieren einer Änderung von Bedingungen entlang des Pfadplans; und
Zurückgeben der Steuerung des Fahrens des Fahrzeugs von dem entfernten Rechensystem an eine autonome Fahrlogik des Fahrzeugs.

9. Einrichtung, umfassend Mittel zum Durchführen des Verfahren nach einem der Ansprüche 1-8.

## Revendications

1. Procédé mis en œuvre par ordinateur, comprenant les étapes suivantes :
commander de manière autonome la conduite d'un véhicule selon un plan de trajectoire basé sur des données de capteurs générées à partir d'un ensemble de capteurs d'un véhicule ;
déterminer que la commande autonome du véhicule devrait cesser ;
envoyer une demande de transfert à un système informatique distant pour commander à distance la conduite du véhicule par le système informatique distant ;
recevoir des données d'instruction de conduite du système informatique distant ; et
commander la conduite du véhicule sur la base des instructions incluses dans les données d'instruction de conduite ;
où la détermination qu'il convient de cesser la commande autonome du véhicule comprend :
l'accès à un système de support ayant reçu des données associées à des événements d'arrêt sur le bas-côté précédents, lesdites données ayant été collectées auprès de véhicules affectés et de dispositifs de détection environnants, puis partagées avec le système de support ;
la détermination que des conditions sur une section à venir du plan de trajet suggèrent une probabilité d'un événement d'arrêt sur le bas-côté sur la base des données accédées des événements d'arrêt sur le bas-côté précédents,
le véhicule devant alors s'arrêter sur le bas-côté et cesser sa conduite en lien avec l'événement d'arrêt sur le bas-côté,
la demande de transfert étant envoyée en réponse à la probabilité déterminée de l'événement d'arrêt sur le bas-côté.

2. Procédé selon la revendication 1, dans lequel les données d'instruction de conduite sont générées à partir d'entrées d'un utilisateur humain au niveau du système informatique distant.

3. Procédé selon l'une quelconque des revendications 1 et 2, dans lequel la détermination que la commande autonome du véhicule devrait cesser comprend la prédiction, à l'aide d'un modèle d'apprentissage automatique particulier, que les conditions sur une section à venir du plan de trajet présentent des difficultés à conduire de manière autonome pour la section à venir.

4. Procédé selon l'une quelconque des revendications 1 à 3, comprenant en outre de déterminer que la commande autonome du véhicule devrait cesser sur la base de la détection qu'un ou plusieurs capteurs du véhicule sont compromis.

5. Procédé selon l'une quelconque des revendications 1 à 4, comprenant en outre de déterminer qu'aucun passager qualifié n'est présent dans le véhicule, où la demande de transfert est envoyée sur la base, au moins en partie, de la détermination qu'aucun passager qualifié n'est présent.

6. Procédé selon l'une quelconque des revendications 1 à 5, comprenant en outre l'envoi des données de capteur au système informatique distant pour présenter une représentation dynamique de l'environnement du véhicule à un utilisateur humain du système informatique distant.

7. Procédé selon l'une quelconque des revendications 1 à 6, comprenant en outre la présentation d'une alerte aux passagers du véhicule pour identifier que la commande du véhicule est transférée au service de voiturier à distance.

8. Procédé selon l'une quelconque des revendications 1 à 7, comprenant en outre les étapes suivantes :
détecter un changement de conditions le long du plan de trajet ; et
restaurer la commande de la conduite du véhicule depuis le système informatique distant vers une logique de conduite autonome du véhicule.

9. Appareil comprenant des moyens destinés à mettre en œuvre le procédé selon l'une quelconque des revendications 1 à 8.
